# EUROPEAN PATENT SPECIFICATION

(11) **EP 0 780 340 B1**
(45) Date of publication and mention of the grant of the patent: **20.03.2002**
(21) Application number: 96305675.9
(22) Date of filing: 01.08.1996
(51) Int. Cl.: C01B 33/44

(54) **Intercalates and exfoliates formed with functional monomeric organic compounds; composite materials containing same and methods of modifying rheology therewith**
Einlagerungs- und Blähprodukte, hergestellt mit funktionellen monomerischen organischen Verbindungen; solche enthaltende Kompositmaterialien und Methoden zum rheologischen Modifizieren mittels dieser Materialien
Produits d'insertion et d'exfoliation formés avec des composés organiques monomères fonctionnels; matériaux composites les contenant et méthodes pour modifier la rhéologie au moyen de ces matériaux

(30) Priority: 22.12.1995 US 577557; 22.12.1995 US 577558; 22.12.1995 US 577700; 29.05.1996 US 654648
(43) Date of publication of application: 25.06.1997
(73) Proprietor: AMCOL INTERNATIONAL CORPORATION, Arlington Heights, Illinois 60004 (US)
(72) Inventor: Beall, Gary W., McHenry, Illinois 60050 (US); Tsipursky, Semeon, Lincolnwood, Illinois 60646 (US); Sorokin, Anatoliy, Wheeling, Illinois 60090 (US); Goldman, Antoliy, Palatine, Illinois 60067 (US)
(74) Representative: W.P. Thompson & Co.

(56) References cited:
- EP-A- 0 205 281
- WO-A-93/04118
- CHEMICAL ABSTRACTS, vol. 118, no. 26, 28 June 1993 Columbus, Ohio, US; abstract no. 257609b, BUJDAK, JURAJ ET AL: page 166; XP000402314 & APPL. CLAY SCI., vol. 7, no. 4, 1992, pages 263-269,
- CLAY SCIENCE, vol. 7, 1 January 1989, pages 243-251, XP002014011 OGAWA M ET AL: "PREPARATION OF MONTMORILLONITE-POLYACRYLAMIDE INTERCALATION COMPOUNDS AND THE WATER ABSORBING PROPERTY"

## Description

### FIELD OF THE INVENTION

The present invention is directed to intercalated layered materials, and exfoliates thereof, manufactured by sorption (adsorption and/or absorption) of one or more functional monomeric organic compounds between planar layers of a swellable layered material, such as a phyllosilicate or other layered material, to expand the interlayer spacing of adjacent layers to at least about 5 Angstroms (Å), preferably at least about 10 Å. More particularly, the present invention is directed to intercalates having at least two layers of monomeric organic compounds sorbed on the internal surfaces between adjacent layers of the planar platelets of a layered material, such as a phyllosilicate, preferably a smectite clay, to expand the interlayer spacing to at least about 5 Å, preferably at least about 10 Å, more preferably to at least about 20 Å, and most preferably to at least about 30-45 Å, up to about 100 Å, or disappearance of periodicity. The intercalated layered materials preferably have at least two layers of functional monomeric organic compounds sorbed on the internal surfaces between adjacent layers of the planar platelets of the layered material, such as a phyllosilicate, preferably a smectite clay. The resulting intercalates are neither entirely organophilic nor entirely hydrophilic, but a combination of the two, and easily can be exfoliated and combined as individual platelets with a polymer to form a composite material, or combined with a polar organic solvent carrier to form a viscous composition having a myriad of uses. The resulting polar organic solvent carrier/intercalate or carrier/exfolate; or polymer/intercalate or polymer/exfoliated platelet composite materials are useful as plasticizers; for providing increased viscosity and elasticity to thermoplastic and thermosetting polymers, e.g., for plasticizing polyvinyl chloride; for food wrap having improved gas impermeability; for electrical components; for food grade drink containers; particularly for raising the viscosity of polar organic liquids; and for altering one or more physical properties of a matrix polymer, such as elasticity and temperature characteristics, e.g., glass transition temperature and high temperature resistance.

### BACKGROUND OF THE INVENTION AND PRIOR ART

It is well known that phyllosilicates, such as smectite clays, *e.g.*, sodium montmorillonite and calcium montmorillonite, can be treated with organic molecules, such as organic ammonium ions, to intercalate the organic molecules between adjacent, planar silicate layers, for bonding the organic molecules with a polymer, for intercalation of the polymer between the layers, thereby substantially increasing the interlayer (interlaminar) spacing between the adjacent silicate layers. The thus-treated, intercalated phyllosilicates, having interlayer spacings of at least about 10-20 Å and up to about 100 Angstroms, then can be exfoliated, e.g., the silicate layers are separated, e.g., mechanically, by high shear mixing. The individual silicate layers, when admixed with a matrix polymer, before, after or during the polymerization of the matrix polymer, e.g., a polyamide - see 4,739,007; 4,810,734; and 5,385,776 - have been found to substantially improve one or more properties of the polymer, such as mechanical strength and/or high temperature characteristics.

Exemplary prior art composites, also called "nanocomposites", are disclosed in published PCT disclosure of Allied Signal, Inc. WO 93/04118 and U.S. Patent No. 5,385,776, disclosing the admixture of individual platelet particles derived from intercalated layered silicate materials, with a polymer to form a polymer matrix having one or more properties of the matrix polymer improved by the addition of the exfoliated intercalate. As disclosed in WO 93/04118, the intercalate is formed (the interlayer spacing between adjacent silicate platelets is increased) by adsorption of a silane coupling agent or an onium cation, such as a quaternary ammonium compound, having a reactive group which is compatible with the matrix polymer. Such quaternary ammonium cations are well known to convert a highly hydrophilic clay, such as sodium or calcium montmorillonite, into an organophilic clay capable of sorbing organic molecules. A publication that discloses direct intercalation (without solvent) of polystyrene and poly(ethylene oxide) in organically modified silicates is *Synthesis and Properties of Two-Dimensional Nanostructures by Direct Intercalation of Polymer Melts* in *Layered Silicates,* Richard A. Vaia, *et al*., *Chem*. *Mater., 5*:1694-1696(1993). Also as disclosed in *Adv. Materials, 7, No. 2:* (1985), pp, 154-156, *New Polymer Electrolyte Nanocomposites: Melt Intercalation of Poly(Ethylene Oxide) in Mica-Type Silicates,* Richard A. Vaia, *et al.,* poly(ethylene oxide) can be intercalated directly into Na-montmorillonite and Li-montmorillonite by heating to 80°C for 2-6 hours to achieve a d-spacing of 17.7 Å. The intercalation is accompanied by displacing water molecules, disposed between the clay platelets, with polymer molecules. Apparently, however, the intercalated material could not be exfoliated and was tested in pellet form. It was quite surprising to one of the authors of these articles that exfoliated material could be manufactured in accordance with the present invention.

Ogawa et al Preparation of Montmorillonite - Polyacrylamide inercalation compounds and the water absorbing property, Clay Science 7 (1989), pages 243-251, describes the formation of montmorillonite - polyacrylamide intercalation compounds from sodium montmorillonite and acrylamide aqueous solutions, giving rise to compounds which are stated to absorb more water than raw sodium montmorillonite.

EP 205281 discloses a gel which consists essentially of a hydrated or hydratable natural or synthetic phyllosilicate combined with a lattice expanding agent selected from a group including aminocarboxy acid, lysine orotate and glycylglycine.

Previous attempts have been made to intercalate polyvinylpyrrolidone (PVP), polyvinyl alcohol (PVA) and poly(ethylene oxide) (PEO) between montmorillonite clay platelets with little success. As described in Levy, et al., *Interlayer Adsorption of Polyvinylpyrrolidone on Montmorillonite,* Journal of Colloid and Interface Science, Vol. 50, No. 3, March 1975, pages 442-450, attempts were made to sorb PVP (40,000 average M.W.) between monoionic montmorillonite clay platelets (Na, K, Ca and Mg) by successive washes with absolute ethanol, and then attempting to sorb the PVP by contact with 1% PVP/ethanol/water solutions, with varying amounts of water, via replacing the ethanol solvent molecules that were sorbed in washing (to expand the platelets to about 17.7 Å). Only the sodium montmorillonite had expanded beyond a 20 Å basal spacing (e.g., 26 Å and 32 Å), at 5⁺% H₂O, after contact with the PVP/ethanol/H₂O solution. It was concluded that the ethanol was needed to initially increase the basal spacing for later sorption of PVP, and that water did not directly affect the sorption of PVP between the clay platelets (Table II, page 445), except for sodium montmorillonite. The sorption was time consuming and difficult and met with little success.

Further, as described in Greenland, *Adsorption of Polyvinyl Alcohols by Montmorillonite,* Journal of Colloid Sciences, Vol. 18, pages 647-664 (1963), polyvinyl alcohols containing 12% residual acetyl groups could increase the basal spacing by only about 10 Å due to the sorbed polyvinyl alcohol (PVA). As the concentration of polymer in the intercalant polymer-containing solution was increased from 0.25% to 4%, the amount of polymer sorbed was substantially reduced, indicating that sorption might only be effective at polymer concentrations in the intercalant polymer-containing composition on the order of 1% by weight polymer, or less. Such a dilute process for intercalation of polymer into layered materials would be exceptionally costly in drying the intercalated layered materials for separation of intercalate from the polymer carrier, e.g., water, and, therefore, apparently no further work was accomplished toward commercialization.

In accordance with one embodiment of the present invention, intercalates are prepared by contacting a phyllosilicate with a monomeric organic compound having an electrostatic functionality selected from the group consisting of a hydroxyl; a polyhydroxyl; an aromatic functionality; and mixtures thereof.

In accordance with another embodiment of the present invention, intercalates are prepared by contacting a phyllosilicate with a monomeric organic compound having an electrostatic carbonyl functionality selected from the group consisting of carboxylic acids, and salts thereof; polycarboxylic acids and salts thereof; aldehydes; ketones; and mixtures thereof.

In accordance with another embodiment of the present invention, intercalates are prepared by contacting a phyllosilicate with a monomeric organic compound having an electrostatic functionality selected from the group consisting of amines; amides; and mixtures thereof.

In accordance with another embodiment of the present invention, intercalates are prepared by contacting a phyllosilicate with a monomeric organic compound having an electrostatic functionality selected from the group consisting of ethers; esters; and mixtures thereof.

In accordance with an important feature of the present invention, best results are achieved by mixing the layered material with a monomeric organic compound, having at least one of the above-defined electrostatic functionalities, in a concentration of at least about 2%, preferably at least about 5% by weight functional monomeric organic compound, more preferably at least about 10% by weight monomeric organic compound, and most preferably about 30% to about 80% by weight, based on the weight of functional monomeric organic compound and carrier (e.g., water, with or without an organic solvent for the functional monomeric compound) to achieve better sorption of the functional monomeric organic compound between the platelets of the layered material. Regardless of the concentration of functional monomeric organic compound in aqueous liquid, the intercalating composition should have a functional monomeric organic compound:layered material ratio of at least 1:20, preferably at least 1:10, more preferably at least 1:5, and most preferably about 1:4 to achieve electrostatic complexing of the electrostatic functional monomeric organic compound with an inner surface of a platelet of the layered material to achieve efficient intercalation of the functional monomeric organic compound between adjacent platelets of the layered material. The functional monomeric organic compound sorbed between and bonded to (complexed with) the silicate platelets causes separation or added spacing between adjacent silicate platelets.

For simplicity of description, the above-described functional monomeric organic compounds are hereinafter called the "intercalant" or "intercalant monomer" or "monomer intercalant". The monomer intercalant will be sorbed sufficiently to increase the interlayer spacing of the phyllosilicate in the range of about 5 Å to about 100 Å, preferably at least about 10 Å for easier and more complete exfoliation, in a commercially viable process, regardless of the particular layered material, e.g., phyllosilicate, or intercalant monomer.

In accordance with the present invention, it has been found that a phyllosilicate, such as a smectite clay, can be intercalated sufficiently for subsequent exfoliation by sorption of organic monomer compounds that have one or more of the above-described electrostatic functionalities to provide bonding between two functional electrostatic groups of one or two intercalant monomer molecules and the metal cations of the inner surfaces of the platelets of the layered material, e.g., phyllosilicate. Sorption and metal cation attraction or bonding between two functional groups of the intercalant monomer molecules and the interlayer cations of the phyllosilicate; or the bonding between the interlayer cations in hexagonal or pseudohexagonal rings of the smectite platelet layers and an intercalant monomer aromatic ring structure, is provided by a mechanism selected from the group consisting of ionic complexing; electrostatic complexing; chelation; hydrogen bonding; dipole/dipole; Van Der Waals forces; and any combination thereof.

Such bonding, via one or more metal cations of the phyllosilicate sharing electrons with one or two electronegative atoms of one or two intercalant monomer molecules, on an inner surface of one or both adjacent phyllosilicate platelets provides adherence between the functional monomeric organic molecules and the platelet inner surfaces of the layered material, and increases the interlayer spacing between adjacent silicate platelets or other layered material to at least about 5 Å, preferably to at least about 10 Å, more preferably to at least about 20 Å, and most preferably in the range of about 30 Å to about 45 Å. The electronegative atoms can be, for example, oxygen, sulfur, nitrogen, and combinations thereof.

Such intercalated phyllosilicates easily can be exfoliated into individual phyllosilicate platelets before or during admixture with a liquid carrier or solvent, for example, one or more monohydric alcohols, such as methanol, ethanol, propanol, and/or butanol; polyhydric alcohols, such as glycerols and glycols, e.g., ethylene glycol, propylene glycol, butylene glycol, glycerine and mixtures thereof; aldehydes; ketones; carboxylic acids; amines; amides; and other organic solvents, for delivery of the solvent in a thixotropic composition, or for delivery of any active hydrophobic or hydrophilic organic compound, such as a topically active pharmaceutical, dissolved or dispersed in the carrier or solvent, in a thixotropic composition; or the intercalates and/or exfoliates thereof can be admixed with a polymer or other organic monomer compound(s) or composition to increase the viscosity of the organic compound or provide a polymer/intercalate and/or polymer/exfoliate composition to enhance one or more properties of a matrix polymer.

### DEFINITIONS

Whenever used in this Specification, the terms set forth shall have the following meanings:

"Layered Material" shall mean an inorganic material, such as a smectite clay mineral, that is in the form of a plurality of adjacent, bound layers and has a thickness, for each layer, of about 3 Å to about 50 Å, preferably about 10 Å.

"Platelets" shall mean individual layers of the Layered Material.

"Intercalate" or "Intercalated" shall mean a Layered Material that includes functional organic monomer molecules disposed between adjacent platelets of the Layered Material to increase the interlayer spacing between the adjacent platelets to at least about 5 Å, preferably at least about 10 Å.

"Intercalation" shall mean a process for forming an Intercalate.

"Intercalant Monomer" or "Intercalant" or "Monomer Intercalant" shall mean a monomeric organic compound that includes a functionality selected from the group consisting of a hydroxyl; a polyhydroxyl; a carbonyl; a carboxylic acid; an amine; an amide; an ether; an ester; an aromatic ring; and mixtures thereof that is sorbed between Platelets of the Layered Material and complexes with the platelet surfaces to form an Intercalate.

"Intercalating Carrier" shall mean a carrier comprising water with or without an organic solvent used together with an Intercalant Monomer to form an Intercalating Composition capable of achieving Intercalation of the Layered Material.

"Intercalating Composition" or "Intercalant Composition" shall mean a composition comprising an Intercalant Monomer, an Intercalating Carrier for the Intercalant Monomer, and a Layered Material.

"Exfoliate" or "Exfoliated" shall mean individual platelets of an Intercalated Layered Material so that adjacent platelets of the Intercalated Layered Material can be dispersed individually throughout a carrier material, such as water, a polymer, an alcohol or glycol, or any other organic solvent.

"Exfoliation" shall mean a process for forming an Exfoliate from an Intercalate.

"Nanocomposite" shall mean a mixture that includes a monomer, polymer, oligomer, or copolymer having dispersed therein a plurality of individual platelets obtained from an exfoliated Intercalated Layered Material.

"Matrix Monomer" shall mean a monomer that the Intercalate or Exfoliate is mixed with or dispersed.

"Matrix Polymer" shall mean a thermoplastic or thermosetting polymer in which the Intercalate and/or Exfoliate is mixed or dispersed to form a Nanocomposite.

### SUMMARY OF THE INVENTION

In brief, the present invention is directed to intercalates and exfoliates thereof formed by contacting a layered phyllosilicate with a functional organic monomer (intercalant monomer), having at least one hydroxyl functionality; a carbonyl functionality; a carboxylic acid functionality; an amine functionality; an amide functionality; an ether functionality; an ester functionality and/or an aromatic ring functionality, to sorb or intercalate the intercalant monomer or mixtures of intercalant monomers between adjacent platelets of a layered material, e.g., a phyllosilicate. Sufficient intercalant monomer is sorbed between adjacent phyllosilicate platelets to expand the spacing between adjacent platelets (interlayer spacing) to a distance of at least about 5 Å, preferably to at least about 10 Å (as measured after water removal to a maximum water content of 5% by weight, based on the dry weight of the layered material) and more preferably in the range of about 30-45 Å, so that the intercalate easily can be exfoliated, sometimes naturally without shearing being necessary. At times, the intercalate requires shearing that easily can be accomplished, e.g., when mixing the intercalate with a polar organic solvent carrier, such as a polar organic hydrocarbon, and/or with a polymer melt to provide a platelet-containing composite material or nanocomposite - the platelets being obtained by exfoliation of the intercalated layered-material, e.g., phyllosilicate.

The intercalant monomer has an affinity for the phyllosilicate so that it is sorbed between, and is maintained associated with the silicate platelets in the interlayer spaces, and after exfoliation. In accordance with the present invention, the intercalant monomer should include an aromatic ring and/or have a hydroxyl, polyhydroxyl, carbonyl; carboxylic acid; amine; amide; ether; or ester functionality or combination thereof to be sufficiently bound, it is hereby theorized, by a mechanism selected from the group consisting of ionic complexing; electrostatic complexing; chelation; hydrogen bonding; dipole/dipole; Van Der Waals forces; and any combination thereof. Such bonding, via a metal cation of the phyllosilicate sharing electrons with electronegative atoms of one or two functional groups or aromatic ring structures of the monomeric organic compound, to an inner surface of the phyllosilicate platelets provides adherence between the intercalant monomer molecules and the platelet inner surfaces of the layered material. The electronegative atoms can be, for example, oxygen, sulfur, nitrogen, and combinations thereof. Atoms having a sufficient electronegativity to bond to metal cations on the inner surface of the platelets have an electronegativity of at least 2.0, and preferably at least 2.5, on the Pauling Scale. A "polar moiety" or "polar group" is defined as a moiety having two adjacent atoms that are bonded covalently and have a difference in electronegativity of at least 0.5 electronegativity units on the Pauling Scale.

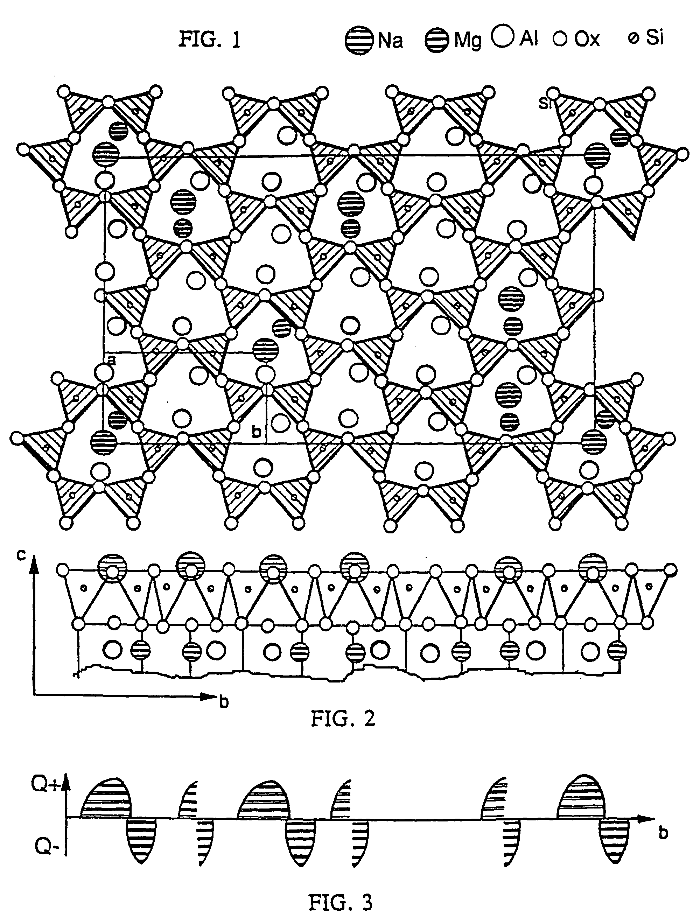

Such intercalant monomers have sufficient affinity for the phyllosilicate platelets to maintain sufficient interlayer spacing for exfoliation, without the need for coupling agents or spacing agents, such as the onium ion or silane coupling agents disclosed in the above-mentioned prior art. A schematic representation of the charge distribution on the surfaces of a sodium montmorillonite clay is shown in Figures 1-3. As shown in Figures 2 and 3, the location of surface Na⁺ cations with respect to the location of O, Mg, Si and Al atoms (Figures 1 and 2) results in a clay surface charge distribution as schematically shown in Figure 3. The positive-negative charge distribution over the entire clay surface provides for excellent dipole/dipole attraction of the above-described polar functionalities of the functional organic monomers on the surfaces of the clay platelets.

The intercalate-containing and/or exfoliate-containing compositions can be in the form of a stable thixotropic gel that is not subject to phase separation and can be used to deliver any active materials, such as in the cosmetic, hair care and pharmaceutical industries. The layered material is intercalated and optionally exfoliated by contact with an intercalant monomer and water, such as by mixing and/or extruding the intercalant composition to intercalate the monomer between adjacent phyllosilicate platelets and optionally separate (exfoliate) the layered material into individual platelets. The amount of water varies, depending upon the amount of shear imparted to the layered material in contact with the intercalant monomer and water. In one method, the intercalating composition is pug milled or extruded at a water content of about 25% by weight to about 50% by weight water, preferably about 35% to about 40% by weight water, based on the dry weight of the layered material, e.g., clay. In another method, the clay and water are slurried, with at least about 25% by weight water, preferably at least about 65% by weight water, based on the dry weight of the layered material, e.g., preferably less than about 20% by weight clay in water, based on the total weight of layered material and water, more preferably less than about 10% layered material in water, with the addition of about 2% by weight to about 90% by weight intercalant monomer, based on the dry weight of the layered material.

Sorption of the intercalant monomer should be sufficient to achieve expansion of adjacent platelets of the layered material (when measured dry) to an interlayer spacing of at least about 5 Å, preferably to a spacing of at least about 10 Å, more preferably a spacing of at least about 20 Å, and most preferably a spacing of about 30-45 Å. To achieve intercalates that can be exfoliated easily using the monomer intercalants disclosed herein, the weight ratio of intercalant monomer to layered material, preferably a water-swellable smectite clay such as sodium bentonite, in the intercalating composition should be at least about 1:20, preferably at least-about 1:12 to 1:10, more preferably at least about 1:5, and most preferably about 1:5 to about 1:3. It is preferred that the concentration of intercalant monomer in the intercalating composition, based on the total weight of intercalant monomer plus intercalant carrier (water plus any organic liquid solvent) in the intercalating composition is at least about 15% by weight, more preferably at least about 20% by weight intercalant monomer, for example about 20-30% to about 90% by weight intercalant monomer, based on the weight of intercalant monomer plus intercalating carrier in the intercalating composition during intercalation of the layered material.

Interlayer spacings sufficient for exfoliation have never been achieved by direct intercalation of the above-defined functional intercalant monomers, without prior sorption of an onium or silane coupling agent, and provides easier and more complete exfoliation for or during incorporation of the platelets into a polar organic compound or a polar organic compound-containing composition carrier or solvent to provide unexpectedly viscous carrier compositions, for delivery of the carrier or solvent, or for administration of an active compound that is dissolved or dispersed in the carrier or solvent. Such compositions, especially the high viscosity gels, are particularly useful for delivery of active compounds, such as oxidizing agents for hair waving lotions, and drugs for topical administration, since extremely high viscosities are obtainable; and for admixtures of the platelets with polar solvents in modifying rheology, e.g., of cosmetics, oil-well drilling fluids, paints, lubricants, especially food grade lubricants, in the manufacture of oil and grease, and the like. Such intercalates and/or exfoliates also are especially useful in admixture with matrix thermoplastic or thermosetting polymers in the manufacture of polymeric articles from the polar organic carrier/polymer/intercalate and/or platelet composite materials.

Once exfoliated, the platelets of the intercalate are predominantly completely separated into individual platelets and the originally adjacent platelets no longer are retained in a parallel, spaced disposition, but are free to move as predominantly individual intercalant monomer-coated (continuously or discontinuously) platelets throughout a polymer melt for enhancing one or more properties, such as strength or temperature resistance; or for mixing with a carrier or solvent material to maintain viscosity and thixotropy of the carrier material. The predominantly individual phyllosilicate platelets, having their platelet surfaces complexed with intercalant monomer molecules, are randomly, homogeneously and uniformly dispersed, predominantly as individual platelets, throughout the carrier or solvent to achieve new and unexpected viscosities in the carrier/platelet compositions even after addition of an active organic compound, such as a cosmetic component or a medicament, for administration of the active organic compound(s) from the composition.

As recognized, the thickness of the exfoliated, individual platelets (about 10 Å) is relatively small compared to the size of the flat opposite platelet faces. The platelets have an aspect ratio in the range of about 200 to about 2,000. Dispersing such finely divided platelet particles into a polymer melt or into a polar organic liquid carrier imparts a very large area of contact between polymer melt or carrier and platelet particles, for a given volume of particles in the composite, and a high degree of platelet homogeneity in the composite material. Platelet particles of high strength and modulus, dispersed at sub-micron size (nanoscale), impart greater mechanical reinforcement to a polymer and a higher viscosity to a polar organic liquid carrier than do comparable loadings of conventional reinforcing fillers of micron size, and can impart lower permeability to matrix polymers than do comparable loadings of conventional fillers.

### BRIEF DESCRIPTION OF THE DRAWINGS

Figure 1 is a schematic representation of a top view of sodium montmorillonite clay showing the ionic charge distribution for the sodium montmorillonite clay top and interlayer surfaces showing Na⁺ ions as the largest circles as well as magnesium and aluminum ions and Si and O atoms disposed beneath the sodium ions;
Figure 2 is a side view (bc-projection) of the schematic representation of Figure 1;
Figure 3 is a schematic representation of the charge distribution on the surfaces of sodium montmorillonite clay platelets showing the distribution of positive and negative charges on the clay platelet surfaces as a result of the natural disposition of the Na, Mg, Al, Si, and O atoms of the clay shown in Figures 1 and 2;
Figure 4 is an x-ray diffraction pattern for a mixture of ethylene glycol and sodium montmorillonite;
Figure 5 is an x-ray diffraction pattern for a mixture of butylene glycol and sodium montmorillonite;
Figure 6 is an x-ray diffraction pattern of the mixture shown in Figure 4, after exfoliation;
Figure 7 is an x-ray diffraction pattern of the mixture shown in Figure 5, after exfoliation;
Figure 8 is an x-ray diffraction pattern for a complex of a mixture of acrylic acid (AAc), sodium acrylate (NaAAc) and sodium montmorillonite at a weight ratio of clay to (AAc + NaAAc) of 1.9;

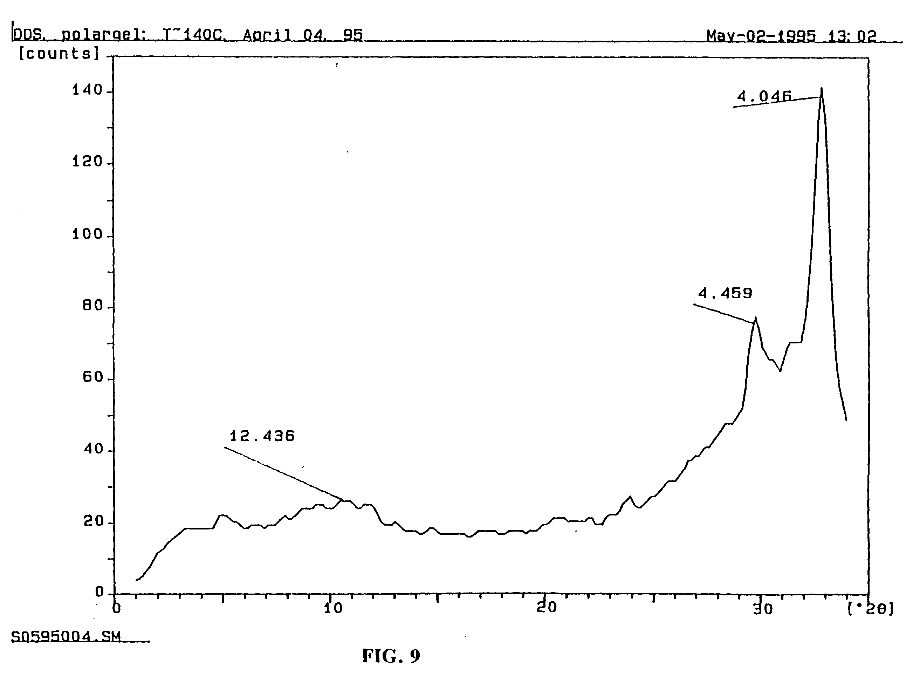

Figure 9 is an x-ray diffraction pattern for a complex of dioctylstearate ester (DOS):sodium montmorillonite clay in Angstroms, at a weight ratio of DOS:clay of 55:45, at a temperature of 140°C;

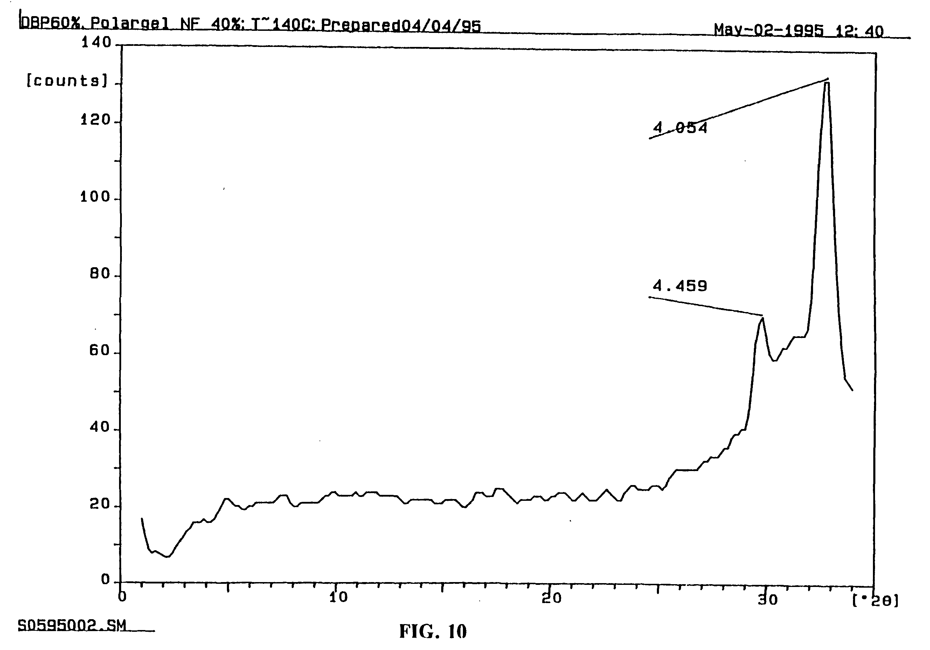

Figure 10 is an x-ray diffraction pattern for a complex of dibutylphthalate (DBP):sodium montmorillonite clay, in Angstroms, at a weight ratio of DBP:clay of 60:40, at a temperature of 140°C;

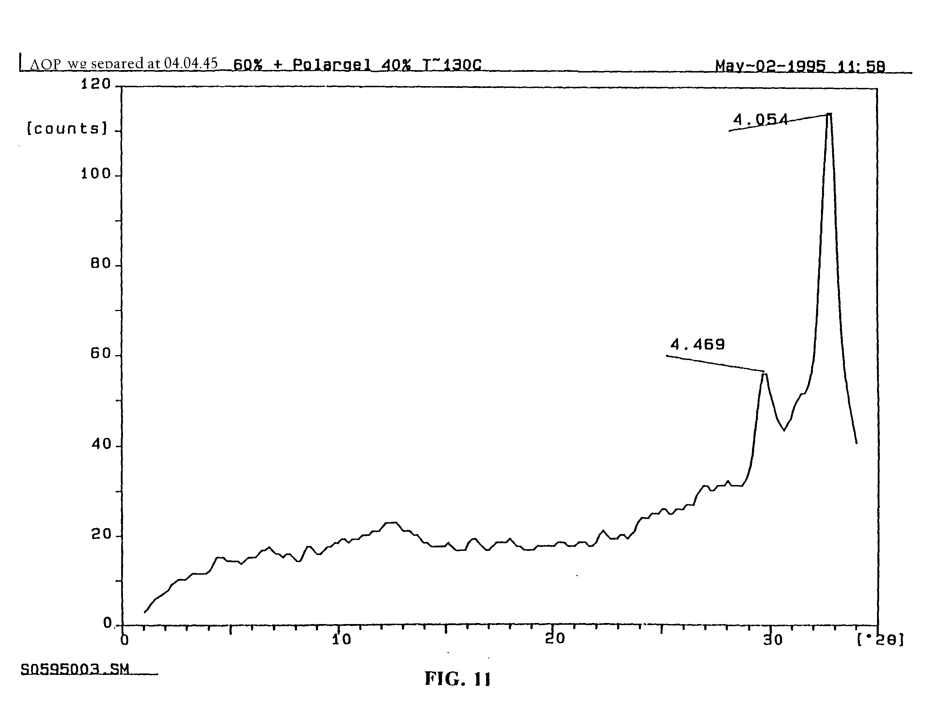

Figure 11 is an x-ray diffraction pattern for a complex of dioctylphthalate (DOP):sodium montmorillionite clay, in Angstroms, at a weight ratio of DOP:sodium montmorillonite clay of 60:40, at a temperature of 130°C;

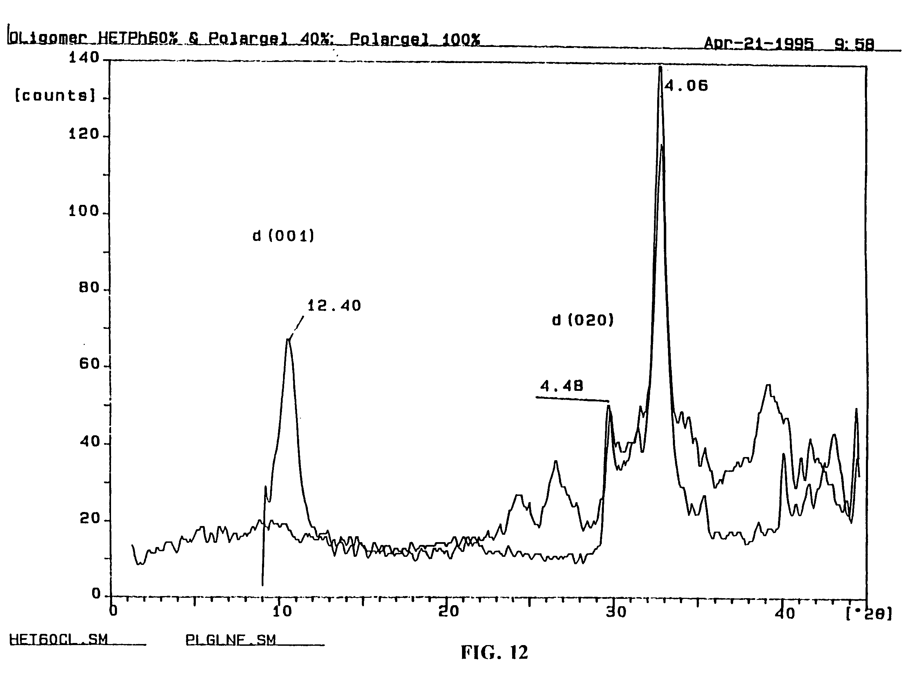

Figure 12 is an x-ray diffraction pattern for a complex of hydroxyethylterephthalate (HETPh):sodium montmorillonite clay, in Angstroms, at a weight ratio of HETPh:clay of 60:40; compared to 100% sodium montmorillonite which shows a d(001) peak at 12.40 Å; and

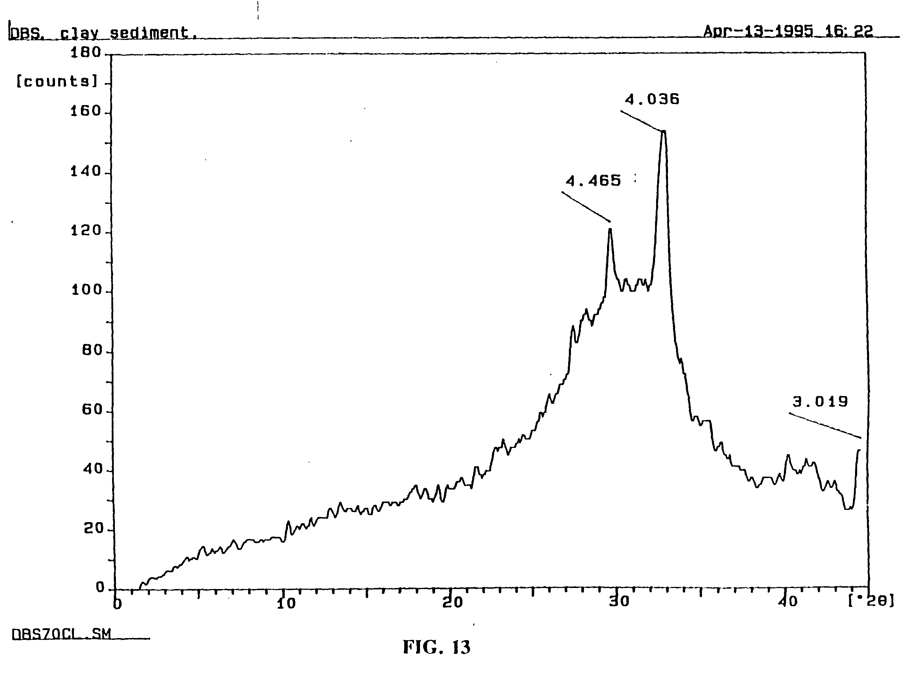

Figure 13 is an x-ray diffraction pattern for a complex of dibutylstearate ester (DBS):sodium montmorillonite clay in Angstroms, at a weight ratio of DBS:clay of 70:30.

### DETAILED DESCRIPTION OF THE PREFERRED EMBODIMENTS

To form the intercalated and exfoliated materials of the present invention, the layered material, e.g., the phyllosilicate, should be swelled or intercalated by sorption of an intercalant monomer that includes a functionality selected from the group consisting of a hydroxyl; a polyhydroxyl; a carbonyl; a carboxylic acid; an amine; an amide; an ether; an ester; an aromatic ring; and combinations thereof. In accordance with a preferred embodiment of the present invention, the phyllosilicate should include at least 4% by weight water, up to about 5,000% by weight water, based on the dry weight of the phyllosilicate, preferably about 7% to about 100% water, more preferably about 25% to about 50% by weight water, prior to or during contact with the intercalant monomer to achieve sufficient intercalation for exfoliation. Preferably, the phyllosilicate should include at least about 4% by weight water before contact with the intercalating carrier for efficient intercalation. The amount of intercalant monomer in contact with the phyllosilicate from the intercalating composition, for efficient exfoliation, should provide an intercalant monomer/phyllosilicate weight ratio (based on the dry weight of the phyllosilicate) of at least about 1:20, preferably at least about 3.2/20, and more preferably about 4-14/20, to provide efficient sorption and complexing (intercalation) of the intercalant monomer between the platelets of the layered material, e.g., phyllosilicate.

The monomer intercalants are introduced in the form of a solid or liquid composition (neat or aqueous, with or without an organic solvent that does not include one of the above-defined functionalities, e.g., an aliphatic hydrocarbon, such as heptane) having an intercalant monomer concentration of at least about 2%, preferably at least about 5% by weight intercalant monomer, more preferably at least about 50% to about 100% by weight intercalant monomer in the intercalating composition, based on the dry weight of the layered material, for intercalant monomer sorption. The intercalant monomer can be added as a solid with the addition to the layered material/intercalant monomer blend of about 20% water, preferably at least about 30% water to about 5,000% water or more, based on the dry weight of layered material. Preferably about 30% to about 50% water, more preferably about 30% to about 40% water, based on the dry weight of the layered material, is included in the intercalating composition when extruding or pug milling, so that less water is sorbed by the intercalate, thereby necessitating less drying energy after intercalation. The monomer intercalants may be introduced into the spaces between every layer, nearly every layer, or at least a predominance of the layers of the layered material such that the subsequently exfoliated platelet particles are preferably, predominantly less than about 5 layers in thickness; more preferably, predominantly about 1 or 2 layers in thickness; and most preferably, predominantly single platelets.

Any swellable layered material that sufficiently sorbs the intercalant monomer to increase the interlayer spacing between adjacent phyllosilicate platelets to at least about 5 Å, preferably to at least about 10 Å (when the phyllosilicate is measured dry) may be used in the practice of this invention. Useful swellable layered materials include phyllosilicates, such as smectite clay minerals, e.g., montmorillonite, particularly sodium montmorillonite; magnesium montmorillonite and/or calcium montmorillonite; nontronite; beidellite; volkonskoite; hectorite; saponite; sauconite; sobockite; stevensite; svinfordite; vermiculite; and the like. Other useful layered materials include micaceous minerals, such as illite and mixed layered illite/smectite minerals, such as rectorite, tarosovite, ledikite and admixtures of illites with the clay minerals named above.

Other layered materials having little or no charge on the layers may be useful in this invention provided they can be intercalated with the intercalant monomers to expand their interlayer spacing to at least about 5 Å, preferably to at least about 10 Å. Preferred swellable layered materials are phyllosilicates of the 2:1 type having a negative charge on the layers ranging from about 0.15 to about 0.9 charges per formula unit and a commensurate number of exchangeable metal cations in the interlayer spaces. Most preferred layered materials are smectite clay minerals such as montmorillonite, nontronite, beidellite, volkonskoite, hectorite, saponite, sauconite, sobockite, stevensite, and svinfordite.

As used herein the "interlayer spacing" refers to the distance between the internal faces of the adjacent layers as they are assembled in the layered material before any delamination (exfoliation) takes place. The interlayer spacing is measured when the layered material is "air dry", e.g., contains about 3-6% by weight water, e.g., 5% by weight water based on the dry weight of the layered material. The preferred clay materials generally include interlayer cations such as Na⁺, Ca⁺², K⁺, Mg⁺², NH₄⁺ and the like, including mixtures thereof.

The amount of intercalant monomer intercalated into the swellable layered materials useful in this invention, in order that the intercalated layered material platelets surfaces sufficiently complex with the intercalant monomer molecules such that the layered material may be easily exfoliated or delaminated into individual platelets, may vary substantially between about 2%, preferably at least about 10%, and about 90%, based on the dry weight of the layered silicate material. In the preferred embodiments of the invention, amounts of monomer intercalants employed, with respect to the dry weight of layered material being intercalated, will preferably range from about 8 grams of intercalant monomer:100 grams of layered material (dry basis), preferably at least about 10 grams of intercalant monomer:100 grams of layered material to about 80-90 grams intercalant monomer:100 grams of layered material. More preferred amounts are from about 20 grams intercalant monomer:100 grams of layered material to about 60 grams intercalant monomer:100 grams of layered material (dry basis).

The monomer intercalants are introduced into (sorbed within) the interlayer spaces of the layered material in one of two ways. In a preferred method of intercalating, the layered material is intimately mixed, e.g., by extrusion or pug milling, to form an intercalating composition comprising the layered material, in an intercalant monomer/water solution, or intercalant monomer, water and an organic carrier for the functional intercalant monomer. To achieve sufficient intercalation for exfoliation, the layered material/intercalant monomer blend contains at least about 8% by weight, preferably at least about 10% by weight intercalant monomer, based on the dry weight of the layered material. The intercalant monomer carrier (preferably water, with or without an organic solvent) can be added by first solubilizing or dispersing the intercalant monomer in the carrier; or a dry intercalant monomer and relatively dry phyllosilicate (preferably containing at least about 4% by weight water) can be blended and the intercalating carrier added to the blend, or to the phyllosilicate prior to adding the dry intercalant monomer. In every case, it has been found that surprising sorption and complexing of intercalant monomer between platelets is achieved at relatively low loadings of intercalating carrier, especially H₂O, e.g., at least about 4% by weight water, based on the dry weight of the phyllosilicate. When intercalating the phyllosilicate in slurry form (e.g., 900 pounds water, 100 pounds phyllosilicate, 25 pounds intercalant monomer) the amount of water can vary from a preferred minimum of at least about 30% by weight water, with no upper limit to the amount of water in the intercalating composition (the phyllosilicate intercalate is easily separated from the intercalating composition).

Alternatively, the intercalating carrier, e.g., water, with or without an organic solvent, can be added directly to the phyllosilicate prior to adding the intercalant monomer, either dry or in solution. Sorption of the monomer intercalant molecules may be performed by exposing the layered material to dry or liquid intercalant monomers in the intercalating composition containing at least about 2% by weight, preferably at least about 5% by weight intercalant monomer, more preferably at least about 50% intercalant monomer, based on the dry weight of the layered material. Sorption may be aided by exposure of the intercalating composition to heat, pressure, ultrasonic cavitation, or microwaves.

In accordance with another method of intercalating the intercalant monomer between the platelets of the layered material and exfoliating the intercalate, the layered material, containing at least about 4% by weight water, preferably about 10% to about 15% by weight water, is blended with an aqueous solution of an intercalant monomer in a ratio sufficient to provide at least about 8% by weight, preferably at least about 10% by weight intercalant monomer, based on the dry weight of the layered material. The blend then preferably is extruded for faster intercalation of the intercalant monomer with the layered material.

The intercalant monomer has an affinity for the phyllosilicate so that it is sorbed between, and is maintained associated with the surfaces of the silicate platelets, in the interlayer spaces, and after exfoliation. In accordance with the present invention, the intercalant monomer should include a functionality selected from the group consisting of a hydroxyl; a carbonyl; a carboxylic acid; an amine; an amide; an ether; an ester; an aromatic ring; and combinations thereof to be sufficiently bound to the platelet surfaces, it is hereby theorized, by a mechanism selected from the group consisting of ionic complexing; electrostatic complexing; chelation; hydrogen bonding; dipole/dipole; Van Der Waals forces; and any combination thereof. Such bonding, via a metal cation of the phyllosilicate sharing electrons with electronegative atoms of one or monomer functional molecules or monomer aromatic ring molecules of one or two intercalant monomer molecules, to an inner surface of the phyllosilicate platelets provides adherence between the hydroxyl and/or aromatic ring molecules and the platelet inner surfaces of the layered material. Such intercalant monomers have sufficient affinity for the phyllosilicate platelets to maintain sufficient interlayer spacing for exfoliation, without the need for coupling agents or spacing agents, such as the onium ion or silane coupling agents disclosed in the above-mentioned prior art.

As shown in Figures 1-3, the disposition of surface Na⁺ ions with respect to the disposition of O, Mg, Si, and Al atoms, and the natural clay substitution of Mg⁺² cations for Al⁺³ cations, leaving a net negative charge at the sites of substitution, results in a clay surface charge distribution as shown in Figure 3. This alternating positive to negative surface charge over spans of the clay platelets surfaces, and on the clay platelet surfaces in the interlayer spacing, provide for excellent dipole/dipole attraction of a polar monomer functionality and/or aromatic-functional monomer molecules for intercalation of the clay and for bonding of such polar molecules on the platelet surfaces, after exfoliation.

It is preferred that the platelet loading be less than about 10% for purposes of increasing the viscosity of an organic liquid carrier. Platelet particle loadings within the range of about 0.05% to about 40% by weight, preferably about 0.5% to about 20%, more preferably about 1% to about 10% of the composite material significantly enhances viscosity. In general, the amount of platelet particles incorporated into a liquid carrier, such as a polar solvent, e.g., a glycol such as glycerol, is less than about 90% by weight of the mixture, and preferably from about 0.01% to about 80% by weight of the composite material mixture, more preferably from about 0.05% to about 40% by weight of the mixture, and most preferably from about 0.05% to about 20% or 0.05% to about 10% by weight.

In accordance with an important feature of the present invention, the intercalated phyllosilicate can be manufactured in a concentrated form, e.g., 10-90%, preferably 20-80% intercalant monomer with or without another polar organic compound carrier and 10-90%, preferably 20-80% intercalated phyllosilicate that can be dispersed in the polar organic carrier and exfoliated before or after addition to the carrier to a desired platelet loading.

Polar organic compounds containing one or more hydroxy functionalities that are suitable for use as intercalate monomers and/or as the organic liquid carrier (matrix monomer) in accordance with the present invention include all alcohols, including aliphatic alcohols; aromatic alcohols; aryl substituted aliphatic alcohols; alkyl substituted aromatic alcohols; and polyhydric alcohols, such as the phenols.

Examples of suitable alcohols include, but are not limited to the following. Aliphatic alcohols, including: 1-hexanol; 1-heptanol; 1-octanol; 1-nonanol; 1-decanol; 1-undecanol; 1-dodecanol; 1-tridecanol; 1-tetradecanol; 1-pentadecanol; 1-hexadecanol; 1-heptadecanol; 1-octadecanol; 1-nonadecanol; 1-eicosanol; 1-hexacosanol; 1-hentriacontanol; 9-hexadecen-1-ol; 9-octadecen-1-ol; 10-eicosen-1-ol; 2-methyl-1-pentanol; 2-ethyl-1-butanol; 2-ethyl-1-hexanol; 3,5-dimethyl-1-hexanol; 2,2,4-trimethyl-1-pentanol; 4-methyl-2-pentanol; 2-octanol; 2,6-dimethyl-4-heptanol; and 2,6,8-trimethyl-4-nonanol.

Detergent range aliphatic alcohols include the C₆ - C₂₄ alcohols, such as the C₈ - C₁₈ alcohols manufactured from coconut, tallow and/or palm oils; C₁₆, C₁₈ oleyl alcohols; C₉ - C₁₅ mixed alcohols, C₆ - C₂₂ mixed alcohols; and C₁₃, C₁₅ alcohols manufactured from ethylene and other olefins. Additional detergent range alcohols include lauryl alcohol; myristyl alcohol; cetyl alcohol; tallow alcohol; stearyl alcohol; and oleyl alcohol. Branched detergent range alcohols, such as tridecyl alcohol (C₁₃H₂₈O), consisting predominantly of tetramethyl-1-nonanols also are suitable as the intercalant monomer and/or as a polar organic liquid carrier.

Plasticizer range alcohols include hexanol (C₆H₁₄O) ; 4-methyl-2-pentanol (C₆H₁₄O) ; octanol (C₈H₁₈O) ; isooctyl alcohol (C₈H₁₈O) ; 2-ethylhexanol (C₈H₁₈O) ; isononyl alcohol (C₉H₂₀O) ; decanol (C₁₀H₂₂O) ; and tridecyl alcohol (C₁₃H₂₈O).

The nanocomposites containing one or more detergent range alcohols as the matrix monomer (the phyllosilicate platelets are dispersed in one or more detergent range alcohols as the polar organic liquid carrier) are useful, for example, the following industries shown in Table 1.

**TABLE 1**

| **INDUSTRY** | **USE** |
|---|---|
| detergent | emollient, foam control, opacifier, softener |
| petroleum and lubrication | drilling mud |
| agriculture | evaporation suppressant |
| plastics | mold-release agent, antifoam, emulsion polymerization agent, lubricant |
| textile | lubricant, foam control, anti-static agent, ink ingredient; fabric softeners |
| cosmetics | softener, emollient |
| pulp and paper | foam control |
| food | water evaporation suppressant |
| rubber | plasticizer, dispersant |
| paint and coatings | foam control |
| metal working | lubricant, rolling oil |
| mineral processing | flotation agent |

The plasticizer range alcohols are primarily used in plasticizers, e.g., for polyvinyl chloride (PVC) and other resins, but they also have a wide range of uses in other industrial and consumer products, as shown in Table 2.

**TABLE 2**

| **INDUSTRY** | **USE** |
|---|---|
| plastics | emulsion polymerization |
| petroleum and lubrication | defoamer |
| agriculture | stabilizer, tobacco sucker control, herbicide, fungicide |
| mineral processing | solvent, extractant, antifoam |
| textile | leveling agent, defoamer |
| coatings | solvent, smoothing agent |
| metal working | solvent, lubricant, protective coating |
| chemical processing | antifoam, solvent |
| food | moisturizer |
| cosmetics | perfume ingredient |

The plasticizer range alcohols have a number of other uses in plastics: hexanol and 2-ethylhexanol are used as part of the catalyst system in the polymerization of acrylates, ethylene, and propylene; the per-oxydicarbonate of 2-ethylhexanol is utilized as a polymerization initiator for vinyl chloride; various trialkyl phosphites find usage as heat and light stabilizers for plastics; organotin derivatives are used as heat stabilizers for PVC; octanol improves the compatibility of calcium carbonate fillers in various plastics; and 2-ethylhexanol is used to make expanded polystyrene beads.

A number of alcohols, particularly the C₈ materials, are employed to produce zinc dialkyldithiophosphates as lubricant antiwear additives. A small amount is used to make viscosity index improvements for lubricating oils. Various enhanced oil recovery processes utilize formulations containing hexanol or heptanol to displace oil from underground reservoirs; the alcohols and derivatives are also used as defoamers in oil production.

Plasticizer range alcohols such as 2-ethylhexanol and isoctyl alcohol, and surfactants made from these alcohols are used as emulsifiers and wetting agents for agricultural chemicals.

A number of surfactants are made from the plasticizer range alcohols, employing processes similar to those for the detergent range materials such as sulfation, ethoxylation, and amination. These surfactants find application primarily in industrial and commercial areas;: either amines and trialkyl amines are used in froth flotation of ores, and the alcohols are also used to dewater mineral concentrates or break emulsions.

The alcohols through C₈ have applications as specialty solvents, as do derivatives of linear and branched hexanols. Inks, coatings, and dyes for polyester fabrics are other application areas for 2-ethylhexanol. Trialkyl amines of the linear alcohols are used in solder fluxes, and hexanol is employed as a solvent in a soldering flux.

The polyhydric alcohols also are suitable as the intercalant monomer, and/or as the polar organic solvent (matrix monomer), in accordance with the present invention. Examples include

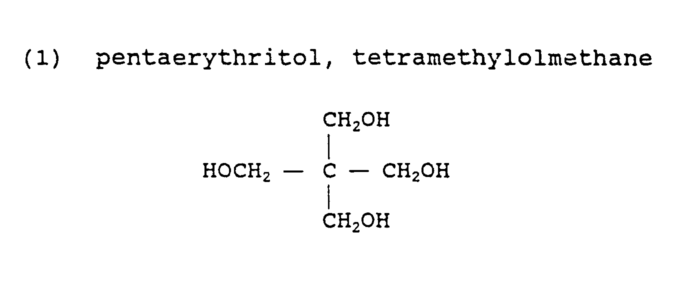

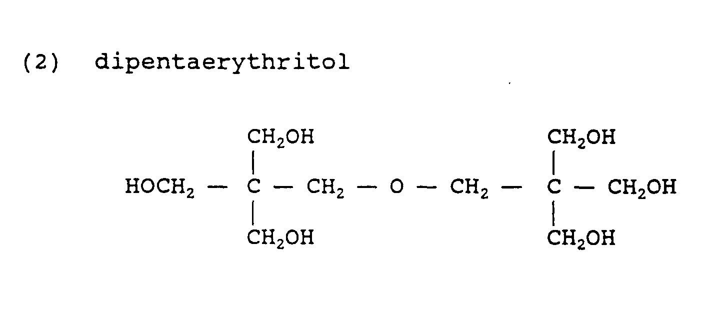

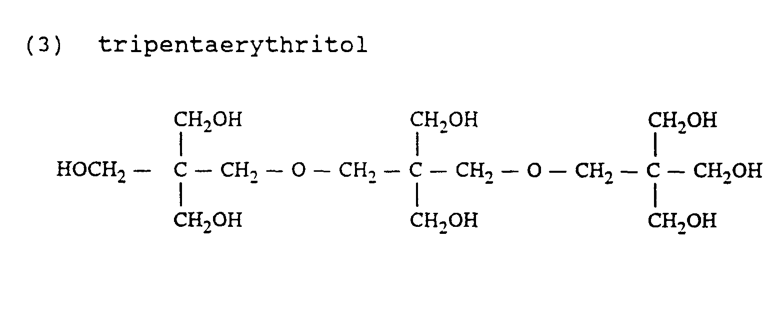

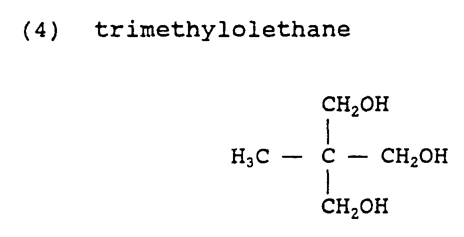

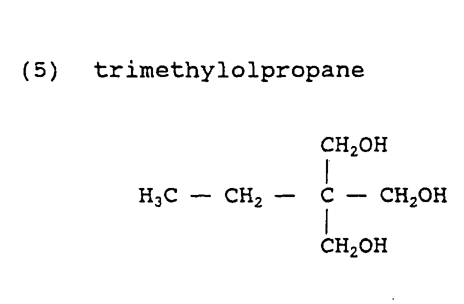

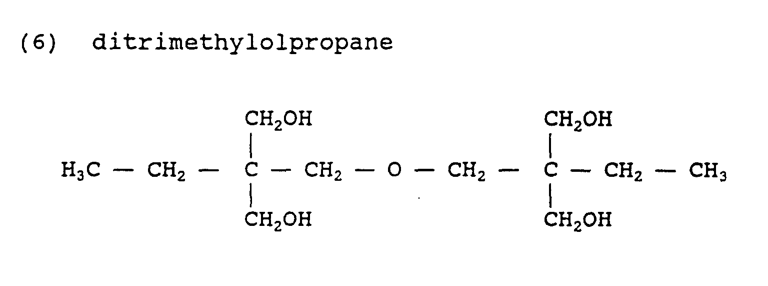

The most important industrial use of pentaerythritol is in a wide variety of paints, coatings, and varnishes, where the cross-linking capability of the four hydroxy groups is critical. Alkyd resins are produced by reaction of pentaerythritol with organic acids such as phthalic acid or maleic acid and natural oil species.

The resins obtained using pentaerythritol as the only alcohol group supplier are noted for high viscosity and fast drying characteristics. They also exhibit superior water and gasoline resistance, as well as improved film hardness and adhesion. The alkyd resin properties may be modified by replacing all or part of the pentaerythritol by glycols, glycerol, trimethylolethane, or trimethylolpropane, thereby reducing the functionality. Similarly, replacing the organic acid by longer-chain acids, such as adipic, or altering the quantities of the oil components (linseed, soya, and the like) modifies the drying, hardness, and wear characteristics of the final product. The catalyst and the actual cooking procedures also significantly affect overall resin characteristics.

Explosives formed by nitration of pentaerythritol to the tetranitrate using concentrated nitric acid are generally used as a filling in detonator fuses. Use of pentaerythritol containing small amounts of dipentaerythritol produces crystallization behavior that results in a high bulk density product having excellent free-flow characteristics, important for fuse burning behavior.

Pentaerythritol is used in self-extinguishing, nondripping, flame-retardant compositions with a variety of polymers, including olefins, vinyl acetate and alcohols, methyl methacrylate, and urethanes. Phosphorus compounds are added to the formulation of these materials. When exposed to fire, a thick foam is produced, forming a fire-resistant barrier.

Polymer compositions containing pentaerythritol are also used as secondary heat-, light-, and weather-resistant stabilizers with calcium, zinc, or barium salts, usually as the stearate, as the prime stabilizer. The polymers may be in plastic or fiber form.

Pentaerythritol and trimethylolpropane acrylic esters are useful in solventless lacquer formulations for radiation curing, providing a cross-linking capability for the main film component, which is usually in acrylic esters of urethane, epoxy, or polyester. Some specialty films utilize dipentaerythritol and ditrimethylolpropane.

Titanium dioxide pigment coated with pentaerythritol, trimethylolpropane, or trimethylolethane exhibits improved dispersion characteristics when used in paint or plastic formulations. The polyol is generally added at levels of about 0.1-0.5%.

Glycols also are suitable both as an intercalant monomer and as a polar organic solvent (matrix monomer) in accordance with the present invention. Glycerol is a particularly useful polyhydric alcohol since it is a safe food additive, as well as being otherwise in almost every industry.

Glycerol as a food is easily digested and nontoxic, and its metabolism places it with the carbohydrates, although it is present in combined form in all vegetable and animal fats. In flavoring and coloring products, glycerol acts as a solvent and its viscosity lends body to the product. It is used as a solvent, a moistening agent, and an ingredient of syrups as a vehicle. In candies and icings, glycerol retards crystallization of sugar. Glycerol is used as a heat-transfer medium in direct contact with foods in quick freezing, and as a lubricant in machinery used for food processing and packaging. The polyglycerols have increasing use in foods, particularly in shortenings and margarines.

In drugs and medicines, glycerol is an ingredient of many tinctures and elixirs, and glycerol of starch is used in jellies and ointments. It is employed in cough medicines and anesthetics, such as glycerol - phenol solutions, for ear treatments, and in bacteriological culture media. In cosmetics, glycerol is used in many creams and lotions to keep the skin soft and replace skin moisture. It is widely used in toothpaste to maintain the desired smoothness, viscosity, and lending a shine to the paste.

Meat casings and special types of papers, such as a glassine and greaseproof paper, need plasticizers to give them pliability and toughness; as such, glycerol is completely compatible with the base materials used, is absorbed by them, and does not crystallize or volatilize appreciably.

Glycerol can be used as a lubricant in places where an oil would fail. It is recommended for oxygen compressors because it is more resistant to oxidation than mineral oils. It is also used to lubricate pumps and bearings exposed to fluids such as gasoline and benzene, which would dissolve oil-type lubricants. In food, pharmaceutical, and cosmetic manufacture, where there is contact with a lubricant, glycerol may be used to replace oils.

Glycerol is often used as a lubricant because its high viscosity and ability to remain fluid at low temperatures make it valuable without modification. To increase its lubricating power, the exfoliated phyllosilicate platelets are dispersed in it. The viscosity of the nanocomposite may be decreased by addition of water, alcohol, or glycols, and increased by increased loading of phyllosilicate platelets. Pastes of such nanocomposite compositions may be used in packing pipe joints, in gas lines, or in similar applications. For use in high pressure gauges and valves, soaps are added to glycerol to increase its viscosity and improve its lubricating ability. A mixture of glycerin and glucose is employed as a nondrying lubricant in the die-pressing of metals. In the textile industry, glycerol is frequently used in connection with so-called textile oils, in spinning, knitting, and weaving operations.

Sheets and gaskets made with ground cork and glue require a plasticizer that has some humectant action in order that they may be pliable and tough. Glycerol is used because it has low vapor pressure, is not readily extractable by oils and greases, is readily absorbed by the cork, and is compatible with glue. With crown sealers and cork stoppers that come into contact with foods, it fulfills the additional requirement of nontoxicity.

Glycerol is used in cement compounds, caulking compounds, lubricants, and pressure media. It is also used in masking and shielding compounds, soldering compounds, and compasses; cleaning materials such as soaps, detergents, and wetting agents; emulsifiers and skin protectives used in industry; asphalt; ceramics; photographic products; leather and wood treatments; and adhesives.

The polyglycerols have many of the properties of glycerol. Diglycerol, HOCH₂CHOHCH₂OCH₂CHOHCH₂OH, is a viscous liquid (287 mm²/s(=cSt) at 65.6°C), about 25 times as viscous as glycerol. The polyglycerols offer greater flexibility and functionality than glycerol. Polyglycerols up to and including riacontaglycerol (30 condensed glycerol molecules) have been prepared commercially; the higher forms are solid. They are soluble in water, alcohol, and other polar solvents. They act as humectants, much like glycerol, but have progressively higher molecular weights and boiling points. Products of the present invention containing phyllosilicate platelets, based on polyglycerol matrix monomers, are useful in surface-active agents, plasticizers, adhesives, lubricants, antimicrobial agents, medical specialties and dietetic foods.

Glycols, such as ethylene glycol monomers as well as propylene glycol monomers; neopentyl glycol; 2,2,4-trimethyl-1,3-pentanediol; 1,4-cyclohexanedimethanol; and hydroxypivalyl hydroxypivalate are useful as the intercalant monomers and/or as the polar organic carrier (matrix monomer) in forming the nanocomposites of the present invention. Other suitable ethylene glycols include diethylene glycol; triethylene glycol; and tetraethylene glycol.

Triethylene glycol is an efficient hygroscopicity agent with low volatility, and is used as a liquid drying agent for natural gas. As a solvent, triethylene glycol is used in resin impregnants and other additives, steam-set printing inks, aromatic and paraffinic hydrocarbon separations, cleaning compounds, and cleaning poly(ethylene terephthalate) production equipment. The freezing point depression property of triethylene glycol is the basis for its use in heat-transfer fluids.

Triethylene glycol is used in some form as a vinyl plasticizer. The fatty acid derivatives of triethylene glycol are used as emulsifiers, demulsifiers, and lubricants. Polyesters derived from triethylene glycol are useful as low pressure laminates for glass fibers, asbestos, cloth, or paper. Triethylene glycol is used in the manufacture of alkyd resins used as laminating agents and in adhesives.

Tetraethylene glycol is miscible with water and many organic solvents. It is a humectant that, although less hygroscopic than the lower members of the glycol series, may find limited application in the dehydration of natural gases. Other uses are in moisturizing and plasticizing cork, adhesives, and other substances.

Tetraethylene glycol may be used directly as a plasticizer or modified by esterification with fatty acids to produce plasticizers. Tetraethylene glycol is used directly to plasticize separation membranes, such as silicone rubber, poly(vinyl acetate), and cellulose triacetate. Ceramic materials utilize tetraethylene glycol as plasticizing agents in resistant refractory plastics and molded ceramics. It is also employed to improve the physical properties of cyanoacrylate and polyacrylonitrile adhesives, and is chemically modified to form polyisocyanate, polymethacrylate, and to contain silicone compounds used for adhesives.

Propylene glycol is commonly found in foods, pharmaceuticals, cosmetics, and other applications involving possible ingestion or absorption through the skin. An industrial grade of propylene glycol is usually specified for other uses. In common with most other glycols, propylene glycol is odorless and colorless, and has a wide range of solvency for organic materials, besides being completely water-soluble. Propylene glycol is also a known antimicrobial and is an effective food preservative.

Propylene glycol is an important solvent for aromatics in the flavor concentrate industry, enabling manufacturers to produce low cost flavor concentrates of high quality. It is also an excellent wetting agent for natural gums, greatly simplifying the compounding of citrus and other emulsified flavors. Propylene glycol also finds use as a solvent in elixirs and pharmaceutical preparations containing some water-soluble ingredients, and as a solvent in the formulation of sunscreen lotion, shampoos, shaving creams, and other similar products.

Aqueous solutions of propylene glycol display excellent antifreeze properties and are therefore valuable as low temperature heat-transfer fluids. These fluids are commonly used in the brewing and dairy industries as well as in refrigerated display cases in retail grocery stores. Propylene glycol is also an effective humectant, preservative, and stabilizer and is found in such diverse applications as semi-moist pet food, bakery goods, food flavorings, salad dressings, and shave creams. It is also used as a solvent and plasticizer in printing inks, as a preservative in floral arrangements, and as a stabilizer in hydraulic fluids. Heat-transfer fluids used in commercial and industrial building heating and cooling systems, chemical plants, stationary engines, and solar heat recovery can be formulated with the industrial grade of propylene glycol.

The greater solvency of dipropylene glycol for castor oil indicates its usefulness as a component of hydraulic brake fluid formulations; its affinity for certain other oils has likewise led to its use in cutting oils, textile lubricants, and industrial soaps. Fragrance or low odor grades of dipropylene glycol are established standard base formulating solvents in the fragrance industry and for some personal care products, such as deodorants.

Tripropylene glycol is an excellent solvent in many applications where other glycols fail to give satisfactory results. Its ability to solubilize printing ink resins makes tripropylene glycol useful in creams designed to remove ink stains from the hands. A combination of water solubility and good solvent power for many organic compounds plus low volatility and a high boiling point also have led to its use by formulators of textile soaps and lubricants, cutting oil concentrates, and many similar products.

The polyurethane industry provides other uses for neopentyl glycol as an intermediate in the manufacture of hydroxy-terminated polyester polyols. Beginning with basically the same ingredients, products with a wide range of properties, varying from soft to rigid foams to elastomers and adhesives may be produced from polyols based on neopentyl glycol. This glycol also is employed to improve thermal, hydrolytic, and uv stability.

Synthetic lubricants are made with neopentyl glycol in the base-stock polyester. Excellent thermal stability and viscosity control are imparted to special high performance aviation lubricants by the inclusion of polyester thickening agents made from neopentyl glycol. Neopentyl glycol is also used to manufacture polymeric plasticizers that exhibit the improved thermal, hydrolytic, and uv stability necessary for use in some exterior applications.

Trimethylpentanediol is used in hard-surface cleaners as a coupling agent and in temporary or semipermanent hair dyes. Other applications involving trimethylpentanediol, or a derivative, are in urethane elastomers, in foams, as a reactive diluent in urethane coatings, as a sound-insulating, glass-laminate adhesive, as a bactericide-fungicide, and as a cross-linking agent in poly(vinyl chloride) adhesives.

Another area in which 1,4-cyclohexanedimethanol is commercially important is in the manufacture of polyurethane foams. The two primary hydroxyl groups provide fast reaction rates with diisocyanates, which makes this diol attractive for use as a curative in foams. It provides latitude in improving physical properties of the foam, in particular the load-bearing properties. Generally, the ability to carry a load increases with the amount of 1,4-cyclohexanedimethanol used in producing the high resilience foam. Other polyurethane derivatives of 1,4-cyclohexanedimethanol include elastomers useful for synthetic rubber products with a wide range of hardness and elasticity.

Hydroxypivalyl hydroxypivalate or 3-hydroxy-2,2-dimethylpropyl 3-hydroxy-2,2-dimethylpropionate is a white crystalline solid at room temperature. It is used to manufacture polyester resins for use in surface coatings where good resistance to weathering and acid rain are of particular importance.

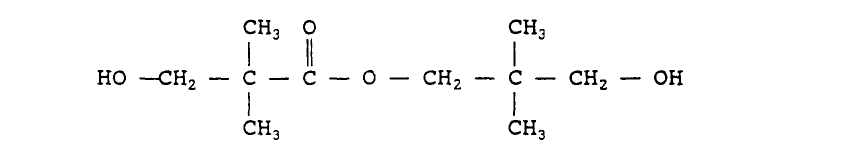

Hydroxypivalyl hydroxypivalate is soluble in most alcohols, ester solvents, ketones, and aromatic hydrocarbons. It is partially soluble in water.

The phenols also function as hydroxyfunctional polar organic compounds suitable as the intercalant monomer, and/or as a polar organic liquid carrier, including the alkylphenols, chlorophenols, cresols, hydroquinone, resorcinol, pyrocatechol, polyhydroxybenzenes, and the monomeric phenolic aldehydes, phenolic ethers, and aminophenols, which have one or more hydroxyl groups attached to an aromatic ring. Examples of suitable phenolic aldehydes, phenolic ethers and aminophenols are as follows:
***Representative Monohydric phenolic aldehydes:***
   *o*-hydroxybenzaldehyde; *p*-methoxybenzaldehyde; 2-hydroxy-*p*-tolualdehyde; 4-hydroxy-*o*-tolualdehyde; 6-hydroxy-*m*-tolualdehyde; and 4-hydroxy-*m*-tolualdehyde.
***Representative Dihydric phenolic aldehydes:***
   3,4-dihydroxybenzaldehyde; 4-hydroxy-3-methoxybenzaldehyde; 3,4-dimethoxybenzaldehyde heliotropin; 3,4-methylenedioxybenzaldehyde bourbonal; 3-ethoxy-4-hydroxybenzaldehyde; 3-hydroxy-4-methoxybenzaldehyde; 2-hydroxy-3-methoxybenzaldehyde; 2,5-dihydroxybenzaldehyde; and 2,4-diformyl-6-methoxyphenol.
***Representative Trihydric phenolic aldehydes:***
   4-hydroxy-3,5-dimethoxybenzaldehyde.
***Representative Polycyclic phenolic aldehydes:***
   1-formyl-2-naphthol; 4-formyl-1-naphthol; 2-formyl-1-naphthol; 3-formyl-1-naphthol; and 2-anthrol-1-aldehyde.
***Representative Phenolic Esters***
   methoxybenzene; 4-methoxytoluene; ethoxybenzene; 1-methoxy-4-propenylbenzene; 1-allyl-4-methoxybenzene; phenyl ether; 2-methoxyphenol; 1,2-dimethoxybenzene; 1-allyl-3,4-dimethoxybenzene; eugenol; 1-hydroxyl-2-methoxy-4-*cis*-propenylbenzene; 1-hydroxyl-2-methoxy-4-*trans*-propenylbenzene; safrole; isosafrole; 4-methoxyphenol; 4-benzyloxyphenol; 1,4-dimethoxybenzene; 2-ethoxynaphthalene; and 2-methoxynaphthalene.

Salts of the above aminophenols also are suitable, such as the following: hydrochloride; hydroiodide; oxalate; acetate, chloroacetate; trichloroacetate; sulfate; and hydrosulfate. The 2- and 4-aminophenols are strong reducing agents and can function in nanocomposites as corrosion inhibitors in paints. Both 2-aminophenol and 4-aminophenol are useful as a shading agent for leather, fur and hair; 3-aminophenol is useful as a stabilizer for chlorinated thermoplastic polymers. Derivatives include: 2-amino-4-nitrophenol; 2-amino-4,6-dinitrophenol; 2-amino-4,6-dichlorophenol; 3-(N,N-dimethylamino)phenol; 3-(N-methylamino)phenol; 3-(N,N-diethylamino)phenol; 3-(N-phenylamino)phenol; 4-amino-2-hydroxybenzoic acid; 4-(N-methylamino)phenol; 4-(N,N-dimethylamino)phenol; 4-hydroxyacetanilide; 4-ethoxyacetanilide; and N-(4-hydroxyphenyl)glycine.

### Representative Aminophenols And Their Salts And Derivatives

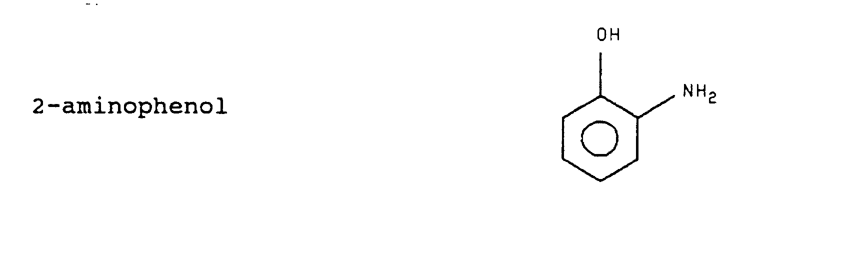

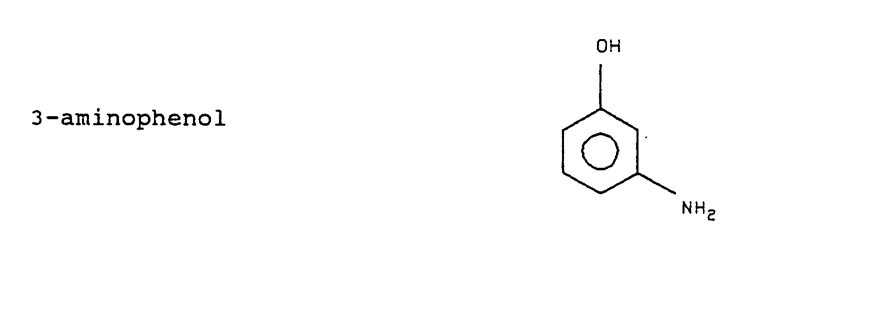

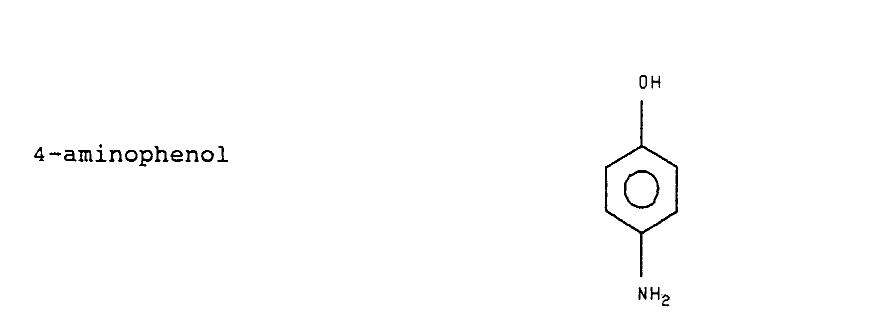

### REPRESENTATIVE STRAIGHT-CHAIN ALKANOIC ACIDS, CₙH₂ₙO₂ SYSTEMATIC NAME (COMMON NAME):

Methanoic (formic); ethanoic (acetic); propanoic (propionic); butanoic (butyric); pentanoic (valeric); hexanoic ([caproic]); heptanoic ([enanthic]); octanoic ([caprylic]); nonanoic (pelargonic); decanoic ([capric]); undecanoic ([undecylic]); dodecanoic (lauric); tridecanoic ([tridecylic]); tetradecanoic (myristic); pentadecanoic ([pentadecylic]); hexadecanoic (palmitic); heptadecanoic (margaric); octadecanoic (stearic); nonadecanoic ([nonadecyclic]); eicosanoic (arachidic); docosanoic (behenic); tetracosanoic (lignoceric); hexacosanoic (cerotic); octacosanoic (montanic); triacontanoic (melissic); tritriacontanoic (psyllic); and pentatriacontanoic (ceroplastic).

### REPRESENTATIVE STRAIGHT-CHAIN ALKENOIC ACIDS, CₙH₍₂ₙ₋₂₎O₂ SYSTEMATIC NAME (COMMON NAME):

Propenoic (acrylic); *trans*-2-butenoic (crotonic); *cis*-2-butenoic (isocrotonic); 3-butenoic (vinylacetic); 2-pentenoic (β-ethylacrylic) ; 3-pentenoic (β-pentenoic); 4-pentenoic (allylacetic); 2-hexenoic (isohydroascorbic); 3-hexenoic (hydrosorbic); *trans*-2-heptenoic; 2-octenoic; 2-nonenoic; *trans*-4-decenoic; *cis*-4-decenoic; 9-decenoic (caproleic); 10-undecenoic (undecylenic); *trans*-3-dodecenoic (linderic); tridecenoic; *cis*-9-tetradecenoic (myristoleic); pentadecenoic; *cis*-9-hexadecenoic (*cis*-9-palmitoleic); *trans*-9-hexadecenoic *(trans*-9-palmitoleic); 9-heptadecenoic; *cis*-6-octadecenoic (petroselinic); trans-6-octadecenoic (petroselaidic); *cis*-9-octadecenoic (oleic); *trans*-9-octadecenoic (elaidic); *cis*-11-octadecenoic;
*trans*-11-octadecenoic (vaccenic); *cis*-5-eicosenoic; *cis*-9-eicosenoic (godoleic); *cis*-11-docosenoic (cetoleic); *cis-13* docosenoic (erucic); *trans*-13-docosenoic (brassidic); *cis*-15-tetracosenoic (selacholeic); cis-17-hexacosenoic (ximenic); and cis-21-triacontenoic (lumequeic).

### REPRESENTATIVE POLYUNSATURATED FATTY ACIDS SYSTEMATIC NAME (COMMON NAME)

### REPRESENTATIVE DIENOIC ACIDS, CₙH₂ₙ₋₄O₂

2,4-pentadienoic (β-vinylacrylic) ; 2,4-hexadienoic (sorbic); *trans*-2,4-decadienoic, *trans*-2,4-dodecadienoic; *cis-*9,*cis*-12-octadecadienoic (linoleic); *trans*-9,*trans*-12-octadecadienoic (linolelaidic); 5,6-octadecadienoic (laballenic); and 5,13-docosadienoic.

### REPRESENTATIVE TRIENOIC ACIDS, CₙH₂ₙ₋₆O₂

6,10,14-hexadecatrienoic (hiragonic); *cis*-9,*cis*-12,*cis*-15-octadecatrienoic (linolenic); *cis*-9,*trans*-11,*trans*-13-octadecatrienoic (α-eleostearic); *trans*-9,*trans*-11,*trans*-13-octadecatrienoic (β-eleostearic); *cis-9,cis*-11,*trans*-13-octadecatrienoic (punicic); and *trans*-9,*trans*-12,*trans*-15-octadecatrienoic (linolenelaidic).

### REPRESENTATIVE TETRAENOIC ACIDS, CₙH_{2N-8}O₂

4,8,12,15 octadecatetraenoic (moroctic); *cis*-9,*trans*-11,*trans*-13,*cis*-15-octadecatetraenoic (α-parinaric); *trans*-9,*trans*-11,*trans*-13,*trans*-15-octadecatetraenoic (β-parinaric); and 5,8,11,14-eicosatetraenoic (arachidonic).

### REPRESENTATIVE PENTAENOIC ACIDS, CₙH_{2N-10}O₂

4,8,12,15,19-docosapentaenoic (clupanodonic).

### REPRESENTATIVE SUBSTITUTED ACIDS SYSTEMATIC NAME (COMMON NAME)

2-methylpropenoic (methacrylic); 2-methylpropanoic (isobutyric); 2-methyl-*cis*-2-butenoic (angelic); 2-methyl-*trans*-2-butenoic (tiglic); 3-methyl-2-butenoic (β,β-dimethyl acrylic); 2-methylbutanoic; 3-methylbutanoic (isovaleric); 2,2-dimethylpropanoic (pivalic); 2-ethylhexanoic; 3,11-dihydroxytetradecanoic (ipurolic); 2,15,16-trihydroxyhexadecanoic (ustilic); 9,10,16-trihydroxyhexadecanoic (aleuritic); 16-hydroxy-7-hexadecenoic (ambrettolic); 12-hydroxy-*cis*-9-octadecenoic (ricinoleic); 12-hydroxy-*trans*-9-octadecenoic (ricinelaidic); 4-oxo-9,11,13-octadecatrienoic (licanic); 9,10-dihydroxyoctadecanoic; 12-hydroxyoctadecanoic; 12-oxooctadecanoic; 18-hydroxy-9,11,13-octadecatrienoic (kamlolenic); 12,13-epoxy-*cis*-9-octadecenoic (vernolic); 8-hydroxy-*trans*-11-octadecene-9-ynoic (ximenynolic); 8-hydroxy-17-octadecene-9,11-diynoic (isanolic); and 14-hydroxy-*cis*-11-eicosenoic (lesquerolic).

### REPRESENTATIVE FATTY ACIDS WITH ALICYCLIC SUBSTITUENTS (COMMON NAME)

### REPRESENTATIVE CYCLOPENTENYL COMPOUNDS

Aleprolic; aleprestic; aleprylic; alepric; hydnocarpic; and chaulmoogric.

### REPRESENTATIVE CYCLOPROPENYL COMPOUNDS

Malvalic (halphenic); sterculic; and lactobacillic.

### REPRESENTATIVE OLEO-BASED CARBOXYLIC ACIDS AND USES

| **ACID** | **USES** |
|---|---|
| canola | surfactants |
| castor oil acids (ricinoleic, 12-hydroxystearic) | lubricating greases |
| coconut oil acids | surfactants, soap |
| hydrogenated and/or separated tallow-based acids | metallic stearates (plastic lubricants), tires, candles, crayons, cosmetics |
| soybean oil acids | alkyd resins (paint) |
| tall oil acids 2% or more rosin | alkyd resins, ore flotation |
| less than 2% tallow fatty acids | soap, lubricants, fabric softeners, asphalt emulsifiers, synthetic rubber, plastics |
| capric | synthetic lubricants, medium-chain triglycerides |
| caprylic | synthetic lubricants, medium-chain triglycerides |
| caprylic-capric blend | synthetic lubricants, medium-chain triglycerides |
| lauric, 95% (dodecanoic) | surfactants, soap |
| myristic, 95% (tetradecanoic) | esters for cosmetics, lotions |
| oleic | surfactants, lubricants, plasticizers |
| palmitic, 90% | esters for personal care products |
| pelargonic (nonanoic) stearic, 90% | synthetic lubricants, plasticizers, alkyd resins, ore flotation |

### REPRESENTATIVE BRANCHED-CHAIN ACIDS (COMMON NAME)

2-methylpropanoic (isobutyric) ; 2-methylbutanoic (isopentanoic); 3-methylbutanoic (isovaleric); 2,2-dimethylpropanoic (neopentanoic); 2-ethylhexanoic; mixed isomers (isononanoic); 2,2-dimethyloctanoic (neodecanoic); and mixed isomers (isostearic).

### TRIALKYLACETIC ACIDS

Trialkylacetic acids are characterized by the following structure: 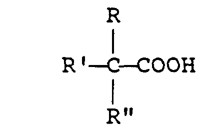 in which R, R', and R" are CₓH₂ₓ₊₁, with x ≥ 1. The lowest member of the series (R = R' = R" = CH₃) is the C₅ acid, trimethylacetic acid or 2,2-dimethylpropanoic acid (also, neopentanoic acid, pivalic acid). For higher members in the series, the products are typically mixtures of isomers, resulting from the use of mixed isomer feedstocks and the chemical rearrangements that occur in the manufacturing process.

The trialkylacetic acids have a number of uses in areas such as polymers, pharmaceuticals, agricultural chemicals, cosmetics, and metal-working fluids. Commercially important derivatives of these acids include acid chlorides, peroxyesters, metal salts, vinyl esters, and glycidyl esters.

The C₁₀ trialkylacetic acids, referred to as neodecanoic acid or as Versatic 10, are liquids at room temperature. Typical physical properties for commercially available material are given in Table 2. These materials are typically mixtures of isomers.

Metal salts of neodecanoic acid have also been used as catalysts in the preparation of polymers. For example, bismuth, calcium, barium, and zirconium neodecanoates have been used as catalysts in the formation of polyurethane elastomers. Magnesium neodecanoate is one component of a catalyst system for the preparation of polyolefins; vanadium, cobalt, copper, or iron neodecanoates have been used as curing catalysts for conjugated-diene butyl elastomers.

The metal salts of neodecanoic acid have found wide usage as driers for paints and inks. Metal neodecanoates that are used include silver, cobalt and zirconium, along with lead, copper, manganese, and zinc.

Neodecanoic acid is also used as the carrier for metals in poly(vinyl chloride) heat stabilizers. Metals used in this application include barium, cadmium, and zinc. Tin as the neodecanoate salt has also been claimed as a heat stabilizer for maleic anhydride.

### ADHESION PROMOTERS

One of the growing uses for neodecanoic acid has been in the preparation of adhesion promoters for radial tires. In this application, cobalt or nickel neodecanoate, along with other components, is used during tire manufacture to promote the adhesion or bonding of the rubber to the steel cord. The result is high adhesive strength, good thermal aging resistance and improved resistance to moisture aging.

Neodecanoic acid and its esters are used in cosmetics as emollients, emulsifiers, and solubilizers. Zinc or copper salts of neoacids are used as preservatives for wood.

### ALDEHYDES

Representative aldehydes suitable as the intercalant monomer and/or as the polar organic carrier in accordance with the present invention include the following:

Formaldehyde; acetaldehyde; propionaldehyde; butanal (*n*-butyraldehyde); 2-methylpropanal (isobutyraldehyde); pentanal (*n*-valeraldehyde); 3-methylbutanal (isovaleraldehyde); hexanal (caproaldehyde); benzaldehyde; heptanal (heptaldehyde); octanal (caprylaldehyde); phenylacetaldehyde; *o*-tolualdehyde; *m*-tolualdehyde; *p*-tolualdehyde; salicylaldehyde (o-hydroxybenzaldehyde); *p*-hydroxybenzaldehyde (4-formylphenol); and *p*-anisaldehyde (*p*-methoxybenzaldehyde).

### USES

Aldehydes find the most widespread use as chemical intermediates. The production of acetaldehyde, propionaldehyde, and butyraldehyde as precursors of the corresponding alcohols and acids are examples. The aldehydes of low molecular weight are also condensed in an aldol reaction to form derivatives which are important intermediates for the plasticizer industry. As mentioned earlier, 2-ethylhexanol, produced from butyraldehyde, is used in the manufacture of di(2-ethylhexyl) phthalate. Aldehydes are also used as intermediates for the manufacture of solvents (alcohols and ethers), resins, and dyes. Isobutyraldehyde is used as a intermediate for production of primary solvents and rubber antioxidants. Fatty aldehydes C₈ - C₁₃ are used in nearly all perfume types and aromas. Polymers and copolymers of aldehydes exist and are of commercial significance.

### KETONES

Suitable ketones are the organic compounds that contain one or more carbonyl groups bound to two aliphatic, aromatic, or alicyclic substituents, and are represented by the general formula

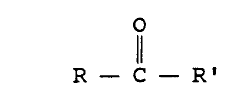

Representative ketones, including the aliphatic ketones; diketones; cyclic ketones; and aromatic ketones, are as follows:

### SYSTEMATIC NAME (TRIVIAL OR COMMON NAME)

2-propanone (acetone); 2-butanone (methyl ethyl ketone); 2-pentanone (methyl propyl ketone); 3-methyl-2-butanone (methyl isopropyl ketone); 4-methyl-2-pentanone (methyl isobutyl ketone); 2-hexanone (methyl *n*-butyl ketone); 3-methyl-2-pentanone (methyl *sec*-butyl ketone); 3,3-dimethyl-2-butanone (pinacolone); 2-heptanone (methyl amyl ketone); 5-methyl-2-hexanone (methyl isoamyl ketone); 2-octanone (methyl hexyl ketone); 4-hydroxy-4-methyl-2-pentanone (diacetone alcohol); 3-pentanone (diethyl ketone); 2,4-dimethyl-3-pentanone (diisopropyl ketone); 2,6-dimethyl-4-heptanone (diisobutyl ketone); 3-hexanone (ethyl propyl ketone); 3-heptanone (butyl ethyl ketone); 3-octanone (ethyl amyl ketone); 2,6,8-trimethyl-4-nonanone (isobutyl heptyl ketone); 3-buten-2-one (methyl vinyl ketone); 3-methyl-2-buten-2-one (methyl isopropenyl ketone); 4-methyl-3-penten-2-one (mesityl oxide); 4-methyl-4-penten-2-one (isomesityl oxide); 3,5,5-trimethyl-2-cyclohexen-1-one (isophorone); 3,5,5-trimethyl-3-cyclohexen-1-one (β-isophorone); 2,3-butanedione (diacetyl); 2,3-pentanedione; 2,4-pentanedione (acetylacetone); 2,5-hexanedione; cyclopentanone (adipic ketone); cyclohexanone (pimelic ketone); cycloheptanone; 3,3,5-trimethylcyclohexanone; acetophenone (methyl phenyl ketone); benzophenone (diphenyl ketone); 1-phenyl-2-propanone (phenylacetone); and propiophenone (phenyl ethyl ketone).

### REPRESENTATIVE 1,2-DIKETONES

2,3-pentanedione; 2,3-hexanedione; 3,4-hexanedione; 4-methyl-2,3-pentanedione; 3,4-heptanedione; 5-methyl-2,3-hexanedione; 2,3-octanedione; 4,5-octanedione; 2,5-dimethyl-3,4-heptanedione; 5-methyl-3,4-heptanedione; 6-methyl-3,4-heptanedione; 1,2-cyclopentanedione; 1,2-cyclohexanedione; benzil; 1-phenyl-1,2-propanedione; and 1,2-naphthalendione.

### REPRESENTATIVE 1,3-DIKETONES

2,4-hexanedione; 3,5-heptanedione; 2,4-heptanedione; 3,5-octanedione; 5-methyl-2,4-hexanedione; 2,6-dimethyl-3,5-heptanedione; 2-4-octanedione; 5,5-dimethyl-2,4-hexanedione; 6-methyl-2,4-heptanedione; 1,3-cyclopentanedione; 1,3-cyclohexanedione; 5,5-dimethyl-1,3-cyclohexanedione; 1-phenyl-1,3-butanedione; 1-phenyl-1,3-pentanedione; 1,3-diphenyl-1,3-propanedione; and 1-phenyl-2,4-pentanedione.

### REPRESENTATIVE CYCLIC KETONES, (CH₂)ₓ C = O

Cyclopropanone; cyclobutanone; cyclopentanone; cyclohexanone; cycloheptanone; cyclooctanone; cyclononanone; cyclodecanone; cycloundecanone; cyclododecanone; cyclotridecanone; cyclotetradecanone; cyclopentadecanone; cyclohexadecanone; cycloheptadecanone; cyclooctadecanone; cyclononadecanone; and cyclocosanone.

### REPRESENTATIVE AROMATIC KETONES

Aromatic ketones of industrial significance include acetophenone, propiophenone, and benzophenone.

Polar organic compounds containing one or more amine or amide functionalities that are suitable for use as intercalate monomers and/or as the organic liquid carrier (matrix monomer) in accordance with the present invention include all organic amines and/or amides, such as the alkylamines; aminocycloalkanes and substituted aminocycloalkanes; cycloaliphatic diamines; fatty amines; and fatty amides.

Amines and amides are suitable alone, or in admixture, as the intercalant monomer(s) and/or as the organic solvent carrier (matrix monomer), for intercalation of the phyllosilicate and/or for admixture with the exfoliated individual platelets of the layered material in producing the nanocomposite of the present invention. The amines and amides can be any primary, secondary and/or tertiary amines or amides; including the lower aliphatic amines; alkylamines; cycloaliphatic amines or aminocycloalkanes and substituted aminocycloalkanes; cycloaliphatic diamines; fatty amines; aromatic amines including methylenedianiline and phenylenediamines; diaminotoluenes; diarylamines; alkanolamines; aniline and its derivatives.

Examples of suitable amines that are useful as the intercalant monomer used for intercalation and exfoliation of the layered silicate materials, and/or as the polar organic carrier for admixture with the individual platelets in forming nanocomposite compositions are as follows:

### REPRESENTATIVE ALKYLAMINES

| **ALKYLAMINES** | **MOLECULAR FORMULA** | **SYNONYM OR COMMON ABBREVIATION** |
|---|---|---|
| methylamine | CH₅N | monomethylamine, aminomethane, MMA |
| dimethylamine | C₂H₇N | DMA |
| trimethylamine | C₃H₉N | N,N-dimethylmethanamine, TMA |
| ethylamine | C₂H₇N | monoethylamine, aminoethane, MEA |
| diethylamine | C₄H₁₁N | diethanamine, N-ethylethanamine, DEA |
| triethylamine | C₆H₁₅N | TEA |
| *n*-propylamine | C₃H₉N | mono-*n*-propylamine, 1-aminopropane, propanamine, MNPA |
| di-*n*-propylamine | C₆H₁₅N | N-propyl-1-propanamine, DNPA |
| tri-*n*-propylamine | C₉H₂₁N | N,N-dipropyl-1-propanamine, TNPA |
| isopropylamine | C₃H₉N | 2-aminopropane, MIPA |
| diisopropylamine | C₆H₁₅N | N-(1-methylethyl)-2-propanamine, DIPA |
| allylamine | C₃H₇N | monoallylamine, 3-aminopropene |
| diallylamine | C₆H₁₁N | |
| triallylamine | C₉N₁₅N | |
| *n*-butylamine | C₄H₁₁N | mono-*n*-butylamine, 1-aminobutane, MNBA |
| di-*n*-butylamine | C₈H₁₉N | N-butyl-1-butanamine, DNBA |
| tri-*n*-butylamine | C₁₂H₂₇N | TNBA |
| isobutylamine | C₄H₁₁N | monoisobutylamine, 1-amino-2-methylpropane, MIBA |
| diisobutylamine | C₈H₁₉N | 2-methyl-N-(2-methylpropyl)-1-propanamine, DIBA |
| triisobutylamine | C₁₂H₂₇N | TIBA |
| *sic*-butylamine | C₄H₁₁N | 2-aminobutane, 1-methylpropanamine |
| *t*-butylamine | C₄H₁₁N | 2-aminoisobutane, 1,1-dimethylethanamine, trimethylaminomethane |
| ethyl-*n*-butylamine | C₆H₁₅N | EBA |
| dimethyl-*n*-butylamine | C₆H₁₅N | DMBA |
| *n*-amylamine | C₅H₁₃N | |
| di-*n*-amylamine | C₁₀H₂₃N | dipentylamine, dipentanamine |
| tri-*n*-amylamine | C₁₅H₃₃N | tripentylamine, tripentanamine |

### REPRESENTATIVE PRIMARY AMINOCYCLOALKANES

| **CYCLOALIPHATIC AMINE** | **MOLECULAR FORMULA** |
|---|---|
| cyclopropylamine | C₃H₇N |
| cyclobutylamine | C₄H₉N |
| cyclopentylamine | C₅H₁₁N |
| cyclohexylamine | C₆H₁₃N |
| cycloheptylamine | C₇H₁₅N |
| cyclooctylamine | C₈H₁₇N |
| cyclododecylamine | C₁₂H₂₅N |

### REPRESENTATIVE SUBSTITUTED AMINOCYCLOALKANES

| **CYCLOALIPHATIC AMINE** | **MOLECULAR FORMULA** |
|---|---|
| 1-methylcyclohexylamine | C₇H₁₅N |
| 2-methylcyclohexylamine | C₇H₁₅N |
| (±) *cis*-2-methylcyclohexylamine | C₇H₁₅N |
| (±) *trans*-2-methylcyclohexylamine | C₇H₁₅N |
| (+) *t*-2-methylcyclohexylamine | C₇H₁₅N |
| (-) *t*-2-methylcyclohexylamine | C₇H₁₅N |
| 3-methylcyclohexylamine | C₇H₁₅N |
| (±) *cis*-3-methylcyclohexylamine | C₇H₁₅N |
| (±) *trans*-3-methylcyclohexylamine | C₇H₁₅N |
| 4-methylcyclohexylamine | C₇H₁₅N |
| *cis*-4-methylcyclohexylamine | C₇H₁₅N |
| *trans*-4-methylcyclohexylamine | C₇H₁₅N |
| 3,3,5-trimethylcyclohexylamine | C₉H₁₉N |
| 4-*tert*-butylcyclohexylamine | C₁₀H₂₁N |
| N-methylcyclohexylamine | C₇H₁₅N |
| N-ethylcyclohexylamine | C₈H₁₇N |
| N,N-dimethylcyclohexylamine | C₈H₁₇N |
| N,N-diethylcyclohexylamine | C₁₀H₂₁N |
| dicyclohexylamine | C₁₂H₂₃N |
| N-methyldicyclohexylamine | C₁₃H₂₅N |
| 1-adamantylamine | C₁₀H₁₇N |

### REPRESENTATIVE CYCLOALIPHATIC DIAMINES

| **DIAMINE** | **MOLECULAR FORMULA** |
|---|---|
| *cis,trans*-1,2-cyclohexanediamine | C₆H₁₄N₂ |
| *cis*-1,2-cyclohexanediamine | C₆H₁₄N₂ |
| (±)*trans*-1,2-cyclohexanediamine | C₆H₁₄N₂ |
| (+)*trans*-1,2-cyclohexanediamine | C₆H₁₄N₂ |
| (-)*trans*-1,2-cyclohexanediamine | C₆H₁₄N₂ |
| *cis,trans*-1,3-cyclohexanediamine | C₆H₁₄N₂ |
| *cis*-1, 3-cyclohexanediamine | C₆H₁₄N₂ |
| *trans*-1,3-cyclohexanediamine | C₆H₁₄N₂ |
| methylcyclohexanediamine | C₇H₁₆N₂ |
| *cis,trans*-1,3-cyclohexanediamine,2-methyl | |
| *cis, trans*-1,3-cyclohexanediamine,4-methyl | |
| *cis,trans*-1,4-cyclohexanediamine | C₆H₁₄N₂ |
| *cis*-1,4-cyclohexanediamine | C₆H₁₄N₂ |
| *trans*-1,4-cyclohexanediamine | C₆H₁₄N₂ |
| *cis, trans*-1,8-methanediamine | C₁₀H₂₂N₂ |
| *cis,trans*-1,3-di(aminomethyl)cyclohexane | C₈H₁₈N₂ |
| *cis*-1,3-di(aminomethyl)cyclohexane | |
| *trans*-1,3-di(aminomethyl)cyclohexane | |
| *cis, trans*-1,4-di(aminomethyl) cyclohexane | C₈H₁₈N₂ |
| *cis*-1,4-di(aminomethyl) cyclohexane | C₈H₁₈N₂ |
| *trans*-1,4-di(aminomethyl) cyclohexane | |
| *cis, trans*-isophoronediamine | C₁₀H₂₂N₂ |
| methylenedi (cyclohexylamine) | C₁₃H₂₆N₂ |
| isopropylidenedi(cyclohexylamine) | C₁₅H₃₀N₂ |
| 3,3'-dimethylmethylene-di(cyclohexylamine) | C₁₅H₃₀N₂ |
| *cis, trans*-tricyclodecanediamine | C₁₂H₂₂N₂ |

### REPRESENTATIVE FATTY AMINES

| **FATTY AMINE** | **MOLECULAR FORMULA** |
|---|---|
| **REPRESENTATIVE PRIMARY AMINES** | |
| cocoalkylamines | |
| 1-dodecylamine | C₁₂H₂₇N |
| 1-hexadecylamine | C₁₆H₃₅N |
| 1-octadecylamine | C₁₈H₃₉N |
| oleylamine | C₁₈H₃₇N |
| soyaalkylamines | |
| tallowalkylamines | |
| hydrogenated tallowalkylamines | |
| | |

| **REPRESENTATIVE SECONDARY AMINES** | |
|---|---|
| dicocoalkylamines | |
| di-*n*-dodecylamine | C₂₄H₅₁N |
| di-*n*-hexadecylamine | C₃₂H₆₇N |
| di-*n*-octadecylamine | C₃₆H₇₅N |
| ditallowalkylamines | |
| dihydrogenated tallowalkylamines | |
| | |

| **REPRESENTATIVE TERTIARY AMINES** | |
|---|---|
| Alkyldimethyl | |
| cocoalkyldimethylamines | |
| dimethyl-*n*-octylamine | C₁₀H₂₃N |
| dimethyl-*n*-decylamine | C₁₂H₂₇N |
| dimethyl-*n*-dodecylamine | C₁₄H₃₁N |
| dimethyl-*n*-tetradecylamine | C₁₆H_{35leq}N |
| dimethyl-*n*-hexadecylamine | C₁₈H₃₉N |
| dimethyl-*n*-octadecylamine | C₂₀H₄₃N |
| dimethyloleylamine | C₂₀H₄₁N |

| Dialkylmethyl | |
|---|---|
| di-*n*-decylmethylamine | C₂₁H₄₅N |
| dicocoalkylmethylamines | |
| dihydrogenated tallowalkylmethylamines | |

| Trialkyl | |
|---|---|
| tri-*n*-octylamine | C₂₄H₅₁N |
| tri-*n*-dodecylamine | C₃₆H₇₅N |
| tri-*n*-hexadecylamines | |

### NANOCOMPOSITE USES

Fatty amines and chemical products derived from the amines are used in many industries. Uses for the nitrogen derivatives are as follows: fabric softeners, oil field chemicals, asphalt emulsifiers, petroleum additives, and mining.

Amine salts, especially acetate salts prepared by neutralization of a fatty amine with acetic acid, are useful as flotation agents (collectors), corrosion inhibitors, and lubricants.

A significant use of ethoxylated and propoxylated amines is as antistatic agents in the textile and plastics industry. Ethoxylates are also used in the agricultural area as adjuvants. Examples of uses for amine oxides include: detergent and personal care areas as a foam booster and stabilizer, as a dispersant for glass fibers, and as a foaming component in gas recovery systems.

Important uses for the diamines include: corrosion inhibitors, flotation agents, pigment wetting agents, herbicides, and asphalt emulsifiers.

Fatty amines and derivatives are widely used in the oil field, as corrosion inhibitors, surfactants, emulsifying/deemulsifying and gelling agents. In the mining industry, amines and diamines are used in the recovery and purification of minerals, flotation, and benefication. A significant use of fatty diamines is as asphalt emulsifiers for preparing asphalt emulsions. Diamines have also been used as epoxy curing agents, corrosion inhibitors, gasoline and fuel oil additives, and pigment wetting agents. In addition, derivatives of the amines, amphoterics, and long-chain alkylamines are used as anionic and cationic surfactants in the personal care industry.

### AROMATIC AMINES

**Aniline and its derivatives:** Aniline (benzenamine) is the simplest of the primary aromatic amines.

### REPRESENTATIVE ANILINE DERIVATIVES

| **CLASS OF COMPOUND AND COMMON NAME** | **MOLECULAR FORMULA** |
|---|---|
| salts | |
| aniline hydrochloride | C₆H₇N · ClH |
| aniline sulfate | C₆H₇N · ½H₂O₄S |

| N-alkyl, N-aryl | |
|---|---|
| N-methylaniline | C₇H₉N |
| N,N-dimethylaniline | C₈H₁₁N |
| N-ethylaniline | C₈H₁₁N |
| N,N-diethylaniline | C₁₀H₁₅N |
| N-benzyl-N-ethylaniline | C₁₅H₁₇N |
| diphenylamine | C₁₂H₁₁N |

| C-alkyl | |
|---|---|
| *o*-toluidine | C₇H₉N |
| *m*-toluidine | |
| *p*-toluidine | |
| 2,3-xylidine | C₈H₁₁N |
| 2,4-xylidine | |
| 2,5-xylidine | |
| 2,6-xylidine | |
| 3,4-xylidine | |
| 3,5-xylidine | |

| C-alkoxy | |
|---|---|
| *o*-anisidine | C₇H₉NO |
| *m*-anisidine | |
| *p*-anisidine | |
| *o*-phenetidine | C₈H₁₁NO |
| *p*-phenetidine | |
| *p*-cresidine | C₈H₁₁NO |

| N-acyl | |
|---|---|
| formanilide | C₇H₇NO |
| acetanilide | C₈H₉NO |
| acetoacetanilide | C₁₀H₁₁NO₂ |

| chloroanilines | |
|---|---|
| 2-chloroaniline | C₆H₆ClN |
| 3-chloroaniline | |
| 4-chloroaniline | |
| 2,5-dichloroaniline | C₆H₅Cl₂N |
| 3,4-dichloroaniline | |

| sulfonated anilines | |
|---|---|
| orthanilic acid | C₆H₇NO₃S |
| metanilic acid | |
| sulfanilic acid | |

| nitroanilines | |
|---|---|
| 2-nitroaniline | C₆H₆N₂O₂ |
| 3-nitroaniline | |
| 4-nitroaniline | |
| 2,4-dinitroaniline | C₆H₅N₃O₄ |
| 2,4,6-trinitroaniline | C₆H₄N₄O₆ |

### REPRESENTATIVE DIARYLAMINES

| **DIARYLAMINE** | **MOLECULAR FORMULA** |
|---|---|
| diphenylamine | C₁₂H₁₁N |
| 2-methyldiphenylamine | C₁₃H₁₃N |
| 3-methyldiphenylamine | C₁₃H₁₃N |
| 4-methyldiphenylamine | C₁₃H₁₃N |
| 4-(1,1-dimethylethyl)diphenylamine | C₁₆H₁₉N |
| 4-octyldiphenylamine | C₂₀H₂₇N |
| 4,4'-bis(1,1-dimethyethyl)diphenylamine | C₂₀H₂₇N |
| 4,4'-bis(1-phenylethyl)diphenylamine | C₂₈H₂₇N |
| 4,4'-bis(1-methyl-1-phenylethyl)diphenylamine | C₃₀H₃₁N |
| 4,4'-dioctyldiphenylamine | C₂₈H₄₃N |
| 2,2'-diethyldiphenylamine | C₁₆H₁₉N |
| 2,2'-bis(1-methylethyl)diphenylamine | C₁₈H₂₃N |
| 2,4,4'-tris(1-methyl-1-phenylethyl)diphenylamine | C₃₉H₄₁N |
| 4-hydroxydiphenylamine | C₁₂H₁₁NO |
| 4,4'-dimethoxydiphenylamine | C₁₄H₁₅NO₂ |
| N-phenyl-1-naphthylamine | C₁₆H₁₃N |
| N-[4-(1-methyl-1-phenylethyl)phenyl]-1-naphthylamine | C₂₅H₂₃N |
| N-phenyl-2-naphthylamine | C₁₆H₁₃N |
| N-[4-(1-methyl-1-phenylethyl)phenyl]-1-(1-methyl-1-phenylethyl)-2-naphthylamine | C₃₄H₃₃N |
| di-6-chrysenylamine | C₃₆H₂₃N |
| N-nitrosodiphenylamine | C₁₂H₁₀N₂O |
| N,N'-diphenyl-p-phenylenediamine | C₁₈H₁₆N₂ |
| N,N'-di-2-naphthyl-p-phenylenediamine | C₂₆H₂₀N₂ |
| 9H-carbazole | C₁₂H₉N |
| 9,10-dihydro-9,9-dimethylacridine | C₁₅H₁₅N |
| 10H-phenothiazine | C₁₂H₉NS |
| 8-octyl-10H-phenothiazine | C₂₀H₂₆NS |

Diarylamines are of the greatest industrial importance as stabilizers and antioxidants for polymers, stabilizers for explosives, polymerization inhibitors, and in dyes. Diarylamines function as rubber antioxidants by breaking the peroxidative chain reactions leading to rubber deterioration. Nearly all commercial synthetic rubbers, including neoprene, butyl, styrene-butadiene, and the acrylonitrile-butadiene rubbers, can be protected with about 1-2% of an alkylated diphenylamine.

Diphenylamine antioxidants are also widely used to stabilize roofing asphalts, lubricating greases, silicone enamels, polyamides, acetal resins, and other hydrocarbons. They have been used as corrosion inhibitors in glycol heat-exchanger fluids (antifreezes) and as volatile corrosion inhibitors for steel. They also stabilize sulfur trioxide.

### REPRESENTATIVE PHENYLENEDIAMINES

| **PHENYLENEDIAMINE** | **MOLECULAR FORMULA** |
|---|---|
| ortho | C₆H₈N₂ |
| meta | C₆H₈N₂ |
| para | C₆H₈N₂ |
| toluene-2,4-diamine | C₇H₁₀N₂ |
| toluene-2,6-diamine | C₇H₁₀N₂ |
| 2,3,5,6-tetramethyl-p- | C₁₀H₁₆N₂ |
| N,N-dimethyl-p- | C₈H₁₂N₂ |
| N,N-diethyl-p | C₁₀H₁₆N₂ |
| N,N'-bis(1-methylpropyl)-p- | C₁₄H₂₄N₂ |
| N,N'-bis (1-methylheptyl)-p- | C₂₂H₄₀N₂ |
| N,N'-bis(1-methylpropyl)-N,N'-dimethyl-p- | C₁₆H₂₈N₂ |
| N-phenyl-p- | C₁₂H₁₂N₂ |
| N,N'-diphenyl-p- | C₁₈H₁₆N₂ |
| N,N'-di-2-naphthalenyl-p- | C₂₆H₂₀N₂ |
| N-1-methylethyl-N'-phenyl-p- | C₁₅H₁₈N₂ |
| N-(1,3-dimethylbutyl) -N'-phenyl-p- | C₁₈H₂₄N₂ |
| N-cyclohexyl-N'-phenyl-p- | C₁₈H₂₂N₂ |

### REPRESENTATIVE ALKANOLAMINES

| **COMMON NAME** | **MOLECULAR FORMULA** |
|---|---|
| monoethanolamine (MEA) | C₂H₇NO |
| diethanolamine (DEA) | C₄H₁₁NO₂ |
| triethanolamine (TEA) | C₆H₁₅NO₃ |
| monoisopropanolamine (MIPA) | C₃H₉NO |
| diisopropanolamine (DIPA) | C₆H₁₅NO₂ |
| triisopropanolamine (TIPA) | C₉H₂₁NO₃ |
| mono-*sec*-butanolamine | C₄H₁₁NO |
| di-*sec*-butanolamine | C₈H₁₉NO₂ |
| tri-*sec*-butanolamine | C₁₂H₂₇NO₃ |

### REPRESENTATIVE SUBSTITUTED ALKANOLAMINES

| **COMMON NAME** | **MOLECULAR FORMULA** |
|---|---|
| dimethylethanolamine | C₄H₁₁NO |
| diethylethanolamine | C₆H₁₅NO |
| aminoethylethanolamine (AEEA) | C₄H₁₂N₂O |
| methylethanolamine | C₃H₉NO |
| butylethanolamine | C₆H₁₅NO |
| N-acetylethanolamine | C₄H₉NO₂ |
| phenylethanolamine | C₈H₁₁NO |
| dibutylethanolamine | C₁₀H₂₃NO |
| diisopropylethanolamine | C₈H₁₉NO |
| phenylethylethanolamine | C₁₀H₁₅NO |
| methyldiethanolamine | C₅H₁₃NO₂ |
| ethyldiethanolamine | C₆H₁₅NO₂ |
| phenyldiethanolamine | C₁₀H₁₅NO₂ |
| dimethylisopropanolamine | C₅H₁₃NO |
| N-(2-hydroxypropyl)ethylenediamine | C₅H₁₄N₂O |

Alkanolamines and their derivatives are used in a wide variety of household and industrial applications. Nonionic surfactants (alkanolamides) can be formed by the reaction of alkanolamines with fatty acids, at elevated temperatures. The amides can be liquid, water-soluble materials as produced from a 2:1 ratio, or solid, poorly water-soluble materials, or "super" amides as produced from a 1:1 ratio of reactants. These products are useful as foam stabilizers, and aid cleaning in laundry detergents, dishwashing liquids, shampoos, and cosmetics. They are also used as antistatic agents, glass coatings, fuel gelling agents, drilling mud stabilizers, demulsifiers, and in mining flotation. Reaction of alkanolamides with a fatty acid at room temperature produces neutral alkanolamine soaps. Alkanolamine soaps are found in cosmetics, polishes, metalworking fluids, textile applications, agricultural products, household cleaners, and pharmaceuticals.

### Alkylalkanolamines:

Aminoethylethanolamine and its derivatives are used in textiles, detergents, fabric softeners, chelating agents, water treating, petroleum, oil field and gas conditioning products, agricultural and pharmaceutical products, emulsifiers, mining chemicals, corrosion inhibitors, and surfactants for cosmetics.

Dimethylethanolamine, diethylethanolamine, and their derivatives are used in pesticides, corrosion inhibitors, drugs and pharmaceuticals, emulsification, paints and coatings, metal fabrication and finishing, petroleum and petroleum products, and plastic resins.

The amides of any of the above amines including, primary, secondary and tertiary amides are useful in accordance with the present invention as intercalant monomers and/or as polar organic carriers that the individual phyllosilicate platelets are dispersed in. Representative primary fatty amides are as follows:

### PRIMARY FATTY AMIDE (RCONH₂)

| **Common Name** | **Molecular Formula** | **IUPAC Name** |
|---|---|---|
| **ALKYL** | | |
| lauramide | C₁₂H₂₅NO | dodecylamide |
| myristamide | C₁₄H₂₉NO | tetradecylamide |
| palmitamide | C₁₆H₃₃NO | hexadecylamide |
| stearamide | C₁₈H₃₇NO | |

| **ALKENYL** | | |
|---|---|---|
| palmitoleamide | C₁₆H₃₁NO | hexadecenamide |
| oleamide | C₁₈H₃₅NO | 9-octadecenamide |
| linoleamide | C₁₈H₃₃NO | 9,12-octadecadienamide |

Polar organic compounds containing one or more ether or ester functionalities that are suitable for use as intercalate monomers and/or as the organic liquid carrier (matrix monomer) in accordance with the present invention include all organic ethers and/or esters, such as the saturated, unsaturated, cyclic, aromatic, and carboxylic ethers and esters.

The preferred monomer intercalants are esters that are alkylated derivatives of carboxylic and dicarboxylic acids, particularly plasticizers, such as di-2-ethylhexyl phthalate (DOP) and di-2-ethylhexyl succinate (DOS).

Other alkylated dicarboxylic acid ester derivatives include the following structures, derived from the identified dicarboxylic acid, wherein R₁ and R₂, the same or different, are aliphatic straight or branched-chain alkyl groups of C₁ - C₂₄, preferably C₆ - C₁₈:

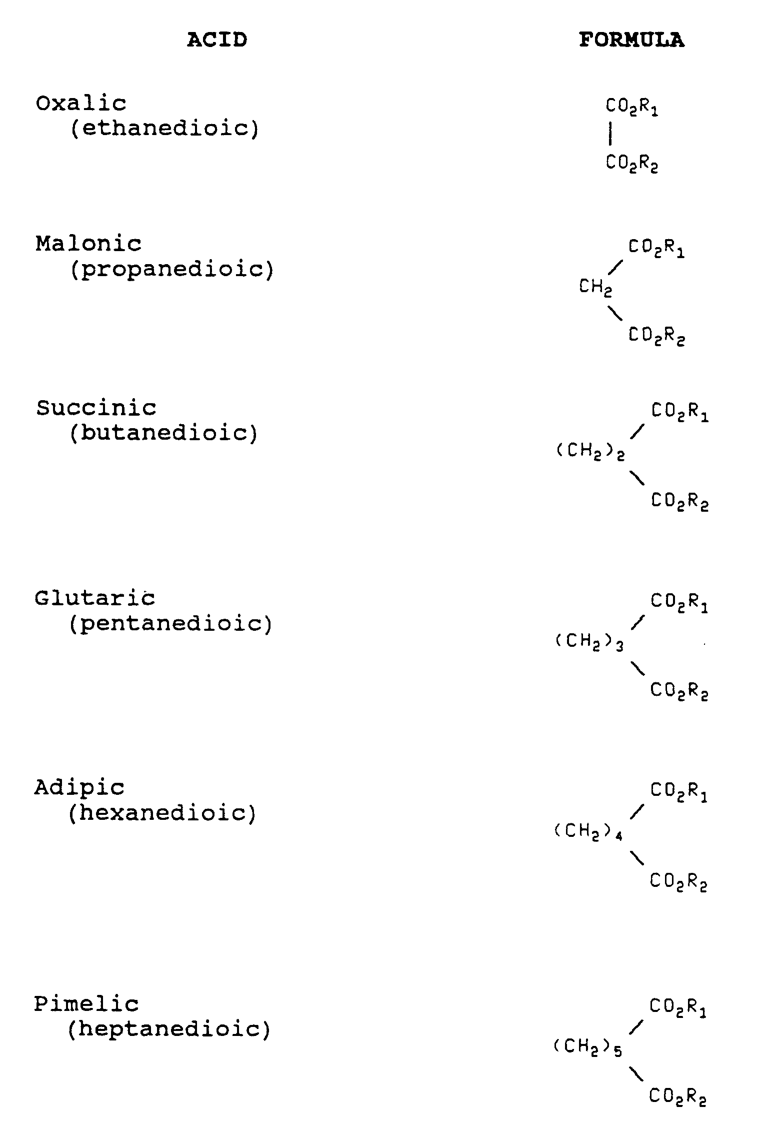

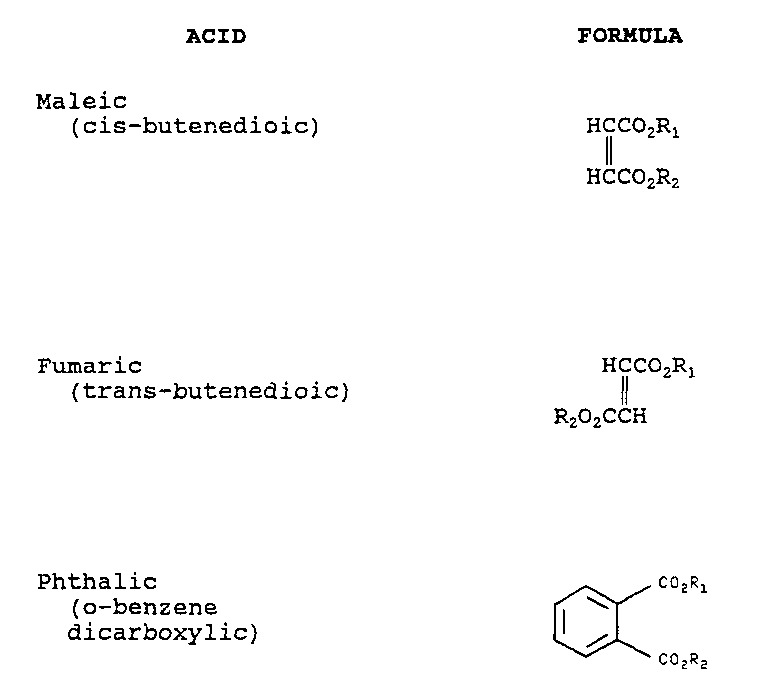

### REPRESENTATIVE ESTERS

Other useful, representative esters include methyl formate; ethyl formate; butyl formate; methyl acetate; ethyl acetate; vinyl acetate; propyl acetate; isopropyl acetate; butyl acetate; isobutyl acetate; sec-butyl acetate; *t*-butyl acetate; pentyl acetate; isoamyl acetate; *sec*-hexyl acetate; 2-ethylhexyl acetate; ethylene glycol diacetate; 2-methoxyethyl acetate; 2-ethoxyethyl acetate; 2-butoxyethyl acetate; 2-(2-ethoxyethoxy) ethyl acetate; 2-(2-butoxyethoxy) ethyl acetate; benzyl acetate; glyceryl triacetate; ethyl 3-ethoxypropionate; glyceryl tripropionate; methyl acrylate; ethyl acrylate; butyl acrylate; 2-ethylhexyl acrylate; methyl methacrylate; methyl butyrate; ethyl butyrate; butyl butyrate; methyl isobutyrate; ethyl isobutyrate; isobutyl isobutyrate; methyl stearate; ethyl stearate; butyl stearate; dodecyl stearate; hexadecyl stearate; dimethyl maleate; dimethyl oxalate; dimethyl adipate; diethyl adipate; di(2-ethylhexyl) adipate; methyl benzoate; ethyl benzoate; methyl salicylate; ethyl salicylate; dimethyl phthalate; diethyl phthalate; dibutyl phthalate; di(2-ethylhexyl) phthalate; dimethyl isophthalate; dimethyl terephthalate; methyl anthranilate; benzyl cinnamate; dimethyl carbonate; diethyl carbonate; and mixtures thereof.

### REPRESENTATIVE CARBOXYLIC ESTERS

### Plasticizers

Phthalic anhydride esters, such as dibutyl phthalate (including diisobutyl phthalate); diisononyl phthalate; dimethyl phthalate (including dimethyl isophthalate); and dioctyl phthalates;
Trimellitic acid esters;
Adipic acid esters, such as di(2-ethylhexyl) adipate; and diisodecyl adipate;
Epoxidized esters; Butyl oleate;
Sebacic acid esters, such as dibutyl sebacate;
Stearic acid esters, such as isobutyl stearate.

### Surface-Active Agents

Carboxylic acid esters; and anhydrosorbitol esters, such as anhydrosorbitol monolaurate; anhydrosorbitol monooleate; and anhydrosorbitol monostearate.

Diethylene glycol esters, such as diethylene glycol monolaurate.

Ethoxylated anhydrosorbitol esters, such as ethoxylated anhydrosorbitol monolaurate; ethoxylated anhydrosorbitol monooleate; ethoxylated anhydrosorbitol monostearate; ethoxylated anhydrosorbitol tristearate; ethylene glycol distearate; and ethylene glycol monostearate.

Glycerol esters, such as glycerol dilaurate; glycerol monooleate; and glycerol monostearate.

Ethoxylated natural fats and oils, such as ethoxylated castor oil, ethoxylated hydrogenated castor oil; and ethoxylated lanolin.

Poly(ethylene glycol) esters, such as poly(ethylene glycol) diester of tall oil acids; poly(ethylene glycol dilaurate); poly(ethylene glycol dioleate); poly(ethylene glycol distearate); poly(ethylene glycol monolaurate); poly(ethylene glycol monooleate); poly(ethylene glycol monopalmitate); poly(ethylene glycol monostearate); poly(ethylene glycol) sesquiester of tall oil acids; poly(glycerol monooleate); poly(glycerol monostearate); and 1,2-propanediol monostearate.

### Flavor And Perfume Materials

Representative carboxylic esters which are flavor and perfume materials are benzyl benzoate; phenethyl isobutyrate; 2-phenethyl phenylacetate; cedryl acetate; citronellyl acetate; citronellyl formate; and 3,7-dimethyl-*cis*-2,6-octadienol, acetate (neryl acetate).

### Miscellaneous Esters

Esters of monohydric alcohols, such as n-butyl acetate; butyl acrylate; dilauryl-3,3'-thiodipropionate; distearyl-3,3'-thiodipropionate; ethyl acetate (100% basis); ethyl acrylate; and 2-ethylhexyl acrylate.

Fatty acid esters, not included with plasticizers or surface-active agents include methyl esters of tallow; and myristyl myristate.

Isopropyl acetate; methyl methacrylate, monomer; propyl acetate; vinyl acetate, monomer.

Polyhydric alcohol esters, such as 2-(2-butoxyethoxy) ethyl acetate; 2-butoxyethyl acetate; and glycerides, mixed C₁₄₋₁₈ and C₁₆₋₁₈, mono- and di-.

| **USES OF SOME SPECIFIC ESTERS** | |
|---|---|
| Name and structure | Use |
| methyl formate, HCOOCH₃ | raw material for production of formamide, dimethylformamide, and formic acid |
| methyl acetate, CH₃COOCH₃ | solvent for cellulose nitrate, cellulose acetate, and many resins and oils; used in the manufacture of artificial leather; raw material for production of acetic anhydride via carbonylation |
| ethyl acetate, CH₃COOC₂H₅ | primarily as a solvent for various resins in protective coatings; also used extensively in formulating printing inks and adhesives; new applications include its uses as a process solvent in the pharmaceutical industry and as an extraction solvent in food processing; as a substitute for methyl ethyl ketone (MEK) in many applications |

| Name and structure | Use |
|---|---|
| propyl acetate, CH₃COOCH₂CH₂CH₃ | good solvent for cellulose nitrate, chlorinated rubber, and heat-reactive phenolics; principal use is as a printing ink solvent |
| isopropyl acetate, CH₃COOCH(CH₃)₂ | active solvent for many synthetic resins, such as ethylcellulose, cellulose acetate butyrate, cellulose nitrate, some vinyl copolymers, polystyrene, and methacrylate resins; as a solvent for printing ink; like propyl acetate, it can also be used in the recovery of acetic acid from dilute aqueous solutions |
| butyl acetate, CH₃COO(CH₂)₃CH₃ | excellent solvent for inks and lacquers because of its high blush resistance and evaporation rate; widely used as solvent in paints, thinner, video tape binders, and extraction of pharmaceuticals; also used as a perfume ingredient and as a component in synthetic flavors such as apricot, banana, butter, pear, quince, pineapple, grenadine, butterscotch, and raspberry; also a cleaning solvent for silicon wafers |
| isobutyl acetate, CH₃COOCH₂CH(CH₃)₂ | resembles butyl acetate and methyl isobutyl ketone (4-methyl-2-pentanone) and can be used interchangeably for these solvents in many formulations; also a component in synthetic flavors of apple, apricot, banana, butter, mirabelle plum, pineapple, rum, and strawberry |
| amyl acetates, CH₃COOC₅H₁₁ | amyl acetate and mixed amyl acetates (a mixture of normal, secondary, and isoamyl acetates) are used as lacquer solvents, as extractants in penicillin manufacture, and in the production of photographic film, leather polishes, dry-cleaning preparations, and flavoring agents; mixed *sec*-amyl acetates are used as solvents for cellulose compounds and in the production of leather finishes, textile sizes, and printing compounds; isoamyl acetates are used as solvents and in flavorings and perfumes |
| 2-ethylhexyl acetate, CH₃COOCH₂CH(C₂H₅)(CH₂)₃CH₃ | high boiling retarder solvent with limited water solubility used to promote flow of and retard blushing in lacquers, emulsions, and silk-screen inks, and as a flow-control agent in baking enamels; also used as a dispersant for vinyl organosols, and as a coalescing aid for latex paints |
| 2-butoxyethyl acetate, CH₃COOCH₂CH₂OC₄H₉ | slow-evaporating glycol ether ester useful as a coalescing aid in poly(vinyl acetate) emulsion system; also used as a retarder solvent in lacquers, enamels, and printing inks |
| 2-(2-butoxyethoxy) ethyl acetate, CH₃CO(OCH₂CH₂)₂OC₄H₉ | solvent in printing inks and high bake enamels; also used as a coalescing aid in latex paints, in silk-screen inks, and as a component in polystyrene coatings for decals |
| 1-methoxy-2-propyl acetate, CH₃CH(OCOCH₃)CH₂OCH₃ | solvent in inks, ink remover, paints, automotive coatings, and photoresist; also a substitute for 2-ethoxyethyl acetate in many applications |
| benzyl acetate, CH₃COOCH₂C₆H₅ | component of the extract of gardenia, hyacinth, and ylang-ylang, and the main component of extract of jasmine; most benzyl acetate is used in soap odors, but it is also popular for other perfumes and is used to a minor extent in flavors |
| ethyl 3-ethoxypropionate, C₂H₅OCH₂CH₂COOC₂H₅ | linear ether ester with excellent solvent properties for many of the polymers and resins used in coating industry; provides lower solution viscosity than many other retarder solvents of similar evaporation rate, and it can be a replacement for 2-ethoxyethyl acetate |
| isobutyl isobutyrate, (CH₃)₂CHCOOCH₂CH(CH₃)₂ | a retarder solvent in wood lacquers, automotive coatings, metal coatings, and a variety of thinner blends; also used in high solids coatings because of its low surface tension, which improves surface characteristics; its distinct odor and flavor make it an interesting material for the formulation of perfumes, and as a bulk component of flavor essences |
| 2,2,4-trimethyl-1,3-pentanediol monoisobutyrate | widely used as a coalescing aid in latex paints, effective with a broad range of latex emulsion systems; retarder solvent for high solid coatings, and a sweetener in letterpress and lithographic inks to improve solvent activity of ink's solvent system |
| butyl stearate, CH₃(CH₂)₁₆COO(CH₂)₃CH₃ | used for compounding lubricating oils, as a lubricant for the textile and molding trade, in special lacquers, and as a waterproofing agent; in the cosmetic and pharmaceutical fields, it is used in vanishing creams, ointments, rouges, lipsticks, and nail polishes; its oily characteristics have made it of particular value in polishes and coatings that are to be polished |
| di(2-ethylhexyl)adipate, [CH₂CH₂COOCH₂CH(C₂H₅)C₄H₉]₂ | plasticizer to impart low temperature flexibility to PVC formulations, particularly in vinyl meat-wrapping film |
| benzyl benzoate, C₆H₅COOCH₂C₆H₅ | used in perfumery as a fixative, as a solvent for synthetic musks, and in confectionery and chewing gum flavors; also used in medicine and cosmetics and as plasticizer, insect repellent, and dye carrier |
| methyl salicylate, 2-OHC₆H₄COOCH₃ | main component of wintergreen oil and occurs in small quantities in other essential oils and fruit; used primarily for the relief of muscular aches, articular rheumatism, and neuralgia; as a flavor and fragrance agent, it is used in confectionery, dentifrices, cosmetics, and in perfumes; also used as a dye carrier and uv light stabilizer in acrylic resins |
| benzyl salicylate | widely used in soap and cosmetic industry as fragrance; also effective in absorbing uv light, and can be used in protective sunscreen lotions |
| methyl 4-hydroxybenzoate | broad spectrum of antimicrobial activity, low levels of toxicity, excellent stability and inertness; used as preservative in cosmetic formulations, general-purpose cleaners, disinfectants, and mouth wash and contact lens cleaning solutions; also used as food additive and pharmaceutical preservative |
| methyl cinnamate, C₆H₅CH=CHCOOCH₃ | fragrance in soaps, perfumes, and confectioneries |
| 2-ethylhexyl 4-methoxycinnamate | absorbs uv rays effectively; thus about 75% of all sunscreen formulations use it; usually nonallergenic and nonstaining |
| dimethyl phthalate | raw material for polyesters; also used as plasticizer, mosquito repellent, dye carrier, and in hair sprays |
| dimethyl terephthalate | raw material for polyesters such as poly(ethylene terephthalate), poly(butylene terephthalate), and unsaturated polyester |
| di(2-ethylhexyl) phthalate | plasticizer; also used as an insulating fluid in electrical transformers and pressure-sensitive printing |

Ethers suitable as the intercalant monomer and/or as the polar organic carrier (Matrix Monomer) containing dispersed, individual silicate platelets, in accordance with the present invention, are compounds of the general formula Ar-O-Ar', Ar-O-R, and R-O-R' where Ar is an aryl group and R is an alkyl group. If the two R or Ar groups are identical, the compound is a symmetrical ether. Examples of symmetrical ethers are (di)methyl ether, CH₃OCH₃, and (di)phenyl ether, C₆H₅OC₆H₅; examples of unsymmetrical ethers are methyl ethyl ether, CH₃OCH₂CH₃, and methyl tert-butyl ether, CH₃OC(CH₃)₃.

### REPRESENTATIVE ETHERS

### Representative Saturated Ethers

### Symmetrical

Representative saturated ethers which are symmetrical are methyl; 2-methoxyethyl; ethyl; 1-chloroethyl; *n*-propyl; isopropyl; *n*-butyl; *sec*-butyl; isobutyl; *tert*-butyl; *n*-amyl; isoamyl; *sec*-amyl; *n*-hexyl; *n*-heptyl; *n*-octyl.

### Unsymmetrical

Representative saturated ethers which are unsymmetrical are methyl *n*-propyl; methyl isopropyl; methyl *n*-butyl; methyl isobutyl; methyl *tert*-butyl; methyl *tert*-amyl; ethyl isopropyl; ethyl *n*-butyl; ethyl *tert*-butyl; ethyl *n*-amyl; ethyl *tert*-amyl; isopropyl *tert*-butyl; 2-ethoxyethanol; 2-(2-ethoxy)ethoxyethanol; vinyl; vinyl methyl; vinyl ethyl; vinyl *n*-butyl; allyl; bis(2-methallyl); allyl ethyl; allyl glycidyl; ethynyl ethyl; ethynyl butyl.

### Representative Cyclic Ethers

Representative cyclic ethers are ethylene oxide; 1,2-propylene oxide; 1,3-propylene oxide; tetrahydrofuran; furan; tetrahydropyran; 1,4-dioxane.

### Representative Aromatic Ethers

Representative aromatic ethers are methyl phenyl ether; 4-methoxytoluene; ethyl phenyl ether; 1-methoxy-4-*trans*-propenylbenzene; 1-methoxy-4-allylbenzene phenyl; 2-methoxyphenol; 1,2-dimethoxybenzene; 1,4-dimethoxybenzene; 2-methoxy-4-allylphenol; 1,2-dimethoxy-4-allylbenzene; 1-allyl-3,4-methylenedioxybenzene; 1-propenyl-3,4-methylenedioxybenzene; 2-methoxy-4-*cis*-propenylphenol; 2-methoxy-4-*trans*-propenylphenol; 1-benzyloxy-2-methoxy-4-*trans*-propenylbenzene; butyrated hydroxyanisole (BHA), a mixture of: 2-*tert*-butyl-4-methoxyphenol and 3-*tert*-butyl-4-methoxyphenol.

In accordance with another embodiment of the present invention, the intercalates can be exfoliated and dispersed into one or more melt-processible thermoplastic and/or thermosetting matrix oligomers or polymers, or mixtures thereof. Matrix polymers for use in this embodiment of the process of this invention may vary widely, the only requirement is that they are melt processible. In this embodiment of the invention, the polymer includes at least ten (10), preferably at least thirty (30) recurring monomeric units. The upper limit to the number of recurring monomeric units is not critical, provided that the melt index of the matrix polymer under use conditions is such that the matrix polymer forms a flowable mixture. Most preferably, the matrix polymer includes from at least about 10 to about 100 recurring monomeric units. In the most preferred embodiments of this invention, the number of recurring units is such that the matrix polymer has a melt index of from about 0.01 to about 12 grams per 10 minutes at the processing temperature.

Thermoplastic resins and rubbers for use as matrix polymers in the practice of this invention may vary widely. Illustrative of useful thermoplastic resins, which may be used alone or in admixture, are polyactones such as poly(pivalolactone), poly(caprolactone) and the like; polyurethanes derived from reaction of diisocyanates such as 1,5-naphthalene diisocyanate; p-phenylene diisocyanate, m-phenylene diisocyanate, 2,4-toluene diisocyanate, 4,4'-diphenylmethane diisocyanate, 3,3'-dimethyl-4,4'-diphenyl-methane diisocyanate, 3,3-'dimethyl-4,4'-biphenyl diisocyanate, 4,4'-diphenylisopropylidene diisocyanate, 3,3'-dimethyl-4,4'-diphenyl diisocyanate, 3,3'-dimethyl-4,4'-diphenylmethane diisocyanate, 3,3'-dimethoxy-4,4'-biphenyl diisocyanate, dianisidine diisocyanate, toluidine diisocyanate, hexamethylene diisocyanate, 4,4'-diisocyanatodiphenylmethane and the like and linear long-chain diols such as poly(tetramethylene adipate), poly(ethylene adipate), poly(1,4-butylene adipate), poly(ethylene succinate), poly(2,3-butylene succinate), polyether diols and the like; polycarbonates such as poly[methane bis(4-phenyl) carbonate], poly[1,1-ether bis(4-phenyl) carbonate], poly[diphenylmethane bis(4-phenyl)carbonate], poly[1,1-cyclohexane bis(4-phenyl)carbonate] and the like; polysulfones; polyethers; polyketones; polyamides such as poly(4-amino butyric acid), poly(hexamethylene adipamide), poly(6-aminohexanoic acid), poly(m-xylylene adipamide), poly(p-xylyene sebacamide), poly(2,2,2-trimethyl hexamethylene terephthalamide), poly(metaphenylene isophthalamide) (NOMEX), poly(p-phenylene terephthalamide) (KEVLAR), and the like; polyesters such as poly(ethylene azelate), poly(ethylene-1,5-naphthalate, poly(1,4-cyclohexane dimethylene terephthalate), poly(ethylene oxybenzoate) (A-TELL), poly(para-hydroxy benzoate) (EKONOL), poly(1,4-cyclohexylidene dimethylene terephthalate) (KODEL) (cis), poly(1,4-cyclohexylidene dimethylene terephthalate) (Kodel) (trans), polyethylene terephthlate, polyburylene terephthalate and the like; poly(arylene oxides) such as poly(2,6-dimethyl-1,4-phenylene oxide), poly(2,6-diphenyl-1,4-phenylene oxide) and the like; poly(arylene sulfides) such as poly(phenylene sulfide) and the like; polyetherimides; vinyl polymers and their copolymers such as polyvinyl acetate, polyvinyl alcohol, polyvinyl chloride; polyvinyl butyral, polyvinylidene chloride, ethylene-vinyl acetate copolymers, and the like; polyacrylics, polyacrylate and their copolymers such as polyethyl acrylate, poly(n-butyl acrylate), polymethylmethacrylate, polyethyl methacrylate, poly(n-butyl methacrylate), poly(n-propyl methacrylate), polyacrylamide, polyacrylonitrile, polyacrylic acid, ethylene-acrylic acid copolymers, ethylene-vinyl alcohol copolymers acrylonitrile copolymers, methyl methacrylate-styrene copolymers, ethylene-ethyl acrylate copolymers, methacrylated butadiene-styrene copolymers and the like; polyolefins such as low density poly(ethylene), poly(propylene), chlorinated low density poly(ethylene), poly(4-methyl-1-pentene), poly(ethylene), poly(styrene), and the like; ionomers; poly(epichlorohydrins); poly(urethane) such as the polymerization product of diols such as glycerin, trimethylol-propane, 1,2,6-hexanetriol, sorbitol, pentaerythritol, polyether polyols, polyester polyols and the like with a polyesocyanate such as 2,4-tolylene diisocyanate, 2,6-tolylene diisocyante, 4,4'-diphenylmethane diisocyanate, 1,6-hexamethylene diisocyanate, 4,4'-dicycohexylmethane diisocyanate and the like; and polysulfones such as the reaction product of the sodium salt of 2,2-bis(4-hydroxyphenyl) propane and 4,4'-dichlorodiphenyl sulfone; furan resins such as poly(furan); cellulose ester plastics such as cellulose acetate, cellulose acetate butyrate, cellulose propionate and the like; silicones such as poly(dimethyl siloxane), poly(dimethyl siloxane co-phenylmethyl siloxane), and the like; protein plastics; and blends of two or more of the foregoing.

Vulcanizable and thermoplastic rubbers useful as matrix polymers in the practice of this embodiment of the invention may also vary widely. Illustrative of such rubbers are brominated butyl rubber, chlorinate butyl rubber, polyurethane elastomers, fluoroelastomers, polyester elastomers, polyvinylchloride, butadiene/acrylonitrile elastomers, silicone elastomers, poly(butadiene), poly(isobutylene), ethylene-propylene copolymers, ethylene-propylene-diene terpolymers, sulfonated ethylene-propylene-diene terpolymers, poly(chloroprene), poly(2,3-dimethylbutadiene), poly(butadiene-pentadiene), chlorosulphonated poly(ethylenes), poly(sulfide)- elastomers, block copolymers, made up of segments-of glassy or crystalline blocks such as poly(styrene), poly(vinyl-toluene), poly(t-butyl styrene), polyesters and the like and the elastomeric blocks such as poly(butadiene), poly(isoprene), ethylene-propylene copolymers, ethylene-butylene copolymers, polyether and the like as for example the copolymers in poly(styrene)-poly(butadiene)-poly(styrene) block copolymer manufactured by Shell Chemical Company under the trade name KRATON®.

Useful thermosetting resins useful as matrix polymers include, for example, the polyamides; polyalkylamides; polyesters; polyurethanes; polycarbonates; polyepoxides; and mixtures thereof.

Most preferred thermoplastic polymers for use as a matrix polymer are thermoplastic polymers such as polyamides, polyesters, and polymers of alpha-beta unsaturated monomers and copolymers. Polyamides which may be used in the process of the present invention are synthetic linear polycarbonamides characterized by the presence of recurring carbonamide groups as an integral part of the polymer chain which are separated from one another by at least two carbon atoms. Polyamides of this type include polymers, generally known in the art as nylons, obtained from diamines and dibasic acids having the recurring unit represented by the general formula:

-NHCOR¹³COHNR¹⁴-

in which R¹³ is an alkylene group of at least 2 carbon atoms, preferably from about 2 to about 11, or arylene having at least about 6 carbon atoms, preferably about 6 to about 17 carbon atoms; and R¹⁴ is selected from R¹³ and aryl groups. Also, included are copolyamides and terpolyamides obtained by known methods, for example, by condensation of hexamethylene diamine and a mixture of dibasic acids consisting of terephthalic acid and adipic acid. Polyamides of the above description are well-known in the art and include, for example, the copolyamide of 30% hexamethylene diammonium isophthalate and 70% hexamethylene diammonium adipate, poly(hexamethylene adipamide) (nylon 6,6), poly(hexamethylene sebacamide) (nylon 6, 10), poly(hexamethylene isophthalamide), poly(hexamethylene terephthalamide), poly(heptamethylene pimelamide) (nylon 7,7), poly(octamethylene suberamide) (nylon 8,8), poly(nonamethylene azelamide) (nylon 9,9) poly(decamethylene azelamide) (nylon 10,9), poly(decamethylene sebacamide) (nylon 10,10), poly[bis(4-amino cyclohexyl)methane-1,10-decane-carboxamide)], poly(m-xylene adipamide), poly(p-xylene sebacamide), poly(2,2,2-trimethyl hexamethylene terephthalamide), poly(piperazine sebacamdie), poly(p-phenylene terephthalamide), poly(metaphenylene isophthalamide) and the like.

Other useful polyamides for use as a matrix polymer are those formed by polymerization of amino acids and derivatives thereof, as, for example, lactams. Illustrative of these useful polyamides are poly(4-aminobutyric acid) (nylon 4), poly(6-aminohexanoic acid) (nylon 6), poly(7-aminoheptanoic acid) (nylon 7), poly(8-aminooctanoic acid) (nylon 8), poly(9-aminononanoic acid) (nylon 9), poly(10-amino-decanoic acid) (nylon 10), poly(11-aminoundecanoic acid) (nylon 11), poly(12-aminododecanoic acid) (nylon 12) and the like.

Preferred polyamides for use as a matrix polymer are poly(caprolactam), poly(12-aminododecanoic acid) and poly(hexamethylene adipamide).

Other matrix or host polymers which may be employed in admixture with exfoliates to form nanocomposites are linear polyesters. The type of polyester is not critical and the particular polyesters chosen for use in any particular situation will depend essentially on the physical properties and features, i.e., tensile strength, modulus and the like, desired in the final form. Thus, a multiplicity of linear thermoplastic polyesters having wide variations in physical properties are suitable for use in admixture with exfoliated layered material platelets in manufacturing nanocomposites in accordance with this invention.

The particular polyester chosen for use as a matrix polymer can be a homo-polyester or a copolyester, or mixtures thereof, as desired. Polyesters are normally prepared by the condensation of an organic dicarboxylic acid and an organic diol, and, the reactants can be added to the intercalates, or exfoliated intercalates for in situ polymerization of the polyester while in contact with the layered material, before or after exfoliation of the intercalates.

Polyesters which are suitable for use as matrix polymers in this embodiment of the invention are those which are derived from the condensation of aromatic, cycloaliphatic, and aliphatic diols with aliphatic, aromatic and cycloaliphatic dicarboxylic acids and may be cycloaliphatic, aliphatic or aromatic polyesters.

Exemplary of useful cycloaliphatic, aliphatic and aromatic polyesters which can be utilized as matrix polymers in the practice of this embodiment of the invention are poly(ethylene terephthalate), poly(cyclohexlenedimethylene terephthalate), poly(ethylene dodecate), poly(butylene terephthalate), poly[ethylene(2,7-napthalate)], poly(methaphenylene isophthalate), poly(glycolic acid), poly(ethylene succinate), poly(ethylene adipate), poly(ethylene sebacate), poly(decamethylene azelate), poly(decamethylene adipate), poly(decamethylene sebacate), poly(dimethylpropiolactone), poly(parahydroxybenzoate) (EKONOL), poly(ethylene oxybenzoate) (A-tell), poly(ethylene isophthalate), poly(tetramethylene terephthalate, poly(hexamethylene terephthalate), poly(decamethylene terephthalate), poly(1,4-cyclohexane dimethylene terephthalate) (trans), poly(ethylene 1,5-naphthalate), poly(ethylene 2,6-naphthalate), poly(1,4-cyclohexylidene dimethylene terephthalate), (KODEL) (cis), and poly(1,4-cyclohexylidene dimethylene terephthalate (KODEL) (trans).

Polyester compounds prepared from the condensation of a diol and an aromatic dicarboxylic acid are especially suitable as matrix polymers in accordance with this embodiment of the present invention. Illustrative of such useful aromatic carboxylic acids are terephthalic acid, isophthalic acid and a o-phthalic acid, 1,3-napthalene-dicarboxylic acid, 1,4-napthalenedicarboxylic acid, 2,6-napthalenedicarboxylic acid, 2,7-napthalene-dicarboxylic acid, 4,4'-diphenyldicarboxylic acid, 4,4'-diphenylsulfone-dicarboxylic acid, 1,1,3-trimethyl-5-carboxy-3-(p-carboxyphenyl)-idane, diphenyl ether 4,4'-dicarboxylic acid, bis-p(carboxy-phenyl) methane and the like. Of the aforementioned aromatic dicarboxylic acids, those based on a benzene ring (such as terephthalic acid, isophthalic acid, orthophthalic acid) are preferred for use in the practice of this invention. Among these preferred acid precursors, terephthalic acid is particularly preferred acid precursor.

The most preferred matrix polymer for incorporation with exfoliates manufactured in accordance with the present invention is a polymer selected from the group consisting of poly(ethylene terephthalate), poly(butylene terephthalate), poly(1,4-cyclohexane dimethylene terephthalate), a polyvinylimine, and mixtures thereof. Among these polyesters of choice, poly(ethylene terephthalate) and poly(butylene terphthalate) are most preferred.

Still other useful thermoplastic homopolymers and copolymer matrix polymers for forming nanocomposites with the exfoliates of the present invention are polymers formed by polymerization of alpha-beta-unsaturated monomers or the formula:

R¹⁵R¹⁶C=CH₂

wherein:
R¹⁵ and R¹⁶ are the same or different and are cyano, phenyl, carboxy, alkylester, halo, alkyl, alkyl substituted with one or more chloro or fluoro, or hydrogen. Illustrative of such preferred homopolymers and copolymers are homopolymers and copolymers of ethylene, propylene, vinylalcohol, acrylonitrile, vinylidene chloride, esters of acrylic acid, esters of methacrylic acid, chlorotrifluoroethylene, vinyl chloride and the like. Preferred are poly(propylene), propylene copolymers, poly(ethylene) and ethylene copolymers. More preferred are poly(ethylene) and poly(propylene).

The mixture may include various optional components which are additives commonly employed with polar organic liquids. Such optional components include nucleating agents, fillers, plasticizers, impact modifiers, chain extenders, plasticizers, colorants, mold release lubricants, antistatic agents, pigments, fire retardants, and the like. These optional components and appropriate amounts are well known to those skilled in the art.

The amount of intercalated and/or exfoliated layered material included in the liquid carrier or solvent compositions to form the viscous compositions suitable to deliver the carrier or some carrier-dissolved or carrier-dispersed active material, such as a pharmaceutical, may vary widely depending on the intended use and desired viscosity of the composition. For example, relatively higher amounts of intercalates, i.e., from about 10% to about 30% by weight of the total composition, are used in forming solvent gels having extremely high viscosities, e.g., 5,000 to 5,000,000 centipoises. Extremely high viscosities, however, also can be achieved with a relatively small concentration of intercalates and/or exfoliates thereof, e.g., 0.1% to 5% by weight, by adjusting the pH of the composition in the range of about 0-6 or about 10-14 and/or by heating the composition above room temperature, e.g., in the range of about 25°C to about 200°C, preferably about 75°C to about 100°C. It is preferred that the intercalate or platelet loading be less than about 10% by weight of the composition. Intercalate or platelet particle loadings within the range of about 0.01% to about 40% by weight, preferably about 0.05% to about 20%, more preferably about 0.5% to about 10% of the total weight of the composition significantly increases the viscosity of the composition. In general, the amount of intercalate and/or platelet particles incorporated into the carrier/solvent is less than about 20% by weight of the total composition, and preferably from about 0.05% to about 20% by weight of the composition, more preferably from about 0.01% to about 10% by weight of the composition, and most preferably from about 0.01% to about 5%, based on the total weight of the composition.

In accordance with an important feature of the present invention, the intercalate and/or platelet/carrier compositions of the present invention can be manufactured in a concentrated form, e.g., as a master gel, e.g, having about 10-90%, preferably about 20-80% intercalate and/or exfoliated platelets of layered material and about 10-90%, preferably about 20-80% carrier/solvent. The master gel can be later diluted and mixed with additional carrier or solvent to reduce the viscosity of the composition to a desired level.

The intercalates, and/or exfoliates thereof, are mixed with a carrier or solvent to produce viscous compositions of the carrier or solvent optionally including one or more active compounds, such as an antiperspirant compound, dissolved or dispersed in the carrier or solvent.

In accordance with an important feature of the present invention, a wide variety of topically-active compounds can be incorporated into a stable composition of the present invention. Such topically active compositions include cosmetic, industrial, and medicinal compounds that act upon contact with the skin or hair, or are used to adjust rhedogy of industrial greases and the like. In accordance with another important feature of the present invention, a topically-active compound can be solubilized in the composition of the present invention or can be homogeneously dispersed throughout the composition as an insoluble, particulate material. In either case topically-effective compositions of the present invention are resistant to composition separation and effectively apply the topically-active compound to the skin or hair. If required for stability, a surfactant can be included in the composition, such as any disclosed in Laughlin, et al. U.S. Pat. No. 3,929,678, hereby incorporated by reference. In general, the topically-effective compositions of the present invention demonstrate essentially no phase separation if the topically-active compound is solubilized in the compositions. Furthermore, if the topically-active compound is insoluble in the composition, the composition demonstrates essentially no phase separation.

The topically-active compounds can be a cosmetically-active compound, a medically-active compound or any other compound that is useful upon application to the skin or hair. Such topically-active compounds include, for example, antiperspirants, antidandruff agents, antibacterial compounds, antifungal compounds, anti-inflammatory compounds, topical anesthetics, sunscreens and other cosmetic and medical topically-effective compounds.

Therefore, in accordance with an important feature of the present invention, the stable topically-effective composition can include any of the generally-known antiperspirant compounds such as finely-divided solid astringent salts, for example, aluminum chlorohydrate, aluminum chlorohydrox, zirconium chlorohydrate, and complexes of aluminum chlorohydrate with zirconyl chloride or zirconyl hydroxychloride. In general, the amount of the antiperspirant compound, such as aluminum zirconium tetrachlorohydrex glycine in the composition can range from about 0.01% to about 50%, and preferably from about 0.1% to about 30%, by weight of the total composition.

Other topically-active compounds can be included in the compositions of the present invention in an amount sufficient to perform their intended function. For example, zinc oxide, titanium dioxide or similar compounds can be included if the composition is intended to be a sunscreen. Similarly, topically-active drugs, like antifungal compounds; antibacterial compounds; anti-inflammatory compounds; topical anesthetics; skin rash, skin disease and dermatitis medications; and anti-itch and irritation-reducing compounds can be included in the compositions of the present invention. For example, analgesics such as benzocaine, dyclonine hydrochloride, aloe vera and the like; anesthetics such as butamben picrate, lidocaine hydrochloride, zylocaine and the like; antibacterials and antiseptics, such as povidone-iodine, polymyxin b sulfate-bacitracin, zinc-neomycin sulfate-hydrocortisone, chloramphenicol, methylbenzethonium chloride, and erythromycin and the like; antiparasitics, such as lindane; deodorants, such as chlorophyllin copper complex, aluminum chloride, aluminum chloride hexahydrate, and methylbenzethonium chloride; essentially all dermatologicals, like acne preparations, such as benzoyl peroxide, erythromycin-benzoyl peroxide, clindamycin phosphate, 5,7-dichloro-8-hydroxyquinoline, and the like; anti-inflammatory agents, such as alclometasone dipropionate, betamethasone valerate, and the like; burn relief ointments, such as o-amino-p-toluenesulfonamide monoacetate and the like; depigmenting agents, such as monobenzone; dermatitis relief agents, such as the active steroids amcinonide, diflorasone diacetate, hydrocortisone, and the like; diaper rash relief agents, such as methylbenzethonium chloride and the like; emollients and moisturizers, such as mineral oil, PEG-4 dilaurate, lanolin oil, petrolatum, mineral wax and the like; fungicides, such as butocouazole nitrate, haloprogin, clotrimazole, and the like; herpes treatment drugs, such as 9-[(2-hydroxyethoxy)methyl]guanine; pruritic medications, such as alclometasone dipropionate, betamethasone valerate, isopropyl myristate MSD, and the like; psoriasis, seborrhea and scabicide agents, such as anthralin, methoxsalen, coal tar and the like; sunscreens, such as octyl p-(dimethylamino)benzoate, octyl methoxycinnamate, oxybenzone and the like; steroids, such as 2-(acetyloxy)-9-fluoro-1',2',3',4'-tetrahydro-11-hydroxypregna-1,4-dieno[16,17-b] naphthalene-3,20-dione, and 21-chloro-9-fluoro-1',2',3',4'-tetrahydro-11b-hydroxypregna-1,4-dieno[16z,17-b]naphthalene-3,20-dione. Any other medication capable of topical administration also can be incorporated in composition of the present invention in an amount sufficient to perform its intended function.

Eventual exfoliation of the intercalated layered material should provide delamination of at least about 90% by weight of the intercalated material to provide a more viscous composition comprising a carrier or solvent having monomer-complexed platelet particles substantially homogeneously dispersed therein. Some intercalates require a shear rate that is greater than about 10 sec⁻¹ for such relatively thorough exfoliation. Other intercalates exfoliate naturally or by heating, or by applying low pressure, e.g., 0.5 to 60 atmospheres above ambient, with or without heating. The upper limit for the shear rate is not critical. In the particularly preferred embodiments of the invention, when shear is employed for exfoliation, the shear rate is from greater than about 10 sec⁻¹ to about 20,000 sec⁻¹, and in the more preferred embodiments of the invention the shear rate is from about 100 sec⁻¹ to about 10,000 sec⁻¹.

When shear is employed for exfoliation, any method which can be used to apply a shear to the intercalant/carrier composition can be used. The shearing action can be provided by any appropriate method, as for example by mechanical means, by thermal shock, by pressure alteration, or by ultrasonics, all known in the art. In particularly useful procedures, the composition is sheared by mechanical methods in which the intercalate, with or without the carrier or solvent, is sheared by use of mechanical means, such as stirrers, Banbury® type mixers, Brabender® type mixers, long continuous mixers, and extruders. Another procedure employs thermal shock in which shearing is achieved by alternatively raising or lowering the temperature of the composition causing thermal expansions and resulting in internal stresses which cause the shear. In still other procedures, shear is achieved by sudden pressure changes in pressure alteration methods; by ultrasonic techniques in which cavitation or resonant vibrations which cause portions of the composition to vibrate or to be excited at different phases and thus subjected to shear. These methods of shearing are merely representative of useful methods, and any method known in the art for shearing intercalates may be used.

Mechanical shearing methods may be employed such as by extrusion, injection molding machines, Banbury® type mixers, Brabender® type mixers and the like. Shearing also can be achieved by introducing the layered material and intercalant monomer at one end of an extruder (single or double screw) and receiving the sheared material at the other end of the extruder. The temperature of the layered material/intercalant monomer composition, the length of the extruder, residence time of the composition in the extruder and the design of the extruder (single screw, twin screw, number of flights per unit length, channel depth, flight clearance, mixing zone, etc.) are several variables which control the amount of shear to be applied for exfoliation.

Exfoliation should be sufficiently thorough to provide at least about 80% by weight, preferably at least about 85% by weight, more preferably at least about 90% by weight, and most preferably at least about 95% by weight delamination of the layers to form two monomer layer tactoids that include three platelets or, more preferably, individual platelet particles that can be substantially homogeneously dispersed in the carrier or solvent. As formed by this process, the platelet particles or platelet multi-layer tactoids dispersed in the carrier or solvent have the thickness of the individual layers plus one to five monolayer thicknesses of complexed monomer, or small multiples less than about 10, preferably less than about 5 and more preferably less than about 3 of the layers, and still more preferably 1 or 2 layers. In the preferred embodiments of this invention, intercalation and delamination of every interlayer space is complete so that all or substantially all individual layers delaminate one from the other to form separate platelet particles for admixture with the carrier or solvent. The compositions can include the layered material as all intercalate, completely without exfoliation, initially to provide relatively low viscosities for transportation and pumping until it is desired to increase viscosity via easy exfoliation. In cases where intercalation is incomplete between some layers, those layers will not delaminate in the carrier or solvent, and will form platelet particles comprising those layers in a coplanar aggregate.

The effect of adding into a polar organic liquid carrier the nanoscale particulate dispersed platelet particles, derived from the intercalates formed in accordance with the present invention, typically is an increase in viscosity.

Molding compositions comprising a thermoplastic or thermosetting polymer containing a desired loading of platelets obtained from exfoliation of the intercalates manufactured according to the invention are outstandingly suitable for the production of sheets and panels having valuable properties. Such sheets and panels may be shaped by conventional processes such as vacuum processing or by hot pressing to form useful objects. The sheets and panels according to the invention are also suitable as coating materials for other materials comprising, for example, wood, glass, ceramic, metal or other plastics, and outstanding strengths can be achieved using conventional adhesion promoters, for example, those based on vinyl resins. The sheets and panels can also be laminated with other plastic films and this is preferably effected by co-extrusion, the sheets being bonded in the molten state. The surfaces of the sheets and panels, including those in the embossed form, can be improved or finished by conventional methods, for example by lacquering or by the application of protective films.

Matrix polymer/platelet composite materials are especially useful for fabrication of extruded films and film laminates, as for example, films for use in food packaging. Such films can be fabricated using conventional film extrusion techniques. The films are preferably from about 10 to about 100 microns, more preferably from about 20 to about 100 microns and most preferably from about 25 to about 75 microns in thickness.

The homogeneously distributed platelet particles, exfoliated in accordance with the present invention, and matrix polymer that form the nanocomposites of one embodiment of the present invention are formed into a film by suitable film-forming methods. Typically, the composition is melted and forced through a film forming die. The film of the nanocomposite may go through steps to cause the platelets to be further oriented so the major planes through the platelets are substantially parallel to the major plane through the film. A method to do this is to biaxially stretch the film. For example, the film is stretched in the axial or machine direction by tension rollers pulling the film as it is extruded from the die. The film is simultaneously stretched in the transverse direction by clamping the edges of the film and drawing them apart. Alternatively, the film is stretched in the transverse direction by using a tubular film die and blowing the film up as it passes from the tubular film die. The films may exhibit one or more of the following benefits: increased modulus; increased wet strength; increased dimensional stability; decreased moisture adsorption; decreased permeability to gases such as oxygen and liquids, such as water, alcohols and other solvents.

The following specific examples are presented to more particularly illustrate the invention and are not to be construed as limitations thereon.

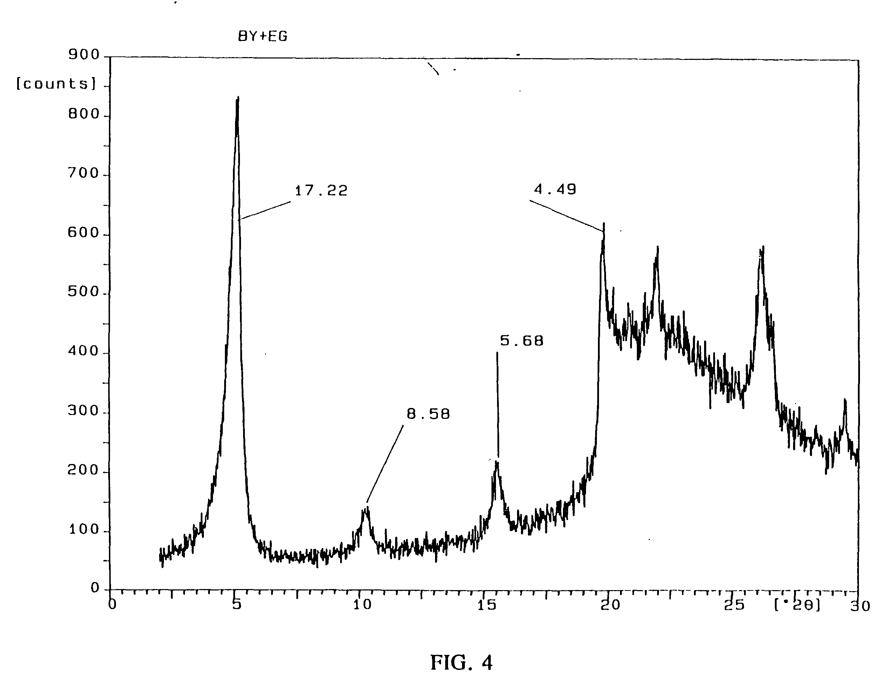

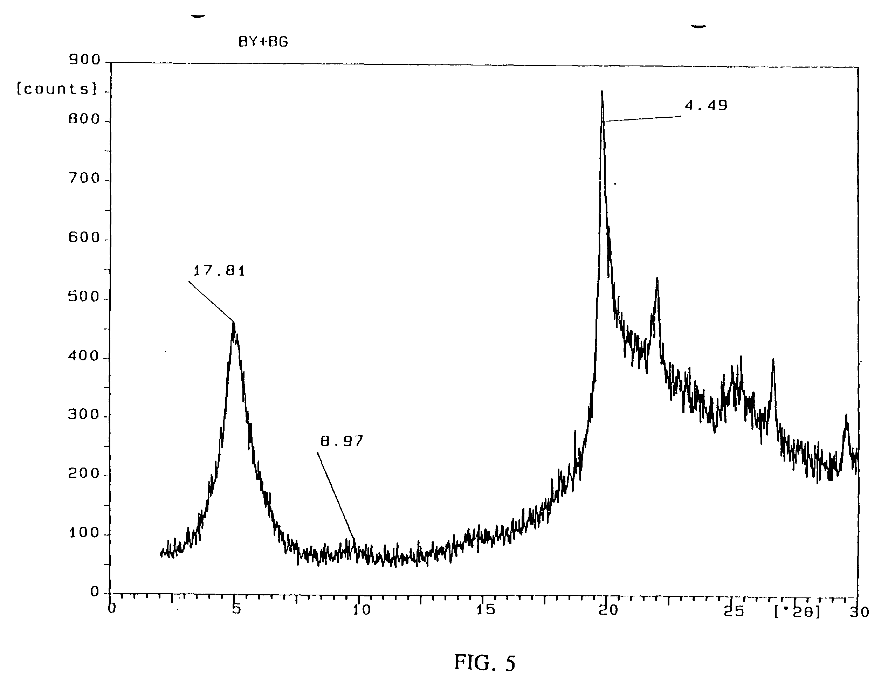

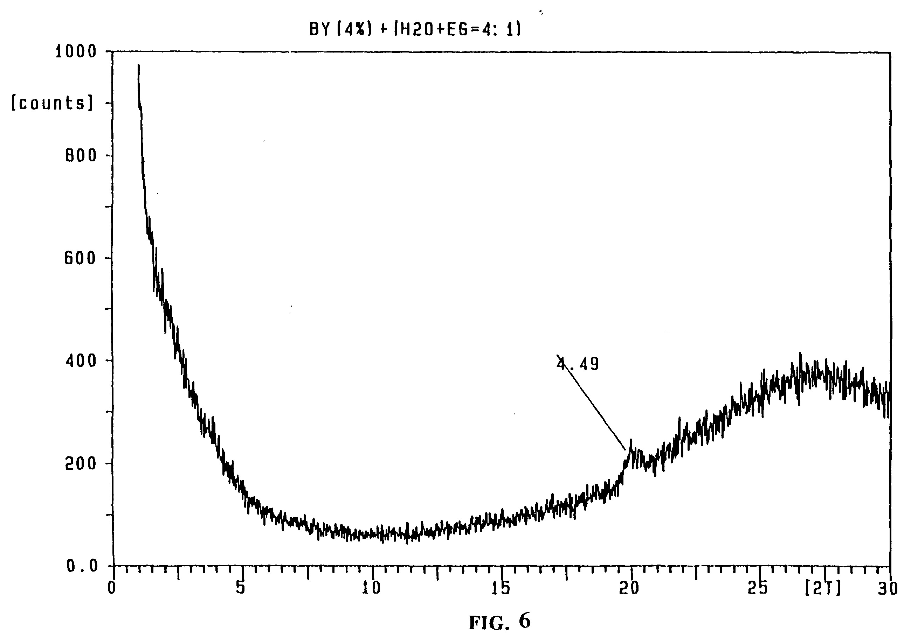

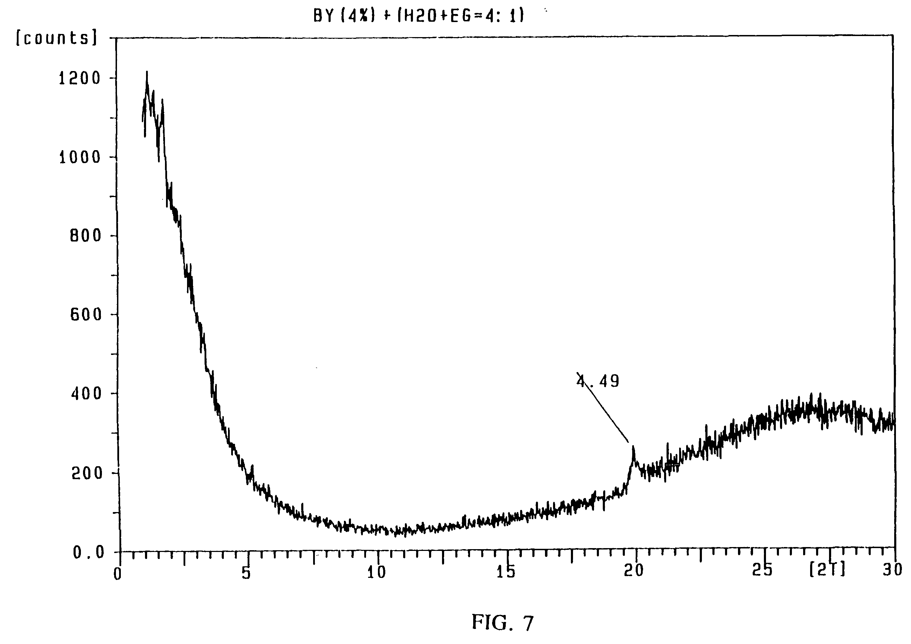

The graphs of Figures 4 and 5 are x-ray diffraction patterns of blends of ethylene glycol (EG) and butylene glycol (BY) monomer intercalants with sodium bentonite clay (containing a crystobalite impurity. The d(001) peak of non-exfoliated (layered) sodium bentonite clay appears at about 12.5 Å, as shown in the mechanical blends of powdered sodium bentonite clay (containing about 10-12% by weight water) with powdered monomer intercalants, at various monomer intercalant loadings. When the mechanical blends were then heated to the intercalant monomer melt temperature, and preferably at least about 40-50°C above the intercalant monomer melt temperature for faster reaction, as shown in Figures 6 and 7, the monomer melt was intercalated between the bentonite clay platelets, and an exothermic reaction occurred that, it is theorized, resulted from the intercalant monomer being bonded to the internal faces of the clay platelets sufficiently for exfoliation of the intercalated clay. It should be noted, also, that exfoliation did not occur unless the bentonite clay included water in an amount of at least about 5% by weight, based on the dry weight of the clay, preferably at least about 10% to about 15% water. The water can be included in the clay as received, or can be added to the clay prior to or during intercalant monomer melt or solution contact.

As shown in Figures 6 and 7, the melted blends no longer include a d(001) peak at about 12.5 Å (the layered clay was no longer present in the blend), but show a d(020) peak at about 4.50 - 4.45 Å that is representative of exfoliated, individual platelets. It should also be noted that the exfoliation occurred without shearing - the layered clay exfoliated naturally after sufficient intercalation of intercalant monomer between the platelets of the layered bentonite.

### EXAMPLE 3

### Preparation of Clay - Monomeric Carbonyl-Functional Complexes (Intercalates)

- Materials:: Clay - sodium montmorillonite; Monomeric Carbonyl-Functional Compound - butyraldehyde

To prepare Clay (sodium montmorillonite)-butyraldehyde complexes (intercalates) three different processes are used for polymer intercalation:
1. Mixture of the 2% butyraldehyde/water solution with the 2% clay/water suspension in a ratio sufficient to provide a butyraldehyde concentration of at least about 8% based on the dry weight of the clay.
2. Dry clay powder (about 8% by weight moisture) is gradually added to the 2% butyraldehyde/water solution in a ratio sufficient to provide a butyraldehyde concentration of at least about 8% based on the dry weight of the clay.
3. Dry butyraldehyde is mixed with dry clay, the mixture is hydrated with 35-38% of water, based on the dry weight of the clay, and then extruded.

Mixtures 1 and 2 are agitated at room temperature during 4 hours.

The intercalation and exfoliation methods of the present invention yield the Clay-butyraldehyde complexes (intercalates), and the results of the intercalation do not depend on the method of preparation (1, 2, or 3), but do depend on the quantity of monomeric carbonyl functional sorbed between clay platelets.

### EXAMPLE 4

### Preparation of Clay - Monomeric Carboxylic Acid-Functional Compound Complexes (Intercalates)

- Materials:: Clay - sodium montmorillonite; Monomeric Carboxylic Acid-Functional Compound: acrylic acid/sodium acrylate mixture

To prepare Clay (sodium montmorillonite)-acrylic acid/sodium acrylate complexes (intercalates) three different processes are used for carboxylic acid monomer intercalation:
1. Mixture of the 2% carboxylic acid-functional compounds/water solution with the 2% sodium montmorillonite clay/water suspension in a ratio sufficient to provide a carboxylic acid-functional compound concentration of at least about 8% based on the dry weight of the clay.
2. Dry clay powder is gradually added to the 2% carboxylic acid-functional compounds/water solution in a ratio sufficient to provide a carboxylic acid-functional compound concentration of at least about 8% based on the dry weight of the sodium montmorillonite clay.
3. Dry sodium montmorillonite clay is moisturized with carboxylic acid-functional compound/water solution to 20-80% by weight water, and then extruded.

The mixtures 1 and 2 are agitated at room temperature during 4 hours.

A mixture of 30% by weight acrylic acid (AAc) and 70% by weight sodium acrylate (NaAAc) was prepared in water, at a concentration of 45% by weight AAc and NaAAc and a pH of 6. In a 50 ml beaker, 30 grams of the AAc/NaAAc mixture was added, and while this mixture was being mixed vigorously, 1.5 grams of sodium montmorillonite¹ was added. The weight ratio of clay to (AAc + NaAAc) = 1.9. The mixture was vigorously mixed and heated for 1 hour at 85°C.
¹ POLARGEL NF from AMCOL International Corporation.

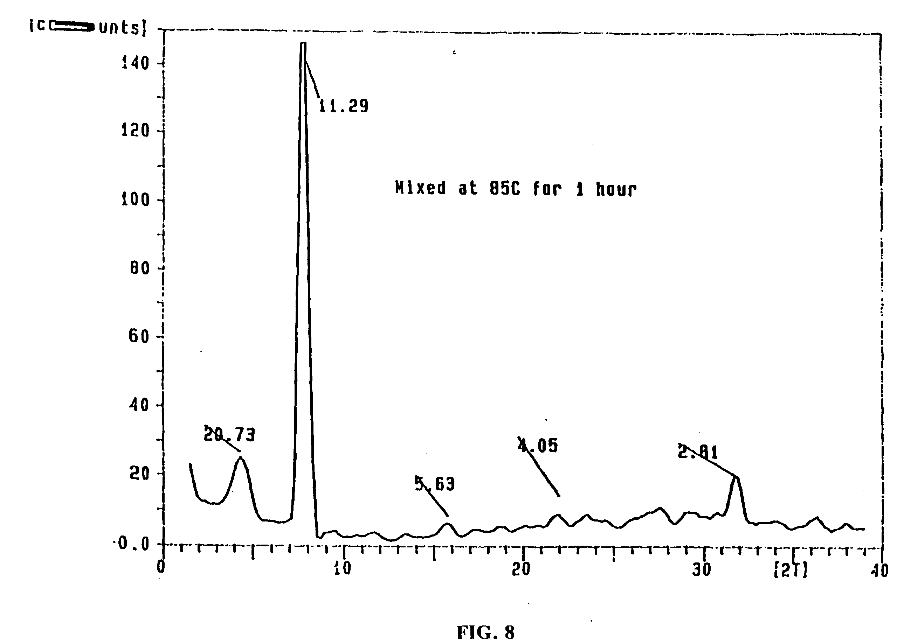

The heated mixture was allowed to cool to room temperature and subjected to x-ray diffraction. The x-ray diffraction pattern is shown in Figure 4. As shown in Figure 8, the AAc/NaAAc:clay complexed since no d(001) smectite peak appears at about 12.4 Å, and peaks appear at about 22 Å, and 32 Å representative of acrylic acid intercalated between clay platelets. The peak at 11.29 Å is representative of acrylic acid.

### EXAMPLE 5

### Preparation of Clay - Monomeric Amine Complexes (Intercalates)

- Materials:: Clay - sodium montmorillonite; Monomeric Amine - hexamethylene diamine (HMDA)

To prepare Clay (sodium montmorillonite) - HMDA complexes (intercalates) three different processes are used for monomeric amide intercalation:
1. Mixture of the 2% HMDA/water solution with the 2% clay/water suspension in a ratio sufficient to provide a HMDA concentration of at least about 8% based on the dry weight of the clay.
2. Dry clay powder (about 8% by weight moisture) is gradually added to the 2% HMDA/water solution in a ratio sufficient to provide a HMDA concentration of at least about 8% based on the dry weight of the clay.
3. Dry HMDA is mixed with dry clay, the mixture is hydrated with 35-38% of water, based on the dry weight of the clay, and then extruded.

Mixtures 1 and 2 are agitated at room temperature during 4 hours.

The intercalation and exfoliation methods of the present invention yield the Clay - HMDA complexes (intercalates), and the results of the intercalation do not depend on the method of preparation (1, 2, or 3), but do depend on the quantity of monomeric amine sorbed between clay platelets.

### EXAMPLE 6

### Preparation of Clay - Monomeric Amide Complexes (Intercalates)

- Materials:: Clay - sodium montmorillonite; Monomeric Amide:

To prepare Clay (sodium montmorillonite)-Monomeric amide complexes (intercalates) three different processes are used for amide intercalation:
1. Mixture of the 2% amide/water solution with the 2% clay/water suspension in a ratio sufficient to provide an amide concentration of at least about 8% based on the dry weight of the clay.
2. Dry clay powder is gradually added to the 2% amide/water solution in a ratio sufficient to provide a amide concentration of at least about 8% based on the dry weight of the clay.
3. Dry clay is moisturized with amide/water solution to 20-80% by weight water, and then extruded.

The mixtures 1 and 2 are agitated at room temperature during 4 hours.

### EXAMPLE 7

### Preparation of Clay - Monomeric Ester Complexes (Intercalates)

- Materials:: Clay - sodium montmorillonite; Monomeric Ester-dibutylphthalate (DBP)

To prepare Clay (sodium montmorillonite) - DBP complexes (intercalates) three different processes are used for monomer intercalation:
1. Mixture of the 2% DBP/water solution with the 2% clay/water suspension in a ratio sufficient to provide a DBP concentration of at least about 8% based on the dry weight of the clay.
2. Dry clay powder (about 8% by weight moisture) is gradually added to the 2% DBP/water solution in a ratio sufficient to provide a DBP concentration of at least about 8% based on the dry weight of the clay.
3. Dry DBP is mixed with dry clay, the mixture is hydrated with 35-38% of water, based on the dry weight of the clay, and then extruded.

Mixtures 1 and 2 are agitated at room temperature during 4 hours.

### EXAMPLE 8

### Preparation of Clay - Monomeric Ether Complexes (Intercalates)

- Materials:: Clay - sodium montmorillonite; Monomeric Ether: diethylene glycol; triethylene glycol; polyethylene glycol (number of monomer units in polymer = 2-10); ethylene glycol vinyl ether; ethylene glycol divinyl ether; propyl vinyl ether; 1,4 butanediol vinyl ether; 1,4 butanediol divinyl ether; and mixtures thereof.

To prepare Clay (sodium montmorillonite)-Monomeric ether complexes (intercalates) three different processes are used for ether intercalation:
1. Mixture of the 2% ether/water solution with the 2% clay/water suspension in a ratio sufficient to provide an ether concentration of at least about 8% based on the dry weight of the clay.
2. Dry clay powder is gradually added to the 2% ether/water solution in a ratio sufficient to provide a ether concentration of at least about 8% based on the dry weight of the clay.
3. Dry clay is moisturized with ether/water solution to 20-80% by weight water, and then extruded.

The mixtures 1 and 2 are agitated at room temperature during 4 hours.

All methods of the present invention used for intercalation yield the composite Clay - monomer complexes (intercalates), and the results of the intercalation do not depend on the method of preparation (1, 2, or 3), but do depend on the quantity of functional monomer sorbed between clay platelets.

Numerous modifications and alternative embodiments of the invention will be apparent to those skilled in the art in view of the foregoing description. Accordingly, this description is to be construed as illustrative only and is for the purpose of teaching those skilled in the art the best mode of carrying out the invention. The details of the process may be varied substantially without departing from the invention, and the exclusive use of all modifications which come within the appended claims is reserved.

## Claims

1. An intercalate, capable of being exfoliated, formed by contacting a layered material, having a moisture content of at least about 4% by weight, with an intercalant monomer having a functionality selected from the group consisting of an aromatic ring; a hydroxyl; a polyhydroxyl; a carbonyl; a carboxylic acid; a polycarboxylic acid; an aldehyde; a ketone; an amine; an amide; an ether; an ester; and mixtures thereof, said intercalate having a weight ratio of intercalant monomer to layered material of at least about 1:20, to achieve sorption and complexing of the intercalant monomer between adjacent spaced layers of the layered material to expand the spacing between a predominance of the adjacent platelets of said layered material to at least about 5 Å, when measured after sorption of intercalant monomer and drying to a maximum of 5% by weight water.

2. An intercalate as claimed in Claim 1, wherein the concentration of intercalant monomer in said intercalant monomer-containing composition is at least about 0.1% by weight, based on the weight of water and intercalant monomer in the intercalating composition.

3. An intercalate as claimed in claims 1 or 2, wherein the concentration of intercalant monomer in said intercalating composition is at least about 1% by weight.

4. An intercalate as claimed in any one of the preceding claims, wherein the concentration of intercalant monomer in said intercalating composition is at least about 2% by weight.

5. An intercalate as claimed in any one of the preceding claims, wherein the concentration of intercalant monomer in said intercalating composition is at least about 30% by weight.

6. An intercalate as claimed in any one of claims 1 to 4, wherein the concentration of intercalant monomer in said intercalating composition in the range of about 10% to about 60% by weight.

7. An intercalate as claimed in any one of claims 1 to 4, wherein the concentration of intercalant monomer in said intercalating composition in the range of about 50% to about 90% by weight.

8. An intercalate as claimed in Claim 1, wherein the concentration of intercalant monomer in the intercalating composition is at least about 16% by weight, based on the dry weight of the layered material contacted.

9. An intercalate as claimed in Claim 8, wherein the concentration of intercalant monomer in the intercalating composition is in the range of about 16% to about 70% by weight, based on the dry weight of the layered material contacted.

10. An intercalate as claimed in claim 8 or 9, wherein the concentration of intercalant monomer in the intercalating composition is in the range of about 16% to less than about 35% by weight, based on the dry weight of the layered material contacted.

11. An intercalate as claimed in claim 8 or 9, wherein the concentration of intercalant monomer in the intercalating composition is in the range of about 35% to less than about 55% by weight, based on the dry weight of the layered material contacted.

12. An intercalate as claimed in claim 8 or 9, wherein the concentration of the intercalant monomer in the intercalating composition is in the range of about 55% to less than about 70% by weight, based on the dry weight of the layered material contacted.

13. An intercalate as claimed in any one of the preceding claims, wherein the intercalant monomer is an alcohol having 6 to 24 carbon atoms.

14. An intercalate as claimed in any one of the preceding claims, wherein the intercalant monomer is a polar solvent selected from alcohols and polyhydric alcohols.

15. A method of exfoliating a phyllosilicate comprising:
contacting the phyllosilicate, having a moisture content of at least about 4% by weight, with an intercalating composition comprising at least about 2% by weight of an intercalant monomer having a functionality selected from the group consisting of an aromatic ring; a hydroxyl; a polyhydroxyl; a carbonyl; a carboxylic acid; a polycarboxylic acid; an aldehyde; a ketone; an amine; an amide; an ether; an ester; and mixtures thereof, to achieve intercalation of said monomer between said adjacent phyllosilicate platelets in an amount sufficient to space said adjacent phyllosilicate platelets a distance of at least about 5 Å; and
separating the platelets of the intercalated phyllosilicate.

16. A method as claimed in claim 15, wherein said intercalating composition includes a water carrier comprising about 5% to about 50% by weight water, based on the total weight of said intercalating composition.

17. A method as claimed in claim 15 or 16, wherein said intercalating composition comprises about 10% to about 40% by weight water.

18. A composition comprising an organic liquid carrier in an amount of about 40% to about 99.95% by weight of the composite material, and about 0.05% to about 60% by weight of an intercalated phyllosilicate material exfoliated into a predominance of individual platelets, said intercalated phyllosilicate material formed by contacting a phyllosilicate, having a water content of at least about 4% by weight, with an intercalant monomer having a functionality selected from the group consisting of an aromatic ring; a hydroxyl; a polyhydroxyl; a carbonyl; a carboxylic acid; a polycarboxylic acid; an aldehyde; a ketone; an amine; an amide; an ether; an ester; and mixtures thereof to form an intercalating composition, having a weight ratio of intercalant monomer:phyllosilicate of at least about 1:20 to achieve sorption of the intercalant monomer between adjacent spaced layers of the phyllosilicate to expand the spacing between a predominance of the adjacent phyllosilicate platelets to at least about 5 Å, when measured after sorption of the intercalant monomer and at a maximum water content of about 5% by weight, based on the dry weight of the phyllosilicate.

19. A composite material as claimed in claim 18 or 19, wherein said intercalating composition comprises the phyllosilicate, an intercalant monomer and water, and wherein the concentration of intercalant monomer in said intercalating composition is at least about 4% by weight, based on the dry weight of the phyllosilicate in the intercalating composition.

20. A composite material as claimed in claim 19, wherein the concentration of intercalant monomer in said intercalating composition is at least about 15% by weight, based on the dry weight of the phyllosilicate in the intercalating composition.

21. A composite material as claimed in claim 19 or 20, wherein the concentration of intercalant monomer in said intercalating composition is at least about 20% by weight.

22. A composite material as claimed in any one of claims 19, 20 or 21, wherein the concentration of intercalant monomer in said intercalating composition is at least about 30% by weight.

23. A composite material as claimed in any one of claims 19 to 22, wherein the concentration of intercalant monomer in said intercalating composition in the range of about 50% to about 80% by weight.

24. A composite material as claimed in any one of claims 19 to 23 wherein the concentration of intercalant monomer in said intercalating composition in the range of about 50% to about 100% by weight, and wherein the monomer does not include an onium ion or a silane coupling agent.

25. A composite material as claimed in any one of claims 18 to 20, wherein the concentration of intercalant monomer in the intercalating composition is at least about 16% by weight.

26. A composite material as claimed in claim 25, wherein the concentration of intercalant monomer in the intercalating composition is in the range of about 16% to about 70% by weight.

27. A composite material as claimed in claim 25 or 26, wherein the concentration of intercalant monomer in the intercalating composition is in the range of about 16% to less than about 35% by weight.

28. A composite material as claimed in claim 25 or 26, wherein the concentration of intercalant monomer in the intercalating composition is in the range of about 35% to less than about 55% by weight.

29. A composite material as claimed in claim 25 or 26, wherein the concentration of the intercalant monomer in the intercalating composition is in the range of about 55% to less than about 70% by weight.

30. A composite material as claimed in any one of claims 18 to 29, further including a matrix polymer selected from the group consisting of a polyamide; polyvinyl alcohol; polycarbonate; polyvinylimine; polyethylene terephthalate; polybutylene terephthalate; a polymer polymerized from a monomer selected from the group consisting of dihydroxyethyl terephthalate; dihydroxybutyl terephthalate; hydroxyethylmethyl terephthalate; hydroxybutylmethyl terephthalate; and mixtures thereof.

31. A composite material as claimed in claim 30, wherein the matrix polymer is a mixture of a polymer of hydroxyethyl terephthalate with a polymer polymerized from a monomer selected from the group consisting of dihydroxyethyl terephthalate and dihydroxybutyl terephthalate, and mixtures thereof.

32. A composite material as claimed in claim 30, wherein the matrix polymer is polyethylene terephthalate.

33. A method of manufacturing a composite material containing about 10% to about 99.95% by weight of a matrix polymer selected from the group consisting of a thermoplastic polymer, a thermosetting polymer, and mixtures thereof, and about 0.05% to about 60% by weight of exfoliated platelets of a phyllosilicate material, said platelets derived from an intercalated phyllosilicate having an intercalant monomer intercalated between and bonded to an inner surface of the phyllosilicate platelets through a bonding mechanism selected from the group consisting of ionic complexing; electrostatic complexing; chelation; hydrogen bonding; dipole/dipole; Van Der Waals forces; and any combination thereof, comprising:
contacting the phyllosilicate, having a moisture content of about 4% by weight, with water and an intercalant monomer, said intercalant monomer having a functionality selected from the group consisting of an aromatic ring; a hydroxyl functionality; a polyhydroxyl functionality; a carbonyl; a carboxylic acid; a polycarboxylic acid; an
aldehyde; a ketone; an amine; an amide; an ether; an ester; and mixtures thereof, to achieve intercalation of said intercalant monomer between said adjacent phyllosilicate platelets in an amount sufficient to space said adjacent phyllosilicate platelets a distance of at least about 5 Å;
combining the intercalate with said matrix polymer;
exfoliating the spaced platelets of said intercalate into predominantly individual platelets; and
dispersing said exfoliated platelets throughout said matrix polymer.

34. A method as claimed in claim 33, wherein said phyllosilicate is contacted with said water in an intercalating composition including said water, said intercalant monomer, said phyllosilicate, and a liquid polar organic hydrocarbon carrier, and wherein said intercalating composition comprises about 5% to about 50% by weight water, based on the dry weight of said phyllosilicate.

35. A method as claimed in claim 33, wherein said intercalating composition comprises about 10% to about 90% by weight of said polar organic liquid hydrocarbon, based on the dry weight of the phyllosilicate.

36. A method of manufacturing a composition comprising an organic liquid and a phyllosilicate intercalate comprising:
contacting a phyllosilicate with an intercalant monomer and water, wherein the weight ratio of the intercalant monomer to phyllosilicate is at least about 1 to 20, and the concentration of said intercalant monomer is at least about 5% up to about 90% intercalant monomer, based on the dry weight of the phyllosilicate, to form an intercalate, capable of being exfoliated, having said intercalant monomer intercalated between said adjacent phyllosilicate platelets in an amount sufficient to space said adjacent phyllosilicate platelets to a distance of at least about 5 Å; and
combining the intercalate with said organic liquid.

37. A method of manufacturing a composition comprising an organic liquid and a phyllosilicate intercalate, comprising combining an intercalate as claimed in any one of claims 1 - 14 with an organic liquid.

## Patentansprüche

1. Interkalat, das in der Lage ist, abgespalten ("exfoliated") zu werden, das durch Kontaktieren eines geschichteten Materials, das einen Feuchtigkeitsgehalt von mindestens ca. 4 Gew.-% aufweist, mit einem Interkalationsmonomer gebildet wird, das eine Funktionalität aufweist, ausgewählt aus der Gruppe, die aus einem Benzenring; einem Hydroxyl; einem Polyhydroxyl; einem Carbonyl; einer Carbonsäure; einer Polycarbonsäure; einem Aldehyd; einem Keton; einem Amin; einem Amid; einem Ether; einem Ester und Gemischen davon besteht, wobei genanntes Interkalat ein Gewichtsverhältnis von Interkalationsmonomer zu geschichtetem Material von mindestens ca. 1:20 aufweist, um Sorption und Komplexbildung des Interkalationsmonomers zwischen nebeneinander liegenden, mit Zwischenraum angeordneten Schichten des geschichteten Materials zu erreichen, um den Zwischenraum zwischen einer überwiegenden Zahl nebeneinander liegender Plättchen von genanntem geschichtetem Material auf mindestens ca. 5 Å zu expandieren, wenn nach der Sorption des Interkalationsmonomers und Trocknen auf maximal 5 Gew.-% Wasser gemessen.

2. Interkalat nach Anspruch 1, worin die Konzentration von Interkalationsmonomer in genannter, das Interkalationsmonomer enthaltender Zusammensetzung mindestens ca. 0,1 Gew.-% bezogen auf das Gewicht von Wasser und Interkalationsmonomer in der interkalierenden Zusammensetzung beträgt.

3. Interkalat nach Anspruch 1 oder 2, worin die Konzentration von Interkalationsmonomer in genannter interkalierender Zusammensetzung mindestens ca. 1 Gew.-% beträgt.

4. Interkalat nach einem der vorangehenden Ansprüche, worin die Konzentration von Interkalationsmonomer in genannter interkalierender Zusammensetzung mindestens ca. 2 Gew.-% beträgt.

5. Interkalat nach einem der vorangehenden Ansprüche, worin die Konzentration von Interkalationsmonomer in genannter interkalierender Zusammensetzung mindestens ca. 30 Gew.-% beträgt.

6. Interkalat nach einem der Ansprüche 1 bis 4, worin die Konzentration von Interkalationsmonomer in genannter interkalierender Zusammensetzung in dem Bereich von ca. 10 Gew.-% bis ca. 60 Gew.-% liegt.

7. Interkalat nach einem der Ansprüche 1 bis 4, worin die Konzentration von Interkalationsmonomer in genannter interkalierender Zusammensetzung in dem Bereich von ca. 50 Gew.-% bis ca. 90 Gew.-% liegt.

8. Interkalat nach Anspruch 1, worin die Konzentration von Interkalationsmonomer in der interkalierenden Zusammensetzung mindestens ca. 16 Gew.-% bezogen auf das Trockengewicht des kontaktierten geschichteten Materials beträgt.

9. Interkalat nach Anspruch 8, worin die Konzentration von Interkalationsmonomer in der interkalierenden Zusammensetzung in dem Bereich von ca. 16 Gew.-% bis ca. 70 Gew.-% bezogen auf das Trockengewicht des kontaktierten geschichteten Materials liegt.

10. Interkalat nach Anspruch 8 oder 9, worin die Konzentration von Interkalationsmonomer in der interkalierenden Zusammensetzung in dem Bereich von ca. 16 Gew.-% bis weniger als ca. 35 Gew.-% bezogen auf das Trockengewicht des kontaktierten geschichteten Materials liegt.

11. Interkalat nach Anspruch 8 oder 9, worin die Konzentration von Interkalationsmonomer in der interkalierenden Zusammensetzung in dem Bereich von ca. 35 Gew.-% bis weniger als ca. 55 Gew.-% bezogen auf das Trockengewicht des kontaktierten geschichteten Materials liegt.

12. Interkalat nach Anspruch 8 oder 9, worin die Konzentration des Interkalationsmonomers in der interkalierenden Zusammensetzung in dem Bereich von ca. 55 Gew.-% bis weniger als ca. 70 Gew.-% bezogen auf das Trockengewicht des kontaktierten geschichteten Materials liegt.

13. Interkalat nach einem der vorangehenden Ansprüche, worin das Interkalationsmonomer ein Alkohol mit 6 bis 24 Kohlenstoffatomen ist.

14. Interkalat nach einem der vorangehenden Ansprüche, worin das Interkalationsmonomer ein polares Lösungsmittel ist, das aus Alkoholen und mehrwertigen Alkoholen ausgewählt wird.

15. Verfahren zur Abspaltung (Exfoliation) eines Phyllosilikats, das Folgendes umfasst:
Kontaktieren des Phyllosilikats, das einen Feuchtigkeitsgehalt von mindestens ca. 4 Gew.-% aufweist, mit einer interkalierenden Zusammensetzung, die mindestens ca. 2 Gew.-% eines Interkalationsmonomers umfasst, das eine Funktionalität aufweist, ausgewählt aus der Gruppe, die aus einem Benzenring; einem Hydroxyl; einem Polyhydroxyl; einem Carbonyl; einer Carbonsäure; einer Polycarbonsäure; einem Aldehyd; einem Keton; einem Amin; einem Amid; einem Ether; einem Ester und Gemischen davon besteht, um Interkalation von genanntem Monomer zwischen genannten nebeneinander liegenden Phyllosilikat-Plättchen in einer Menge zu erreichen, die ausreicht, um genannte nebeneinander liegende Phyllosilikat-Plättchen mit Zwischenraum einer Distanz von mindestens ca. 5 Å anzuordnen und
Trennen der Plättchen des interkalierten Phyllosilikats.

16. Verfahren nach Anspruch 15, worin genannte interkalierende Zusammensetzung einen Wasserträger einschließt, der ca. 5 Gew.-% bis ca. 50 Gew.-% Wasser bezogen auf das Gesamtgewicht von genannter interkalierender Zusammensetzung umfasst.

17. Verfahren nach Anspruch 15 oder 16, worin genannte interkalierende Zusammensetzung ca. 10 Gew.-% bis ca. 40 Gew.-% Wasser umfasst.

18. Zusammensetzung, die einen organischen Flüssigkeitsträger in einer Menge von ca. 40 Gew.-% bis ca. 99,95 Gew.-% des Verbundmaterials und ca. 0,05 Gew.-% bis ca. 60 Gew.-% eines interkalierten Phyllosilikat-Materials umfasst, das in eine überwiegende Zahl einzelner Plättchen abgespalten ("exfoliated") ist, wobei das interkalierte Phyllosilikat-Material, das durch Kontaktieren eines Phyllosilikats, das einen Wassergehalt von mindestens ca. 4 Gew.-% aufweist, mit einem Interkalationsmonomer gebildet wird, das eine Funktionalität aufweist, ausgewählt aus der Gruppe, die aus einem Benzenring; einem Hydroxyl; einem Polyhydroxyl; einem Carbonyl; einer Carbonsäure; einer Polycarbonsäure; einem Aldehyd; einem Keton; einem Amin; einem Amid; einem Ether; einem Ester und Gemischen davon besteht, um eine interkalierende Zusammensetzung zu bilden, die ein Gewichtsverhältnis von Interkalationsmonomer:Phyllosilikat von mindestens ca. 1:20 aufweist, um Sorption des Interkalationsmonomers zwischen nebeneinander liegenden, mit Zwischenraum angeordneten Schichten des Phyllosilikats zu erlangen, um den Zwischenraum zwischen einer überwiegenden Zahl der nebeneinander liegenden Phyllosilikat-Plättchen auf mindestens 5 Å zu expandieren, wenn nach Sorption des Interkalationsmonomers und bei einem maximalen Wassergehalt von ca. 5 Gew.-% Wasser bezogen auf das Trockengewicht des Phyllosilikats gemessen.

19. Verbundmaterial nach Anspruch 18 oder 19, worin genannte interkalierende Zusammensetzung das Phyllosilikat, ein Interkalationsmonomer und Wasser umfasst und worin die Konzentration von Interkalationsmonomer in genannter interkalierender Zusammensetzung mindestens ca. 4 Gew.-% bezogen auf das Trockengewicht des Phyllosilikats in der interkalierenden Zusammensetzung beträgt.

20. Verbundmaterial nach Anspruch 19, worin die Konzentration von Interkalationsmonomer in genannter interkalierender Zusammensetzung mindestens ca. 15 Gew.-% bezogen auf das Trockengewicht des Phyllosilikats in der interkalierenden Zusammensetzung beträgt.

21. Verbundmaterial nach Anspruch 19 oder 20, worin die Konzentration von Interkalationsmonomer in genannter interkalierender Zusammensetzung mindestens ca. 20 Gew.-% beträgt.

22. Verbundmaterial nach einem der Ansprüche 19, 20 oder 21, worin die Konzentration von Interkalationsmonomer in genannter interkalierender Zusammensetzung mindestens ca. 30 Gew.-% beträgt.

23. Verbundmaterial nach einem der Ansprüche 19 bis 22, worin die Konzentration von Interkalationsmonomer in genannter interkalierender Zusammensetzung in dem Bereich von ca. 50 Gew.-% bis ca. 80 Gew.-% liegt.

24. Verbundmaterial nach einem der Ansprüche 19 bis 23, worin die Konzentration von Interkalationsmonomer in genannter interkalierender Zusammensetzung in dem Bereich von ca. 50 Gew.-% bis ca. 100 Gew.-% liegt und worin das Monomer kein Oniumion oder einen Silan-Haftvermittler einschließt.

25. Verbundmaterial nach einem der Ansprüche 18 bis 20, worin die Konzentration von Interkalationsmonomer in der interkalierenden Zusammensetzung mindestens ca. 16 Gew.-% beträgt.

26. Verbundmaterial nach Anspruch 25, worin die Konzentration von Interkalationsmonomer in der interkalierenden Zusammensetzung in dem Bereich von ca. 16 Gew.-% bis ca. 70 Gew.-% liegt.

27. Verbundmaterial nach Anspruch 25 oder 26, worin die Konzentration von Interkalationsmonomer in der interkalierenden Zusammensetzung in dem Bereich von ca. 16 Gew.-% bis weniger als ca. 35 Gew.-% liegt.

28. Verbundmaterial nach Anspruch 25 oder 26, worin die Konzentration von Interkalationsmonomer in der interkalierenden Zusammensetzung in dem Bereich von ca. 35 Gew.-% bis weniger als ca. 55 Gew.-% liegt.

29. Verbundmaterial nach Anspruch 25 oder 26, worin die Konzentration des Interkalationsmonomers in der interkalierenden Zusammensetzung in dem Bereich von ca. 55 Gew.-% bis weniger als ca. 70 Gew.-% liegt.

30. Verbundmaterial nach einem der Ansprüche 18 bis 29, das weiter ein Matrixpolymer einschließt, ausgewählt aus der Gruppe, die aus einem Polyamid; Polyvinylalkohol; Polycarbonat; Polyvinylimin; Polyethylenterephthalat; Polybutylenterephthalat; einem aus einem Monomer polymerisierten Polymer besteht, ausgewählt aus der Gruppe, die aus Dihydroxyethylterephthalat; Dihydroxybutylterephthalat; Hydroxyethylmethylterephthalat; Hydroxybutylmethylterephthalat und Gemischen davon besteht.

31. Verbundmaterial nach Anspruch 30, worin das Matrixpolymer ein Gemisch aus einem Hydroxyethylterephthalat-Polymer mit einem aus einem Monomer polymerisierten Polymer umfasst, ausgewählt aus der Gruppe, die aus Dihydroxyethylterephthalat und Dihydroxybutylterephthalat und Gemischen davon besteht.

32. Verbundmaterial nach Anspruch 30, worin das Matrixpolymer Polyethylenterephthalat ist.

33. Verfahren zum Herstellen eines Verbundmaterials, das Folgendes enthält: ca. 10 Gew.-% bis ca. 99,95 Gew.-% eines Matrixpolymers, ausgewählt aus der Gruppe, die aus einem thermoplastischen Polymer, einem hitzehärtbaren Polymer und Gemischen davon besteht, und ca. 0,05 Gew.-% bis ca. 60 Gew.-% abgespaltene ("exfoliated") Plättchen von einem Phyllosilikat-Material, wobei genannte Plättchen, die sich von einem interkalierten Phyllosilikat herleiten, ein Interkalationsmonomer dazwischen interkaliert und an eine Innenfläche der Phyllosilikat-Plättchen mittels eines Bindungsmechanismus gebunden haben, ausgewählt aus der Gruppe, die aus ionischer Komplexbildung; elektrostatischer Komplexbildung; Chelatbildung; Wasserstoffbindung; Dipol/Dipol; Van-der-Waal-Kräften und jedweder Kombination davon besteht, das Folgendes umfasst:
Kontaktieren des Phyllosilikats, das einen Feuchtigkeitsgehalt von ca. 4 Gew.-% aufweist, mit Wasser und einem Interkalationsmonomer, wobei genanntes Interkalationsmonomer eine Funktionalität aufweist, ausgewählt aus der Gruppe, die aus einem Benzenring; einer Hydroxylfunktionalität; einer Polyhydroxylfunktionalität; einem Carbonyl; einer Carbonsäure; einer Polycarbonsäure; einem Aldehyd; einem Keton; einem Amin; einem Amid; einem Ether; einem Ester und Gemischen davon besteht, um Interkalation von genanntem Interkalationsmonomer zwischen genannten nebeneinander liegenden Phyllosilikat-Plättchen in einer Menge zu erlangen, die ausreicht, um genannte nebeneinander liegende Phyllosilikat-Plättchen mit Zwischenraum einer Distanz von mindestens ca. 5 Å anzuordnen;
Kombinieren des Interkalats mit genanntem Matrixpolymer;
Abspalten (Exfoliation) der mit Zwischenraum angeordneten Plättchen von genanntem Interkalat in überwiegend einzelne Plättchen und
Dispergieren genannter abgespaltener ("exfoliated") Plättchen durch das genannte Matrixpolymer hindurch.

34. Verfahren nach Anspruch 33, worin genanntes Phyllosilikat mit genanntem Wasser in einer interkalierenden Zusammensetzung, einschließlich genannten Wassers, genannten Interkalationsmonomers, genannten Phyllosilikats und eines flüssigen polaren organischen Kohlenwasserstoffträgers kontaktiert wird und worin genannte interkalierende Zusammensetzung ca. 5 Gew.-% bis ca. 50 Gew.-% Wasser bezogen auf das Trockengewicht von genanntem Phyllosilikat umfasst.

35. Verfahren nach Anspruch 33, worin genannte interkalierende Zusammensetzung ca. 10 Gew.-% bis ca. 90 Gew.-% des genannten polaren organischen flüssigen Kohlenwasserstoffes bezogen auf das Trockengewicht des Phyllosilikats umfasst.

36. Verfahren zum Herstellen einer Zusammensetzung, die eine organische Flüssigkeit und ein Phyllosilikat-Interkalat umfasst, das Folgendes umfasst:
Kontaktieren eines Phyllosilikats mit einem Interkalationsmonomer und Wasser, worin das Gewichtsverhältnis des Interkalationsmonomers zu Phyllosilikat mindestens ca. 1 zu 20 beträgt und die Konzentration von genanntem Interkalationsmonomer mindestens ca. 5 % bis zu ca. 90 % Interkalationsmonomer bezogen auf das Trockengewicht des Phyllosilikats beträgt, um ein Interkalat zu bilden, das dazu in der Lage ist, abgespalten ("exfoliated") zu werden, das genanntes Interkalationsmonomer zwischen genannten nebeneinander liegenden Phyllosilikat-Plättchen in einer Menge interkaliert aufweist, die ausreicht, um genannte nebeneinander liegende Phyllosilikat-Plättchen mit Zwischenraum auf eine Distanz von mindestens ca. 5 Å anzuordnen und
Kombinieren des Interkalats mit genannter organischer Flüssigkeit.

37. Verfahren zum Herstellen einer Zusammensetzung, die eine organische Flüssigkeit und ein Phyllosilikat-Interkalat umfasst, das die Kombination eines Interkalates nach einem der Ansprüche 1 - 14 mit einer organischen Flüssigkeit umfasst.

## Revendications

1. Intercalaire, capable d'être exfolié, formé par la mise en contact d'un matériau en couches, ayant une humidité d'au moins environ 4% en poids, avec un monomère d'intercalation ayant une fonctionnalité choisie parmi le groupe constitué par un cycle aromatique ; un hydroxyle ; un polyhydroxyle ; un carbonyle ; un acide carboxylique ; un acide polycarboxylique ; un aldéhyde ; une cétone ; une amine ; un amide ; un éther ; un ester ; et des mélanges de ceux-ci, ledit intercalaire ayant un rapport pondéral du monomère d'intercalation au matériau en couches d'au moins environ 1:20, pour réaliser la sorption et la complexation du monomère d'intercalation entre des couches espacées adjacentes du matériau en couches pour agrandir l'espacement entre une prédominance des feuillets adjacents dudit matériau en couches jusqu'à au moins environ 5 Å, lorsque mesuré après la sorption du monomère d'intercalation et un séchage jusqu'à un maximum de 5% en poids d'eau.

2. Intercalaire selon la revendication 1, dans lequel la concentration en monomère d'intercalation dans ladite composition contenant le monomère d'intercalation est d'au moins environ 0,1% en poids, sur la base du poids d'eau et de monomère d'intercalation dans la composition d'intercalation.

3. Intercalaire selon la revendication 1 ou 2, dans lequel la concentration en monomère d'intercalation dans ladite composition d'intercalation est d'au moins environ 1% en poids.

4. Intercalaire selon l'une quelconque des revendications précédentes, dans lequel la concentration en monomère d'intercalation dans ladite composition d'intercalation est d'au moins environ 2% en poids.

5. Intercalaire selon l'une quelconque des revendications précédentes, dans lequel la concentration en monomère d'intercalation dans ladite composition d'intercalation est d'au moins environ 30% en poids.

6. Intercalaire selon l'une quelconque des revendications 1 à 4, dans lequel la concentration en monomère d'intercalation dans ladite composition d'intercalation est dans la plage d'environ 10% à environ 60% en poids.

7. Intercalaire selon l'une quelconque des revendications 1 à 4, dans lequel la concentration en monomère d'intercalation dans ladite composition d'intercalation est dans la plage d'environ 50% à environ 90% en poids.

8. Intercalaire selon la revendication 1, dans lequel la concentration en monomère d'intercalation dans la composition d'intercalation est d'au moins environ 16% en poids, sur la base du poids sec du matériau en couches mis en contact.

9. Intercalaire selon la revendication 8, dans lequel la concentration en monomère d'intercalation dans la composition d'intercalation est dans la plage d'environ 16% à environ 70% en poids, sur la base du poids sec du matériau en couches mis en contact.

10. Intercalaire selon la revendication 8 ou 9, dans lequel la concentration en monomère d'intercalation dans la composition d'intercalation est dans la plage d'environ 16% à moins d'environ 35% en poids, sur la base du poids sec du matériau en couches mis en contact.

11. Intercalaire selon la revendication 8 ou 9, dans lequel la concentration en monomère d'intercalation dans la composition d'intercalation est dans la plage d'environ 35% à moins d'environ 55% en poids, sur la base du poids sec du matériau en couches mis en contact.

12. Intercalaire selon la revendication 8 ou 9, dans lequel la concentration en monomère d'intercalation dans la composition d'intercalation est dans la plage d'environ 55% à moins d'environ 70% en poids, sur la base du poids sec du matériau en couches mis en contact.

13. Intercalaire selon l'une quelconque des revendications précédentes, dans lequel le monomère d'intercalation est un alcool ayant de 6 à 24 atomes de carbone.

14. Intercalaire selon l'une quelconque des revendications précédentes, dans lequel le monomère d'intercalation est un solvant polaire choisi parmi les alcools et les alcools polyhydriques.

15. Méthode d'exfoliation d'un phyllosilicate, comprenant :
la mise en contact du phyllosilicate, ayant une humidité d'au moins environ 4% en poids, avec une composition d'intercalation comprenant au moins environ 2% en poids d'un monomère d'intercalation ayant une fonctionnalité choisie parmi le groupe constitué par un cycle aromatique ; un hydroxyle ; un polyhydroxyle ; un carbonyle ; un acide carboxylique ; un acide polycarboxylique ; un aldéhyde ; une cétone ; une amine ; un amide ; un éther ; un ester ; et des mélanges de ceux-ci, pour réaliser l'intercalation dudit monomère entre lesdits feuillets de phyllosilicate adjacents en une quantité suffisante pour espacer lesdits feuillets de phyllosilicate adjacents jusqu'à une distance d'au moins environ 5 Å; et
la séparation des feuillets du phyllosilicate intercalé.

16. Méthode selon la revendication 15, dans laquelle ladite composition d'intercalation comporte un véhicule d'eau comprenant d'environ 5% à environ 50% en poids d'eau, sur la base du poids total de ladite composition d'intercalation.

17. Méthode selon la revendication 15 ou 16, dans laquelle ladite composition d'intercalation comprend d'environ 10% à environ 40% en poids d'eau.

18. Composition comprenant un véhicule de liquide organique en une quantité d'environ 40% à environ 99,95% en poids du matériau composite, et d'environ 0,05% à environ 60% en poids d'un matériau de phyllosilicate intercalé exfolié en une prédominance de feuillets individuels, ledit matériau de phyllosilicate intercalé étant formé par la mise en contact d'un phyllosilicate, ayant une teneur en eau d'au moins environ 4% en poids, avec un monomère d'intercalation ayant une fonctionnalité choisie parmi le groupe constitué par un cycle aromatique ; un hydroxyle ; un polyhydroxyle ; un carbonyle ; un acide carboxylique ; un acide polycarboxylique ; un aldéhyde ; une cétone ; une amine ; un amide ; un éther ; un ester ; et des mélanges de ceux-ci, pour former une composition d'intercalation, ayant un rapport pondéral du monomère d'intercalation au phyllosilicate d'au moins environ 1:20 pour réaliser la sorption du monomère d'intercalation entre des couches espacées adjacentes du phyllosilicate pour agrandir l'espace entre une prédominance des feuillets de phyllosilicate adjacents jusqu'à au moins environ 5 Å, lorsque mesuré après la sorption du monomère d'intercalation et à une teneur en eau maximum d'environ 5% en poids, sur la base du poids sec du phyllosilicate.

19. Matériau composite selon la revendication 18 ou 19, dans lequel ladite composition d'intercalation comprend le phyllosilicate, un monomère d'intercalation et de l'eau, et dans laquelle la concentration en monomère d'intercalation dans ladite composition d'intercalation est d'au moins environ 4% en poids, sur la base du poids sec du phyllosilicate dans la composition d'intercalation.

20. Matériau composite selon la revendication 19, dans lequel la concentration en monomère d'intercalation dans ladite composition d'intercalation est d'au moins environ 15% en poids, sur la base du poids sec du phyllosilicate dans la composition d'intercalation.

21. Matériau composite selon la revendication 19 ou 20, dans lequel la concentration en monomère d'intercalation dans ladite composition d'intercalation est d'au moins environ 20% en poids.

22. Matériau composite selon l'une quelconque des revendications 19, 20 ou 21, dans lequel la concentration en monomère d'intercalation dans ladite composition d'intercalation est d'au moins environ 30% en poids.

23. Matériau composite selon l'une quelconque des revendications 19 à 22, dans lequel la concentration en monomère d'intercalation dans ladite composition d'intercalation est dans la plage d'environ 50% à environ 80% en poids.

24. Matériau composite selon l'une quelconque des revendications 19 à 23, dans lequel la concentration en monomère d'intercalation dans ladite composition d'intercalation est dans la plage d'environ 50% à environ 100% en poids, et dans lequel le monomère ne comporte pas d'ion d'onium ou d'agent de couplage de silane.

25. Matériau composite selon l'une quelconque des revendications 18 à 20, dans lequel la concentration en monomère d'intercalation dans la composition d'intercalation est d'au moins environ 16% en poids.

26. Matériau composite selon la revendication 25, dans lequel la concentration en monomère d'intercalation dans la composition d'intercalation est dans la plage d'environ 16% à environ 70% en poids.

27. Matériau composite selon la revendication 25 ou 26, dans lequel la concentration en monomère d'intercalation dans la composition d'intercalation est dans la plage d'environ 16% à moins d'environ 35% en poids.

28. Matériau composite selon la revendication 25 ou 26, dans lequel la concentration en monomère d'intercalation dans la composition d'intercalation est dans la plage d'environ 35% à moins d'environ 55% en poids.

29. Matériau composite selon la revendication 25 ou 26, dans lequel la concentration en monomère d'intercalation dans la composition d'intercalation est dans la plage d'environ 55% à moins d'environ 70% en poids.

30. Matériau composite selon l'une quelconque des revendications 18 à 29, comportant en outre un polymère matriciel choisi parmi le groupe constitué par un polyamide ; un alcool polyvinylique; un polycarbonate ; une polyvinylimine; un polyéthylène téréphtalate ; un polybutylène téréphtalate ; un polymère polymérisé à partir d'un monomère choisi parmi le groupe constitué par le téréphtalate de dihydroxyéthyle ; le téréphtalate de dihydroxybutyle ; le téréphtalate d'hydroxyéthylméthyle ; le téréphtalate d'hydroxybutylméthyle ; et des mélanges de ceux-ci.

31. Matériau composite selon la revendication 30, dans lequel le polymère matriciel est un mélange d'un polymère de téréphtalate d'hydroxyéthyle avec un polymère polymérisé à partir d'un monomère choisi parmi le groupe constitué par le téréphtalate de dihydroxyéthyle et le téréphtalate de dihydroxybutyle, et des mélanges de ceux-ci.

32. Matériau composite selon la revendication 30, dans lequel le polymère matriciel est le polyéthylène téréphtalate.

33. Méthode de fabrication d'un matériau composite contenant d'environ 10% à environ 99,95% en poids d'un polymère matriciel choisi parmi le groupe constitué par un polymère thermoplastique, un polymère thermodurcissable, et des mélanges de ceux-ci, et d'environ 0,05% à environ 60% en poids de feuillets exfoliés d'un matériau de phyllosilicate, lesdits feuillets étant dérivés d'un phyllosilicate intercalé ayant un monomère d'intercalation intercalé entre, et lié à, une surface interne des feuillets de phyllosilicate par l'intermédiaire d'un mécanisme de liaison choisi parmi le groupe constitué par la complexation ionique ; la complexation électrostatique ; la chélation ; les liaisons hydrogène ; dipôle/dipôle ; les forces de van der Waals ; et une association quelconque de ceux-ci, comprenant :
la mise en contact du phyllosilicate, ayant une humidité d'environ 4% en poids, avec de l'eau et un monomère d'intercalation, ledit monomère d'intercalation ayant une fonctionnalité choisie parmi le groupe constitué par un cycle aromatique ; une fonction hydroxyle ; une fonction polyhydroxyle; un carbonyle; un acide carboxylique ; un acide polycarboxylique ; un aldéhyde ; une cétone ; une amine ; un amide ; un éther ; un ester ; et des mélanges de ceux-ci, pour réaliser l'intercalation dudit monomère d'intercalation entre lesdits feuillets de phyllosilicate adjacents en une quantité suffisante pour espacer lesdits feuillets de phyllosilicate adjacents jusqu'à une distance d'au moins environ 5 Å ;
l'association de l'intercalaire avec ledit polymère matriciel ;
l'exfoliation des feuillets espacés dudit intercalaire en des feuillets en prédominance individuels ; et
la dispersion desdits feuillets exfoliés dans le polymère matriciel en entier.

34. Méthode selon la revendication 33, dans laquelle ledit phyllosilicate est mis en contact avec ladite eau dans une composition d'intercalation comportant ladite eau, ledit monomère d'intercalation, ledit phyllosilicate, et un véhicule d'hydrocarbure organique polaire et liquide, et dans laquelle ladite composition d'intercalation comprend d'environ 5% à environ 50% en poids d'eau, sur la base du poids sec dudit phyllosilicate.

35. Méthode selon la revendication 33, dans laquelle ladite composition d'intercalation comprend d'environ 10% à environ 90% en poids dudit hydrocarbure liquide organique polaire, sur la base du poids sec du phyllosilicate.

36. Méthode de fabrication d'une composition comprenant un liquide organique et un intercalaire de phyllosilicate, comprenant :
la mise en contact d'un phyllosilicate avec un monomère d'intercalation et de l'eau, dans laquelle le rapport pondéral du monomère d'intercalation au phyllosilicate est d'au moins environ 1 à 20, et la concentration en dit monomère d'intercalation est d'au moins environ 5% jusqu'à environ 90% de monomère d'intercalation, sur la base du poids sec du phyllosilicate, pour former un intercalaire, capable d'être exfolié, ayant ledit monomère d'intercalation intercalé entre lesdits feuillets de phyllosilicate adjacents en une quantité suffisante pour espacer lesdits feuillets de phyllosilicate adjacents jusqu'à une distance d'au moins environ 5 Å; et
l'association de l'intercalaire avec ledit liquide organique.

37. Méthode de fabrication d'une composition comprenant un liquide organique et un intercalaire de phyllosilicate, comprenant l'association d'un intercalaire selon l'une quelconque des revendications 1 à 14 avec un liquide organique.
